(19) Europäisches Patentamt
European Patent Office
Office européen des brevets

(11) **EP 4 646 932 A2**

(12) **EUROPEAN PATENT APPLICATION**

(43) Date of publication:
**12.11.2025 Bulletin 2025/46**

(21) Application number: **25204599.2**

(22) Date of filing: **29.04.2022**

(51) International Patent Classification (IPC):
*A01P 1/00* (2006.01)

(52) Cooperative Patent Classification (CPC):
(C-Sets available)
**A01P 1/00; A01N 49/00; A01N 65/18; A01N 65/22; A01P 3/00; A01P 7/04;** Y02A 50/30 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.04.2021 US 202163182089 P**

(62) Document number(s) of the earlier application(s) in accordance with Art. 76 EPC:
**22796800.5 / 4 329 487**

(71) Applicant: **Arkion Life Sciences, LLC New Castle, DE 19720 (US)**

(72) Inventors:
• **WEAVER, Harvey L.**
  **Garnet Valley, 19060 (US)**
• **TEEVAN, Neil B.**
  **Memphis, 38117 (US)**
• **BALLINGER, Kenneth E.**
  **East Wakefield, 03830 (US)**
• **JONES, Shawn**
  **Bear, 19701 (US)**

(74) Representative: **Haseltine Lake Kempner LLP One Portwall Square Portwall Lane Bristol BS1 6BH (GB)**

Remarks:
This application was filed on 25-09-2025 as a divisional application to the application mentioned under INID code 62.

(54) **INSECT, BACTERIAL, AND/OR FUNGAL CONTROL COMPOSITION**

(57) The present disclosure relates to an insect, bacteria, and/or fungi control composition that includes a carrier oil and two or more essential oils for effectively controlling and/or killing insects, bacteria, and/or fungi. Some insect, bacteria, and/or fungi control compositions comprise castor oil; cinnamon oil; and clove oil. Compositions according to the present disclosure kill insects at multiple stages in their life cycle including adult insects, larvae, and disrupt the egg cycle. The insect, bacteria, and/or fungi control compositions can effectively control insect, bacteria, and/or fungi and retain control and/or insecticidal, bactericidal, and/or fungicidal potency over a longer period of time than other natural insect, bacteria, and/or fungi control agents.

(52) Cooperative Patent Classification (CPC): (Cont.)

C-Sets
**A01N 49/00, A01N 25/04, A01N 65/06,
A01N 65/18;
A01N 65/18, A01N 25/04;
A01N 65/22, A01N 25/04, A01N 49/00,
A01N 65/06, A01N 65/18**

## Description

### FIELD

The field of the present disclosure relates to insect, bacteria, and/or fungi control compositions. More specifically, the field relates to insect, bacteria, and/or fungi control compositions comprising essential oils, or more specifically, terpenoids.

### BACKGROUND

Citronella-based insect repellents are widely used. Citronella is a major component of lemongrass oil, and lemongrass oil has been incorporated into topical repellents that exhibit repellency similar to synthetic repellents. *See e.g.,* A. O. Oyedelea, A. A. Gboladeb, M. B. Sosanc, F. B. Adewoyind, O. L. Soyeluc, O. O. Orafidiya. Formulation of an effective mosquito-repellent topical product from Lemongrass oil. Volume 9, Issue 3 PHYTOMEDICINE Pages 259-262 (2002). In addition to repelling mosquitos, lemongrass oil exhibits insecticidal effects against ants, fleas, ticks, termites, and dust mites. Lemongrass oil also demonstrates anti-larval activity.

Other natural oils, such as cinnamaldehyde (cinnamon oil), eugenol (clove oil), allicin (garlic oil), thyme oil, linalool (mint oil), geraniol, castor oil, hydrogenated castor oil, rosemary oil, and cedarwood oil, for example, also demonstrate various levels of insecticidal, bactericidal, and fungicidal activities in addition to repellency. These natural oils are related through active components in the terpene, terpenoid, and flavonoid classes of compounds.

Plant essential oils, such as for example coriander, lavender, rose, garlic, and thyme have been shown to repel or kill insects with various levels of success (Mann et al., J. Appl. Entomol. 136:87-96 (2012)). Pest repellency, however, requires a combination of broad application across not only species (e.g., against different insects), but also extending to other pests such as, *e.g.*, bacteria and fungi. Additionally, repellency should harmonize with cidal activity as well as a capacity to retain residual control and/or cidal effects on treated substrates (Seham et al., J. Entomol. Zool. Stud. 8:2053-58 (2021)).

Natural pest control products include Essentria® IC-3 Insecticide Concentrate by Zoëcon® Professional Products, NatureShield® Insect & Pest Repellent by American Hydro Systems®, and Thyme Guard® bactericide and fungicide, with insecticidal activity on sucking insects. The active ingredients of Essentria® IC-3 Insecticide Concentrate are rosemary oil, geraniol, and peppermint oil. The label of Essentria® IC-3 Insecticide Concentrate states that it controls ants, bed bugs, cockroaches, fleas, flies, mosquitos, occasional invaders, spiders, ticks, wasps and 30 other pests. NatureShield® Insect & Pest Repellent uses different active ingredients including garlic oil, cinnamon oil, castor oil, and cedar oil to control mosquitoes, ticks, fleas, ants, carpenter ants, centipedes, cockroaches, gnats, fire ants, silverfish, and other crawling and flying insects. Thyme Guard® bactericide and fungicide, with insecticidal activity, is a 23% thyme oil composition that is a broad spectrum contact liquid bactericide, fungicide, and insecticide for use on all organic crops.

However, these formulations suffer from numerous disadvantages including inadequate repellency. These natural insect repellents also fail to persist after application and either lose their repellency or require frequent application. Thus, there remains a need for compositions that efficiently kill and continue to kill and repel insects at each life cycle stage and retain efficacy after application. Further, while the aforementioned natural oils contain some level of cidal activity, there is a need in the art to maximize activity for both the killing and control of pests. Additionally, a matrix of activity across such a diverse list of agricultural pests by oil type and by combination to reach synergistic performance is lacking in the field.

### SUMMARY

One aspect is for an insect, bacteria, and/or fungi control composition comprising: about 0.05% to about 20% by weight castor oil; about 0.05% to about 20% by weight of a first oil selected from the group consisting of rosemary oil, thyme oil, clove oil, garlic oil, geraniol, peppermint oil, and cinnamon oil; about 0.05% to about 20% by weight of a second oil selected from the group consisting of rosemary oil, thyme oil, clove oil, garlic oil, geraniol, peppermint oil, and cinnamon oil, wherein in the first oil is different from the second oil; balance water about 20% to about 80% by weight. In some embodiments, the insect, bacteria, and/or fungi control composition further comprises about 0.05% to about 7% by weight potassium sorbate, sodium sorbate, or a combination thereof. In some embodiments, the insect, bacteria, and/or fungi control composition further comprises about 0.05% to about 35% by weight soaps; in some embodiments, the soap is an organic soap; and in some embodiments, the soap is a regular soap. In some embodiments, the insect, bacteria, and/or fungi control composition further comprises about 0.05% to about 35% by weight glyceryl monostearate. In some embodiments, the insect, bacteria, and/or fungi control composition further comprises about 0.05% to about 15% by weight cedarwood oil. In some embodiments, the insect, bacteria, and/or fungi control composition further comprises about 0.05% to about 35% hydrogenated castor oil. In some embodiments, the insect, bacteria, and/or fungi control composition further comprises about 1.0% to about 16% by weight cinnamaldehyde. In some embodiments, the insect, bacteria, and/or fungi control composition further comprises about 1.0% to about 16% by weight eugenol. In some embodiments, the insect, bacteria, and/or fungi control composition further comprises about 1.0% to about 16% by weight allicin. In some embodiments, the insect, bacteria, and/or fungi control composition further comprises about 1.0% to about 16% by weight thyme oil. In In some embodiments, the insect, bacteria, and/or fungi control composition further comprises about 0.05% to about 29% silica. In some embodiments, the first oil is rosemary oil and the second oil is peppermint oil. In some embodiments, the first oil is rosemary oil and the second oil is cinnamon oil. In some embodiments, the first oil is thyme oil and the second oil is peppermint oil. In some embodiments, the first oil is thyme oil and the second oil is cinnamon oil. In some embodiments, the first oil is clove oil and the second oil is garlic oil. In some embodiments, the first oil is clove oil and the second oil is geraniol. In some embodiments, the first oil is geraniol and the second oil is cinnamon oil. In some embodiments, the first oil is peppermint oil and the second oil is cinnamon oil. In some embodiments, the first oil is cinnamon oil and the second oil is garlic oil. In some embodiments, the first oil is geraniol and the second oil is peppermint oil. In some embodiments, the first oil is geraniol and the second oil is rosemary oil. In some embodiments, the first oil is geraniol and the second oil is thyme oil. In some embodiments, the first oil is geraniol and the second oil is garlic oil. In some embodiments, the first oil is clove oil and the second oil is peppermint oil. In some embodiments, the first oil is clove oil and the second oil is rosemary oil. In some embodiments, the first oil is clove oil and the second oil is thyme oil. In some embodiments, the first oil is rosemary oil and the second oil is peppermint oil. In some embodiments, the first oil is rosemary oil and the second oil is thyme oil. In some embodiments, the first oil is thyme oil and the second oil is garlic oil. In some embodiments, the first oil is rosemary oil and the second oil is peppermint oil.

Another aspect is for an insect, bacteria, and/or fungi control composition comprising: about 0.05% to about 15% by weight geraniol; about 0.05% to about 20% by weight castor oil; about 0.05% to about 20% by weight rosemary oil, mint oil, or a combination thereof; balance water about 20% to about 80% by weight. In some embodiments, the insect, bacteria, and/or fungi control composition further comprises about 0.05% to about 7% by weight potassium sorbate, sodium sorbate, or a combination thereof. In some embodiments, the insect, bacteria, and/or fungi control composition further comprises about 0.05% to about 35% by weight soaps; in some embodiments, the soap is an organic soap; and in some embodiments, the soap is a regular soap. In some embodiments, the insect, bacteria, and/or fungi control composition further comprises about 0.05% to about 35% by weight glyceryl monostearate. In some embodiments, the insect, bacteria, and/or fungi control composition further comprises about 0.05% to about 15% by weight cedarwood oil. In some embodiments, the insect, bacteria, and/or fungi control composition further comprises about 0.05% to about 35% hydrogenated castor oil. In some embodiments, the insect, bacteria, and/or fungi control composition further comprises about 1.0% to about 16% by weight cinnamaldehyde. In some embodiments, the insect, bacteria, and/or fungi control composition further comprises about 1.0% to about 16% by weight eugenol. In some embodiments, the insect, bacteria, and/or fungi control composition further comprises about 1.0% to about 16% by weight allicin. In some embodiments, the insect, bacteria, and/or fungi control composition further comprises about 1.0% to about 16% by weight thyme oil. In some embodiments, the insect, bacteria, and/or fungi control composition further comprises about 0.05% to about 29% silica. In some embodiments, the insect, bacteria, and/or fungi control composition further comprises peppermint oil, linalool, or a combination thereof.

An additional aspect is for an insect, bacteria, and/or fungi control composition comprising: about 0.05% to about 20% by weight castor oil; about 0.05% to about 20% by weight of a first oil selected from the group consisting of rosemary oil, thyme oil, clove oil, garlic oil, geraniol, peppermint oil, and cinnamon oil; about 0.05% to about 20% by weight of a second oil selected from the group consisting of rosemary oil, thyme oil, clove oil, garlic oil, geraniol, peppermint oil, and cinnamon oil, wherein in the first oil is different from the second oil; balance water about 20% to about 80% by weight. In some embodiments, the insect, bacteria, and/or fungi control composition further comprises about 0.05% to about 7% by weight potassium sorbate, sodium sorbate, or a combination thereof. In some embodiments, the insect, bacteria, and/or fungi control composition further comprises about 0.05% to about 35% by weight soaps; in some embodiments, the soap is an organic soap; and in some embodiments, the soap is a regular soap. In some embodiments, the insect, bacteria, and/or fungi control composition further comprises about 0.05% to about 35% by weight glyceryl monostearate. In some embodiments, the insect, bacteria, and/or fungi control composition further comprises about 0.05% to about 15% by weight cedarwood oil. In some embodiments, the insect, bacteria, and/or fungi control composition further comprises about 0.05% to about 35% hydrogenated castor oil. In some embodiments, the insect, bacteria, and/or fungi control composition further comprises about 1.0% to about 16% by weight cinnamaldehyde. In some embodiments, the insect, bacteria, and/or fungi control composition further comprises about 1.0% to about 16% by weight eugenol. In some embodiments, the insect, bacteria, and/or fungi control composition further comprises about 1.0% to about 16% by weight allicin. In some embodiments, the insect, bacteria, and/or fungi control composition further comprises about 1.0% to about 16% by weight thyme oil. In some embodiments, the insect, bacteria, and/or fungi control composition further comprises about 0.05% to about 29% silica. In some embodiments, the first oil is rosemary oil and the second oil is peppermint oil. In some embodiments, the first oil is rosemary oil and the second oil is cinnamon oil. In some embodiments, the first oil is thyme oil and the second oil is peppermint oil. In some embodiments, the first oil is thyme oil and the second oil is cinnamon oil. In some embodiments, the first oil is clove oil and the second oil is garlic oil. In some embodiments, the first oil is clove oil and the second oil is geraniol. In some embodiments, the first oil is geraniol and the second oil is cinnamon oil. In some embodiments, the first oil is peppermint oil and the second oil is cinnamon oil. In some embodiments, the first oil is cinnamon oil and the second oil is garlic oil. In some embodiments, the first oil is geraniol and the second oil is peppermint oil. In some embodiments, the first oil is geraniol and the second oil is rosemary oil. In some embodiments, the first oil is geraniol and the second oil is thyme oil. In some embodiments, the first oil is geraniol and the second oil is garlic oil. In some embodiments, the first oil is clove oil and the second oil is peppermint oil. In some embodiments, the first oil is clove oil and the second oil is rosemary oil. In some embodiments, the first oil is clove oil and the second oil is thyme oil. In some embodiments, the first oil is rosemary oil and the second oil is peppermint oil. In some embodiments, the first oil is rosemary oil and the second oil is thyme oil. In some embodiments, the first oil is thyme oil and the second oil is garlic oil. In some embodiments, the first oil is rosemary oil and the second oil is peppermint oil.

Another aspect is for a method of killing insects, bacteria, and/or fungi in a treatment area comprising: applying the aforementioned insect, bacteria, and/or fungi control composition to the treatment area in an amount effective to kill insects, bacteria, and/or fungi in the treatment area. In some embodiments, the method is applied in an amount effective to kill at least 80% of insects, bacteria, and/or fungi in the treatment area one hour after applying the insect, bacteria, and/or fungi control composition to the treatment area. In some embodiments, the method further comprises diluting about 0.5 ounces, about 1 ounce, about 1.5 ounces, about 2 ounces, about 2.5 ounces, about 3 ounces, about 3.5 ounces, about 4 ounces, about 4.5 ounces, about 5 ounces, about 5.5 ounces, about 6 ounces, about 6.5 ounces, about 7 ounces, about 7.5 ounces, about 8 ounces, about 8.5 ounces, about 9 ounces, about 9.5 ounces, about 10 ounces, about 10.5 ounces, about 11 ounces, about 11.5 ounces, about 12 ounces, about 12.5 ounces, about 13 ounces, about 13.5 ounces, about 14 ounces, about 14.5 ounces, about 15 ounces, about 15.5 ounces, about 16 ounces, about 16.5 ounces, about 17 ounces, about 17.5 ounces, about 18 ounces, about 18.5 ounces, about 19 ounces, about 19.5 ounces, or about 20 ounces of an insect, bacteria, and/or fungi control composition concentrate with water to make a gallon of the insect, bacteria, and/or fungi control composition. In some embodiments, applying the insect, bacteria, and/or fungi control composition comprises spraying. In some embodiments, the insect is a scale, aphid, slug, snail, grasshopper, cricket, moth, worm, beetle, spider, ant, mite, looper, fly, thrip, spotted lantern fly, borer, psyllid, mealy bug, stink bug, tarnished plant bug, chinch, armyworm, mosquito, cockroach, centipede, gnat, silverfish, or tick. In some embodiments, the bacteria is *E. coli, a Erwinia, a Pseudomonas,* a *Xanthamonas,* or *Candidatus* Liberibacter.

An additional aspect for a method of preventing insect reproduction in a treatment area comprising: applying the aforementioned insect, bacteria, and/or fungi control composition to the treatment area in an amount effective to at least one of (a) disrupt an insect egg cycle and/or inhibit ovo deposit by adult female insects and (b) kill an insect larva in the treated area. In some embodiments, the treatment area comprises a residential landscape, a commercial landscape, or an area that comprises a water feature, a lake, or a stream. In some embodiments, the insect, bacteria, and/or fungi control composition is applied directly to the insect, bacteria, and/or fungi. In some embodiments, the method further comprises diluting about 0.5 ounces, about 1 ounce, about 1.5 ounces, about 2 ounces, about 2.5 ounces, about 3 ounces, about 3.5 ounces, about 4 ounces, about 4.5 ounces, about 5 ounces, about 5.5 ounces, about 6 ounces, about 6.5 ounces, about 7 ounces, about 7.5 ounces, about 8 ounces, about 8.5 ounces, about 9 ounces, about 9.5 ounces, about 10 ounces, about 10.5 ounces, about 11 ounces, about 11.5 ounces, about 12 ounces, about 12.5 ounces, about 13 ounces, about 13.5 ounces, about 14 ounces, about 14.5 ounces, about 15 ounces, about 15.5 ounces, about 16 ounces, about 16.5 ounces, about 17 ounces, about 17.5 ounces, about 18 ounces, about 18.5 ounces, about 19 ounces, about 19.5 ounces, or about 20 ounces of an insect, bacteria, and/or fungi control composition concentrate with water to make a gallon of the insect, bacteria, and/or fungi control composition. In some embodiments, applying the insect, bacteria, and/or fungi control composition comprises spraying. In some embodiments, the insect is a scale, aphid, slug, snail, grasshopper, cricket, moth, worm, beetle, spider, ant, mite, looper, fly, thrip, spotted lantern fly, borer, psyllid, mealy bug, stink bug, tarnished plant bug, chinch, armyworm, mosquito, cockroach, centipede, gnat, silverfish, or tick. In some embodiments, the bacteria is *E. coli, a Erwinia, a Pseudomonas,* a *Xanthamonas,* or *Candidatus* Liberibacter.

A further aspect is for a method of controlling insects, bacteria, and/or fungi on a surface comprising applying the aforementioned insect, bacteria, and/or fungi control composition to a surface in an amount effective to control insects, bacteria, and/or fungi on the surface. In some embodiments, the insect, bacteria, and/or fungi control composition is applied in an amount effective to control at least 85% of insects, bacteria, and/or fungi on the surface one hour after applying the insect, bacteria, and/or fungi control composition to the surface. In some embodiments, the surface is selected from the group consisting of a soil surface, a plant surface, and an exterior building surface. In some embodiments, the method further comprises diluting about 0.5 ounces, about 1 ounce, about 1.5 ounces, about 2 ounces, about 2.5 ounces, about 3 ounces, about 3.5 ounces, about 4 ounces, about 4.5 ounces, about 5 ounces, about 5.5 ounces, about 6 ounces, about 6.5 ounces, about 7 ounces, about 7.5 ounces, about 8 ounces, about 8.5 ounces, about 9 ounces, about 9.5 ounces, about 10 ounces, about 10.5 ounces, about 11 ounces, about 11.5 ounces, about 12 ounces, about 12.5 ounces, about 13 ounces, about 13.5 ounces, about 14 ounces, about 14.5 ounces, about 15 ounces, about 15.5 ounces, about 16 ounces, about 16.5 ounces, about 17 ounces, about 17.5 ounces, about 18 ounces, about 18.5 ounces, about 19 ounces, about 19.5 ounces, or about 20 ounces of an insect, bacteria, and/or fungi control composition concentrate with water to make a gallon of the insect, bacteria, and/or fungi control composition. In some embodiments, applying the insect, bacteria, and/or fungi control composition comprises spraying. In some embodiments, the insect is a scale, aphid, slug, snail, grasshopper, cricket, moth, worm, beetle, spider, ant, mite, looper, fly, thrip, spotted lantern fly, borer, psyllid, mealy bug, stink bug, tarnished plant bug, chinch, armyworm, mosquito, cockroach, centipede, gnat, silverfish, or tick. In some embodiments, the bacteria is *E. coli,* a *Erwinia,* a *Pseudomonas,* a *Xanthamonas,* or *Candidatus* Liberibacter.

Another aspect is for an insect, bacteria, and/or fungi control composition comprising a synergistically effective amount of rosemary oil, lemongrass oil, and geraniol.

An additional aspect is for an insect, bacteria, and/or fungi control composition comprising: about 0.05% to about 20% by weight of a carrier oil; about 0.05% to about 20% by weight of a first essential oil; about 0.05% to about 20% by weight of a second essential oil different from the first essential oil; balance water about 20% to about 80% by weight. In some embodiments, the carrier oil is an active carrier oil; and in some embodiments, the active carrier oil is castor oil. In some embodiments, the first essential oil is peppermint oil, and the second essential oil is selected from the group consisting of thyme oil, cinnamon oil, geraniol, and garlic oil. In some embodiments, the first essential oil is clove oil, and the second essential oil is selected from the group consisting of garlic oil and geraniol. In some embodiments, the first essential oil is geraniol, and the second essential oil is selected from the group consisting of rosemary oil, thyme oil, and garlic oil. In some embodiments, the first essential oil is thyme oil, and the second essential oil is garlic oil.

## BRIEF DESCRIPTION OF THE DRAWINGS

**Fig. 1** shows inhibition of *E. coli* testing individual ingredients. Columns: Control (*E. coli* only); Essential Oils - Ark (Castor Oil, Rosemary Oil, and Geraniol); Rosemary; Geraniol; Castor Oil; C + R (Castor Oil and Rosemary); C + G (Castor Oil and Geraniol); R + G (Rosemary and Geraniol); Soap; Potassium Sorbate; Glyceryl Monostearate. Y-axis: colony forming units.

**Fig. 2** shows a comparison of antibacterial activity of essential oils.

## DETAILED DESCRIPTION

The present disclosure is directed to a combination of essential oils and other ingredients herein that kill and/or repels insects, bacteria, and/or fungi. In some embodiments, the insect, bacteria, and/or fungi control composition comprises geraniol; castor oil; rosemary oil, mint oil, or a combination thereof; water; and, optionally, potassium sorbate, sodium sorbate, or a combination thereof; soap; glyceryl monostearate; cedarwood oil; hydrogenated castor oil; cinnamaldehyde (cinnamon oil); eugenol (clove oil); allicin (garlic oil), thyme oil; and/or linalool (mints). In some embodiments, the insect, bacteria, and/or fungi control composition comprises a carrier oil, which in some embodiments is an active carrier oil, and two or more essential oils.

As used herein, the term "insect control composition" means a composition that has repellent and/or insecticide properties as defined below. Insect control compositions may exhibit repellent and/or insecticide effects against insects including, but not limited to, scales, aphids, slugs, snails, grasshoppers, crickets, moths, worms, beetles, spiders, ants, mites, loopers, flies, thrips, spotted lantern flies, borers, psyllids, mealy bugs, stink bugs, tarnished plant bugs, chinches, army worms, mosquito, cockroaches, centipedes, gnats, silverfish, ticks, and/or other insects.

As used herein, the term "bacteria control composition" means a composition that has repellent and/or bactericide properties as defined below. Bacteria control compositions may exhibit repellent and/or bactericide effects against bacteria including, but not limited to, *E. coli, Erwinia (e.g., E. amlyovora), Pseudomonas (e.g., P. aeruginosa, P. fuscovaginae, P. syringae), Xanthamonas* (*e.g., X. oryze, X. euvesicatora, X. citri, X. campestris),* or *Candidatus* Liberibacter (the causative agent for Huanglongbing (HLB) (citrus greening disease).

As used herein, the term "fungi control composition" means a composition that has repellent and/or fungicide properties as defined below. Fungi control compositions may exhibit repellent and/or fungicide effects against fungi including, but not limited to, *Pyricolaria (e.g., P. grisea), Rhizoctonia (e.g., R. solani), Alternaria (e.g., A. solani), Botrytis* spp., *Phytophthora (e.g., P. infestens*), *Septoria (e.g., S. lycopersici), Candida* (e.g., *C. albicans),* or *Venturia (e.g., V. inequalis).*

The terms "effective control", "effective control over time" and "effectively control" are used interchangeably throughout this description and mean the use of a substance that deters insects or other pests from approaching or settling on a surface. Insect, bacteria, and/or fungi control compositions according to the present disclosure can provide at least, or more than, about 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%, or 100% effective control of insects, bacteria, and/or fungi over a specified period of time, in some embodiments, about 5, 10, 15, 20, 25, 30, 35, 40, 45, 50, 55 minutes or more; 1, 2, 3, 4, 5, 6, 7, 8, 9, 10, 11, 12, 13, 14, 15, 16, 17, 18, 19, 20, 21, 22, 23 or more hours, or 1, 2, 3, 4, 5, 6, 7, 8, 9, 10, 11, 12, 13, 14, 15, 16, 17, 18, 19, 20 or more days. These values can also be used to form ranges, such as, for example, from about 15% to about 85% effective control over time. The percent effective control over time is based on the percentage of the proportion of insects, bacteria, and/or fungi that avoid treated surfaces or areas in favor of untreated surfaces or areas. For example, 100% effective control over time indicates that all insects, bacteria, and/or fungi avoided the treated area, and 50% effective control over time indicates that half of the insects, bacteria, and/or fungi avoided the treated area and half of the insects were not deterred from approaching or settling in the treated area.

As used herein, the term "insecticide" means a substance used to kill insects. Insect control compositions according to the present subject matter can provide at least or more than about 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%, or 100% insecticidal efficiency. These values can also be used to form ranges, such as, for example, from about 15% to about 85% insecticidal efficiency. The percent insecticidal efficiency is based on the percentage of the proportion of insects that die as measured immediately after treatment to 96 hours after treatment . For example, 100% insecticidal efficiency indicates that all insects counted between 48 to 72 hours after treatment were dead, and 50% insecticidal efficiency indicates that half of the insects were dead and half were alive when counted 48 to 72 hours after treatment.

As used herein, the term "bactericide" means a substance used to kill bacteria. Bacteria control compositions according to the present subject matter can provide at least or more than about 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%, or 100% bactericidal efficiency. These values can also be used to form ranges, such as, for example, from about 15% to about 85% bactericidal efficiency. The percent bactericidal efficiency is based on the percentage of the proportion of bacteria that die as measured immediately after treatment to 96 hours after treatment . For example, 100% bactericidal efficiency indicates that all bacteria counted between 48 to 72 hours after treatment were dead, and 50% bactericidal efficiency indicates that half of the bacteria were dead and half were alive when counted 48 to 72 hours after treatment.

As used herein, the term "fungicide" means a substance used to kill fungi. Fungi control compositions according to the present subject matter can provide at least or more than about 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%, or 100% fungicidal efficiency. These values can also be used to form ranges, such as, for example, from about 15% to about 85% fungicidal efficiency. The percent fungicidal efficiency is based on the percentage of the proportion of fungi that die as measured immediately after treatment to 96 hours after treatment . For example, 100% fungicidal efficiency indicates that all fungi counted between 48 to 72 hours after treatment were dead, and 50% fungicidal efficiency indicates that half of the fungi were dead and half were alive when counted 48 to 72 hours after treatment.

As used herein, a "carrier oil" is a natural oil from a plant or animal, or an inorganic oil, used to dilute an essential oil. In some embodiments, the carrier oil can be castor oil, olive oil, coconut oil, fractionated coconut oil, jojoba oil, argan oil, avocado oil, grapeseed oil, rapeseed oil, sweet almond oil, apricot kernel oil, rosehip oil, black cumin seed oil, sunflower oil, evening primrose oil, hemp seed oil, flaxseed oil, tamanu oil, macadamia oil, sesame seed oil, borage seed oil, moringa oil, baobab seed oil, calendula oil, palm oil, palm kernel oil, corn oil, hazelnut oil, rice bran oil, linseed oil, safflower oil, passion fruit oil, St. John's wort oil, wheatgerm oil, carrot oil, basil oil, soybean oil, camellia seed oil, chia seed oil, cotton seed oil, cranberry seed oil, cucumber seed oil, ground nut oil, guava seed oil, kukui nut oil, musk melon seed oil, papaya seed oil, prickly pear seed oil, pumpkin seed oil, radish seed oil, raspberry seed oil, shea nut oil, tomato seed oil, tung nut oil, watermelon seed oil, alma fruit oil, argan oil, babassu oil, bergamot oil, camelina oil, coriander oil, fenugreek oil, kapok oil, karanja oil, laurel berry fruit oil, maize oil, marula oil, meadowfoam oil, mustard oil, oat oil, sea buckthorn berry oil, stillingia oil, vanaspati oil, emu oil, fish oil, mineral oil, paraffin oil, silicon oil, or a combination thereof.

In some embodiments, the carrier oil is an "active" carrier oil in that the carrier oil contributes to the insecticide, bactericide, and/or fungicide activity of a composition disclosed herein. In some embodiments, the carrier oil is an "inactive" carrier oil in that the carrier oil does not contribute to the insecticide, bactericide, and/or fungicide activity of a composition disclosed herein.

In one embodiment, the present insect, bacteria, and/or fungi control composition comprises formulations that act as both to effectively control an insect on a surface and an insecticide. In one embodiment, the present insect, bacteria, and/or fungi control composition comprises formulations that act as both to effectively control bacteria on a surface and a bactericide. In one embodiment, the present insect, bacteria, and/or fungi control composition comprises formulations that act as both to effectively control fungi on a surface and a fungicide. In one embodiment, the present insect, bacteria, and/or fungi control composition comprises formulations that act to effectively control an insect and bacteria on a surface. In one embodiment, the present insect, bacteria, and/or fungi control composition comprises formulations that act to effectively control an insect and bacteria on a surface and as an insecticide. In one embodiment, the present insect, bacteria, and/or fungi control composition comprises formulations that act to effectively control an insect and bacteria on a surface and as a bactericide. In one embodiment, the present insect, bacteria, and/or fungi control composition comprises formulations that act to effectively control an insect and bacteria on a surface and as both an insecticide and bactericide. In one embodiment, the present insect, bacteria, and/or fungi control composition comprises formulations that act to effectively control an insect and fungi on a surface. In one embodiment, the present insect, bacteria, and/or fungi control composition comprises formulations that act to effectively control an insect and fungi on a surface and as an insecticide. In one embodiment, the present insect, bacteria, and/or fungi control composition comprises formulations that act to effectively control an insect and fungi on a surface and as a fungicide. In one embodiment, the present insect, bacteria, and/or fungi control composition comprises formulations that act to effectively control an insect and fungi on a surface and as both an insecticide and fungicide. In one embodiment, the present insect, bacteria, and/or fungi control composition comprises formulations that act to effectively control bacteria and fungi on a surface. In one embodiment, the present insect, bacteria, and/or fungi control composition comprises formulations that act to effectively control bacteria and fungi on a surface and as a bactericide. In one embodiment, the present insect, bacteria, and/or fungi control composition comprises formulations that act to effectively control bacteria and fungi on a surface and as a fungicide. In one embodiment, the present insect, bacteria, and/or fungi control composition comprises formulations that act to effectively control bacteria and fungi on a surface and as both a bactericide and a fungicide. In one embodiment, the present insect, bacteria, and/or fungi control composition comprises formulations that act as both an insecticide and a bactericide. In one embodiment, the present insect, bacteria, and/or fungi control composition comprises formulations that act as both an insecticide and a fungicide. In one embodiment, the present insect, bacteria, and/or fungi control composition comprises formulations that act as both a bactericide and a fungicide. In one embodiment, the present insect, bacteria, and/or fungi control composition comprises formulations that act to effectively control an insect, bacteria, and fungi on a surface. In one embodiment, the present insect, bacteria, and/or fungi control composition comprises formulations that act to effectively control an insect, bacteria, and fungi on a surface and as an insecticide. In one embodiment, the present insect, bacteria, and/or fungi control composition comprises formulations that act to effectively control an insect, bacteria, and fungi on a surface and as a bactericide. In one embodiment, the present insect, bacteria, and/or fungi control composition comprises formulations that act to effectively control an insect, bacteria, and fungi on a surface and as a fungicide. In one embodiment, the present insect, bacteria, and/or fungi control composition comprises formulations that act to effectively control an insect, bacteria, and fungi on a surface and as an insecticide and a bactericide. In one embodiment, the present insect, bacteria, and/or fungi control composition comprises formulations that act to effectively control an insect, bacteria, and fungi on a surface and as an insecticide and a fungicide. In one embodiment, the present insect, bacteria, and/or fungi control composition comprises formulations that act to effectively control an insect, bacteria, and fungi on a surface and as a bactericide and a fungicide. In one embodiment, the present insect, bacteria, and/or fungi control composition comprises formulations that act to effectively control an insect, bacteria, and fungi on a surface and as an insecticide, a bactericide, and a fungicide. In one embodiment, the present insect, bacteria, and/or fungi control composition comprises formulations that act as an insecticide, a bactericide, and a fungicide. In one embodiment, the present insect, bacteria, and/or fungi control composition comprises formulations that act to effectively control an insect on a surface and as an insecticide, a bactericide, and a fungicide. In one embodiment, the present insect, bacteria, and/or fungi control composition comprises formulations that act to effectively control bacteria on a surface and as an insecticide, a bactericide, and a fungicide. In one embodiment, the present insect, bacteria, and/or fungi control composition comprises formulations that act to effectively control fungi on a surface and as an insecticide, a bactericide, and a fungicide. In one embodiment, the present insect, bacteria, and/or fungi control composition comprises formulations that act to effectively control an insect and bacteria on a surface and as an insecticide, a bactericide, and a fungicide. In one embodiment, the present insect, bacteria, and/or fungi control composition comprises formulations that act to effectively control an insect and fungi on a surface and as an insecticide, a bactericide, and a fungicide. In one embodiment, the present insect, bacteria, and/or fungi control composition comprises formulations that act to effectively control bacteria and fungi on a surface and as an insecticide, a bactericide, and a fungicide. In one embodiment, the present insect, bacteria, and/or fungi control composition comprises formulations that act to effectively control an insect, bacteria, and fungi on a surface and as an insecticide, a bactericide, and a fungicide.

In one embodiment, the insect, bacteria, and/or fungi control composition of the present disclosure may kill both adult and larval insects, disrupt the insect egg cycle, and/or disrupt instar development. In one embodiment, the insect, bacteria, and/or fungi control composition inactivates or kills the insect eggs.

In one embodiment, the insect, bacteria, and/or fungi control composition of the present disclosure may kill bacteria in any bacterial growth phase. In some embodiments, bacterial growth is reduced by at least about 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%, or 100%. In some embodiments, the insect, bacteria, and/or fungi control composition effectively controls bacteria in the lag phase, log phase, and/or stationary phase.

In one embodiment, the insect, bacteria, and/or fungi control composition of the present disclosure may kill fungi in any fungal growth or reproductive phase. In some embodiments, fungal growth and/reproduction is reduced by at least about 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%, or 100%.

In some embodiments, the insect, bacteria, and/or fungi control composition comprises geraniol; castor oil; rosemary oil, mint oil, or a combination thereof; and water. In some embodiments, geraniol is present in a range of from about 0.05% to about 15% by weight. In some embodiments, the castor oil is present in a range of from about 0.05% to about 20% by weight. In some embodiments, the rosemary oil, mint oil, or a combination thereof is present in a range of from about 0.05% to about 20% by weight. In some embodiments, the balance water is present in a range of from about 20% to about 80% by weight.

In some embodiments, the first or second essential oil is castor oil, lavender oil, tea tree oil, peppermint oil, rosemary oil, geraniol, allspice berry oil, neem oil, angelica seed oil, anise seed oil, basil oil, bay laurel oil, bay oil, bergamot oil, blood orange oil, camphor oil, caraway seed oil, cardamom seed oil, carrot seed oil, cassia oil, catnip oil, cedarwood oil, celery seed oil, chamomile blue oil, chamomile roman oil, cinnamon bark oil, cinnamon leaf oil, citronella oil, clary sage oil, clove bud oil, coriander seed oil, cypress oil, elemi oil, eucalyptus oil, fennel oil, fir needle oil, frankincense oil, ginger oil, grapefruit oil, helichrysum oil, hop oil, hyssop oil, juniper berry oil, labdanum oil, lemon oil, lemongrass oil, lime oil, magnolia oil, mandarin oil, marjoram oil, myrrh oil, myrtle oil, neroli oil, niaouli oil, nutmeg oil, orange oil, oregano oil, palmarosa oil, patchouli oil, pennyroyal oil, pepper black oil, petitgrain oil, pine needle oil, radiata oil, ravensara oil, rose oil, rosewood oil, sage oil, sandalwood oil, spearmint oil, spikenard oil, spruce oil, star anise oil, tangerine oil, thyme red oil, verbena oil, vetiver oil, wintergreen oil, wormwood oil, yarrow oil, Ylang Ylang oil, pink oil, ajwain oil, turmeric root oil, or a combination thereof.

The designation of first and second essential oil is not intended to provide any priority relationship between the two oils and is merely used as an indicator of the presence of two different oils in a composition disclosed herein. Thus, any essential oil can be either a first essential oil or a second essential oil so long as the first and second essential oils are different from each other.

The compositions herein may contain additional essential oils beyond the first and second essential oils, e.g., 1, 2, 3, 4, 5, 6, 7, 8, 9, 10, 11, 12, 13, 14, 15 or more additional essential oils beyond the first and second essential oils.

In some embodiments, the first essential oil is geraniol, and the second essential oil is castor oil, lavender oil, tea tree oil, peppermint oil, rosemary oil, allspice berry oil, neem oil, angelica seed oil, anise seed oil, basil oil, bay laurel oil, bay oil, bergamot oil, blood orange oil, camphor oil, caraway seed oil, cardamom seed oil, carrot seed oil, cassia oil, catnip oil, cedarwood oil, celery seed oil, chamomile blue oil, chamomile roman oil, cinnamon bark oil, cinnamon leaf oil, citronella oil, clary sage oil, clove bud oil, coriander seed oil, cypress oil, elemi oil, eucalyptus oil, fennel oil, fir needle oil, frankincense oil, ginger oil, grapefruit oil, helichrysum oil, hop oil, hyssop oil, juniper berry oil, labdanum oil, lemon oil, lemongrass oil, lime oil, magnolia oil, mandarin oil, marjoram oil, myrrh oil, myrtle oil, neroli oil, niaouli oil, nutmeg oil, orange oil, oregano oil, palmarosa oil, patchouli oil, pennyroyal oil, pepper black oil, petitgrain oil, pine needle oil, radiata oil, ravensara oil, rose oil, rosewood oil, sage oil, sandalwood oil, spearmint oil, spikenard oil, spruce oil, star anise oil, tangerine oil, thyme red oil, verbena oil, vetiver oil, wintergreen oil, wormwood oil, yarrow oil, Ylang Ylang oil, pink oil, ajwain oil, or turmeric root oil. In some embodiments, the composition further comprises a third essential oil different from geraniol and the second essential oil.

In some embodiments, the insect, bacteria, and/or fungi control composition further comprises potassium sorbate, sodium sorbate, or a combination thereof. In some embodiments, the potassium sorbate, sodium sorbate, or a combination thereof is present in a range of from about 0.05% to about 7% by weight.

In some embodiments, the insect, bacteria, and/or fungi control composition further comprises an adjuvant. In some embodiments, the adjuvant is a modified siloxane, for example, polyalkyleneoxide modified polydimethylsiloxane, polyalkyleneoxide modified heptamethyltrisiloxane, polyalkyleneoxide modified methylsiloxane, and the like. In some embodiments, the adjuvant is present in an amount of about 1/3 of an ounce per gallon (2.60 mL/L).

In some embodiments, the insect, bacteria, and/or fungi control composition further comprises soap, surfactants, and/or other agents of the like, which in some embodiments, are useful to penetrate the carapace of insects and/or to increase systemic activity. In some embodiments, the soap is present in a range of from about 0.05% to about 35% by weight.

In some embodiments, the insect, bacteria, and/or fungi control composition further comprises glyceryl monostearate. In some embodiments, the glyceryl monostearate is present in a range of from about 0.05% to about 35% by weight.

In some embodiments, the insect, bacteria, and/or fungi control composition comprises cedarwood oil. In some embodiments, the cedarwood oil is present in a range of from about 0.05% to about 15% by weight.

In some embodiments, the insect, bacteria, and/or fungi control composition further comprises hydrogenated castor oil. In some embodiments, the hydrogenated castor oil is present in a range of from about 0.05% to about 35% by weight.

Geraniol is used in perfumes and food flavorings and has been shown to repel insects. The insect, bacteria, and/or fungi control composition of the present disclosure may contain geraniol at a level of about 0.05%, 0.1%, 0.15%, 0.2%, 0.25%, 0.3%, 0.35%, 0.4%, 0.45%, 0.5%, 0.55%, 0.6%, 0.65%, 0.7%, 0.75%, 0.8%, 0.85%, 0.9%, 0.95%, 1%, 1.05%, 1.1%, 1.15%, 1.2%, 1.25%, 1.3%, 1.35%, 1.4%, 1.45%, 1.5%, 1.55%, 1.6%, 1.65%, 1.7%, 1.75%, 1.8%, 1.85%, 1.9%, 1.95%, 2%, 2.05%, 2.1%, 2.15%, 2.2%, 2.25%, 2.3%, 2.35%, 2.4%, 2.45%, 2.5%, 2.55%, 2.6%, 2.65%, 2.7%, 2.75%, 2.8%, 2.85%, 2.9%, 2.95%, 3%, 3.05%, 3.1%, 3.15%, 3.2%, 3.25%, 3.3%, 3.35%, 3.4%, 3.45%, 3.5%, 3.55%, 3.6%, 3.65%, 3.7%, 3.75%, 3.8%, 3.85%, 3.9%, 3.95%, 4%, 4.05%, 4.1%, 4.15%, 4.2%, 4.25%, 4.3%, 4.35%, 4.4%, 4.45%, 4.5%, 4.55%, 4.6%, 4.65%, 4.7%, 4.75%, 4.8%, 4.85%, 4.9%, 4.95%, 5%, 5.05%, 5.1%, 5.15%, 5.2%, 5.25%, 5.3%, 5.35%, 5.4%, 5.45%, 5.5%, 5.55%, 5.6%, 5.65%, 5.7%, 5.75%, 5.8%, 5.85%, 5.9%, 5.95%, 6%, 6.05%, 6.1%, 6.15%, 6.2%, 6.25%, 6.3%, 6.35%, 6.4%, 6.45%, 6.5%, 6.55%, 6.6%, 6.65%, 6.7%, 6.75%, 6.8%, 6.85%, 6.9%, 6.95%, 7%, 7.05%, 7.1%, 7.15%, 7.2%, 7.25%, 7.3%, 7.35%, 7.4%, 7.45%, 7.5%, 7.55%, 7.6%, 7.65%, 7.7%, 7.75%, 7.8%, 7.85%, 7.9%, 7.95%, 8%, 8.05%, 8.1%, 8.15%, 8.2%, 8.25%, 8.3%, 8.35%, 8.4%, 8.45%, 8.5%, 8.55%, 8.6%, 8.65%, 8.7%, 8.75%, 8.8%, 8.85%, 8.9%, 8.95%, 9%, 9.05%, 9.1%, 9.15%, 9.2%, 9.25%, 9.3%, 9.35%, 9.4%, 9.45%, 9.5%, 9.55%, 9.6%, 9.65%, 9.7%, 9.75%, 9.8%, 9.85%, 9.9%, 9.95%, 10%, 10.05%, 10.1%, 10.15%, 10.2%, 10.25%, 10.3%, 10.35%, 10.4%, 10.45%, 10.5%, 10.55%, 10.6%, 10.65%, 10.7%, 10.75%, 10.8%, 10.85%, 10.9%, 10.95%, 11%, 11.05%, 11.1%, 11.15%, 11.2%, 11.25%, 11.3%, 11.35%, 11.4%, 11.45%, 11.5%, 11.55%, 11.6%, 11.65%, 11.7%, 11.75%, 11.8%, 11.85%, 11.9%, 11.95%, 12%, 12.05%, 12.1%, 12.15%, 12.2%, 12.25%, 12.3%, 12.35%, 12.4%, 12.45%, 12.5%, 12.55%, 12.6%, 12.65%, 12.7%, 12.75%, 12.8%, 12.85%, 12.9%, 12.95%, 3%, 13.05%, 13.1%, 13.15%, 13.2%, 13.25%, 13.3%, 13.35%, 13.4%, 13.45%, 13.5%, 13.55%, 13.6%, 13.65%, 13.7%, 13.75%, 13.8%, 13.85%, 13.9%, 13.95%, 14%, 14.05%, 14.1%, 14.15%, 14.2%, 14.25%, 14.3%, 14.35%, 14.4%, 14.45%, 14.5%, 14.55%, 14.6%, 14.65%, 14.7%, 14.75%, 14.8%, 14.85%, 14.9%, 14.95%, or 15% by weight. These values of geraniol can also be expressed as ranges, for example, of from about 0.05% to about 15%, about 0.25% to about 15%, about 0.5% to about 15%, about 0.75% to about 15%, about 1% to about 15%, about 1.25% to about 15%, about 1.5% to about 15%, about 1.75% to about 15%, about 2% to about 15%, about 2.25% to about 15%, about 2.5% to about 15%, about 2.75% to about 15%, about 3% to about 15%, about 3.25% to about 15%, about 3.5% to about 15%, about 3.75% to about 15%, about 4% to about 15%, about 4.25% to about 15%, about 4.5% to about 15%, about 4.75% to about 15%, about 5% to about 15%, about 5.25% to about 15%, about 5.5% to about 15%, about 5.75% to about 15%, about 6% to about 15%, about 6.25% to about 15%, about 6.5% to about 15%, about 6.75% to about 15%, about 8% to about 15%, about 8.25% to about 15%, about 8.5% to about 15%, about 8.75% to about 15%, about 9% to about 15%, about 9.25% to about 15%, about 9.5% to about 15%, about 9.75% to about 15%, about 10% to about 15%, about 10.25% to about 15%, about 10.5% to about 15%, about 10.75% to about 15%, about 11% to about 15%, about 11.25% to about 15%, about 11.5% to about 15%, about 11.75% to about 15%, about 12% to about 15%, about 12.25% to about 15%, about 12.5% to about 15%, about 12.75% to about 15%, about 13% to about 15%, about 13.25% to about 15%, about 13.5% to about 15%, about 13.75% to about 15%, about 14% to about 15%, about 14.25% to about 15%, about 14.5% to about 15%, about 14.75% to about 15%, about 0.05% to about 14.75%, about 0.05% to about 14.5%, about 0.05% to about 14.25%, about 0.05% to about 14%, about 0.05% to about 13.75%, about 0.05% to about 13.5%, about 0.05% to about 13.25%, about 0.05% to about 13%, about 0.05% to about 12.75%, about 0.05% to about 12.5%, about 0.05% to about 12.25%, about 0.05% to about 12%, about 0.05% to about 11.75%, about 0.05% to about 11.5%, about 0.05% to about 11.25%, about 0.05% to about 11%, about 0.05% to about 10.75%, about 0.05% to about 10.5%, about 0.05% to about 10.25%, about 0.05% to about 10%, about 0.05% to about 9.75%, about 0.05% to about 9.5%, about 0.05% to about 9.5%, about 0.05% to about 9.25%, about 0.05% to about 9%, about 0.05% to about 8.75%, about 0.05% to about 8.5%, about 0.05% to about 8.25%, about 0.05% to about 8%, about 0.05% to about 7.75%, about 0.05% to about 7.5%, about 0.05% to about 7.25%, about 0.05% to about 7%, about 0.05% to about 6.75%, about 0.05% to about 6.5%, about 0.05% to about 6.25%, about 0.05% to about 6%, about 0.05% to about 5.75%, about 0.05% to about 5.5%, about 0.05% to about 5.25%, about 0.05% to about 5%, about 0.05% to about 4.75%, about 0.05% to about 4.5%, about 0.05% to about 4.25%, about 0.05% to about 4%, about 0.05% to about 3.75%, about 0.05% to about 3.5%, about 0.05% to about 3.25%, about 0.05% to about 3%, about 0.05% to about 2.75%, about 0.05% to about 2.5%, about 0.05% to about 2.25%, about 0.05% to about 2%, about 0.05% to about 1.75%, about 0.05% to about 1.5%, about 0.05% to about 1.25%, about 0.05% to about 1%, about 0.05% to about 0.75%, about 0.05% to about 0.5%, about 0.05% to about 0.25%, about 0.5% to about 14.5%, about 1% to about 14%, about 1.5% to about 13.5%, about 2% to about 13%, about 2.5% to about 12.5%, about 3% to about 12%, about 3.5% to about 11.5%, about 4% to about 11%, about 4.5% to about 10.5%, about 5% to about 10%, about 5.5% to about 9.5%, about 6% to about 9%, about 6.5% to about 8.5%, about 7% to about 8%, about 2% to about 3%, about 2% to about 4%, about 2% to about 5%, about 2% to about 6%, about 2% to about 7%, about 2% to about 8%, about 2% to about 9%, about 2% to about 10%, about 2% to about 11%, about 2% to about 12%, about 2% to about 13%, about 2% to about 14%, about 3% to about 4%, about 3% to about 5%, about 3% to about 6%, about 3% to about 7%, about 3% to about 8%, about 3% to about 9%, about 3% to about 10%, about 3% to about 11%, about 3% to about 12%, about 3% to about 13%, about 3% to about 14%, about 4% to about 5%, about 4% to about 6%, about 4% to about 7%, about 4% to about 8%, about 4% to about 9%, about 4% to about 10%, about 4% to about 11%, about 4% to about 12%, about 4% to about 13%, about 4% to about 14%, about 5% to about 6%, about 5% to about 7%, about 5% to about 8%, about 5% to about 9%, about 5% to about 10%, about 5% to about 11%, about 5% to about 12%, about 5% to about 13%, about 5% to about 14%, about 6% to about 7%, about 6% to about 8%, about 6% to about 9%, about 6% to about 10%, about 6% to about 11%, about 6% to about 12%, about 6% to about 13%, about 6% to about 14%, about 7% to about 8%, about 7% to about 9%, about 7% to about 10%, about 7% to about 11%, about 7% to about 12%, about 7% to about 13%, about 7% to about 14%, about 8% to about 9%, about 8% to about 10%, about 8% to about 11%, about 8% to about 12%, about 8% to about 13%, about 8% to about 14%, about 9% to about 10%, about 9% to about 11%, about 9% to about 12%, about 9% to about 13%, about 9% to about 14%, about 10% to about 11%, about 10% to about 12%, about 10% to about 13%, about 10% to about 14%, about 11% to about 12%, about 11% to about 13%, about 11% to about 14%, about 12% to about 13%, about 12% to about 14%, or about 13% to about 14% by weight.

With respect to castor oil, contemplated insect, bacteria, and/or fungi control compositions can contain about 0.05%, 0.1%, 0.15%, 0.2%, 0.25%, 0.3%, 0.35%, 0.4%, 0.45%, 0.5%, 0.55%, 0.6%, 0.65%, 0.7%, 0.75%, 0.8%, 0.85%, 0.9%, 0.95%, 1%, 1.05%, 1.1%, 1.15%, 1.2%, 1.25%, 1.3%, 1.35%, 1.4%, 1.45%, 1.5%, 1.55%, 1.6%, 1.65%, 1.7%, 1.75%, 1.8%, 1.85%, 1.9%, 1.95%, 2%, 2.05%, 2.1%, 2.15%, 2.2%, 2.25%, 2.3%, 2.35%, 2.4%, 2.45%, 2.5%, 2.55%, 2.6%, 2.65%, 2.7%, 2.75%, 2.8%, 2.85%, 2.9%, 2.95%, 3%, 3.05%, 3.1%, 3.15%, 3.2%, 3.25%, 3.3%, 3.35%, 3.4%, 3.45%, 3.5%, 3.55%, 3.6%, 3.65%, 3.7%, 3.75%, 3.8%, 3.85%, 3.9%, 3.95%, 4%, 4.05%, 4.1%, 4.15%, 4.2%, 4.25%, 4.3%, 4.35%, 4.4%, 4.45%, 4.5%, 4.55%, 4.6%, 4.65%, 4.7%, 4.75%, 4.8%, 4.85%, 4.9%, 4.95%, 5%, 5.05%, 5.1%, 5.15%, 5.2%, 5.25%, 5.3%, 5.35%, 5.4%, 5.45%, 5.5%, 5.55%, 5.6%, 5.65%, 5.7%, 5.75%, 5.8%, 5.85%, 5.9%, 5.95%, 6%, 6.05%, 6.1%, 6.15%, 6.2%, 6.25%, 6.3%, 6.35%, 6.4%, 6.45%, 6.5%, 6.55%, 6.6%, 6.65%, 6.7%, 6.75%, 6.8%, 6.85%, 6.9%, 6.95%, 7%, 7.05%, 7.1%, 7.15%, 7.2%, 7.25%, 7.3%, 7.35%, 7.4%, 7.45%, 7.5%, 7.55%, 7.6%, 7.65%, 7.7%, 7.75%, 7.8%, 7.85%, 7.9%, 7.95%, 8%, 8.05%, 8.1%, 8.15%, 8.2%, 8.25%, 8.3%, 8.35%, 8.4%, 8.45%, 8.5%, 8.55%, 8.6%, 8.65%, 8.7%, 8.75%, 8.8%, 8.85%, 8.9%, 8.95%, 9%, 9.05%, 9.1%, 9.15%, 9.2%, 9.25%, 9.3%, 9.35%, 9.4%, 9.45%, 9.5%, 9.55%, 9.6%, 9.65%, 9.7%, 9.75%, 9.8%, 9.85%, 9.9%, 9.95%, 10%, 10.05%, 10.1%, 10.15%, 10.2%, 10.25%, 10.3%, 10.35%, 10.4%, 10.45%, 10.5%, 10.55%, 10.6%, 10.65%, 10.7%, 10.75%, 10.8%, 10.85%, 10.9%, 10.95%, 11%, 11.05%, 11.1%, 11.15%, 11.2%, 11.25%, 11.3%, 11.35%, 11.4%, 11.45%, 11.5%, 11.55%, 11.6%, 11.65%, 11.7%, 11.75%, 11.8%, 11.85%, 11.9%, 11.95%, 12%, 12.05%, 12.1%, 12.15%, 12.2%, 12.25%, 12.3%, 12.35%, 12.4%, 12.45%, 12.5%, 12.55%, 12.6%, 12.65%, 12.7%, 12.75%, 12.8%, 12.85%, 12.9%, 12.95%, 3%, 13.05%, 13.1%, 13.15%, 13.2%, 13.25%, 13.3%, 13.35%, 13.4%, 13.45%, 13.5%, 13.55%, 13.6%, 13.65%, 13.7%, 13.75%, 13.8%, 13.85%, 13.9%, 13.95%, 14%, 14.05%, 14.1%, 14.15%, 14.2%, 14.25%, 14.3%, 14.35%, 14.4%, 14.45%, 14.5%, 14.55%, 14.6%, 14.65%, 14.7%, 14.75%, 14.8%, 14.85%, 14.9%, 14.95%, 15%, 15.1%, 15.2%, 15.3%, 15.4%, 15.5%, 15.6%, 15.7%, 15.8%, 15.9%, 16%, 16.1%, 16.2%, 16.3%, 16.4%, 16.5%, 16.6%, 16.7%, 16.8%, 16.9%, 17%, 17.1%, 17.2%, 17.3%, 17.4%, 17.5%, 17.6%, 17.7%, 17.8%, 17.9%, 18%, 18.1%, 18.2%, 18.3%, 18.4%, 18.5%, 18.6%, 18.7%, 18.8%, 18.9%, 19%, 19.1%, 19.2%, 19.3%, 19.4%, 19.5%, 19.6%, 19.7%, 19.8%, 19.9%, or 20% by weight castor oil. These values of castor oil can also be expressed as ranges, for example, of from about 0.05% to about 20%, about 0.25% to about 20%, about 0.5% to about 20%, about 0.75% to about 20%, about 1% to about 20%, about 1.25% to about 20%, about 1.5% to about 20%, about 1.75% to about 20%, about 2% to about 20%, about 2.25% to about 20%, about 2.5% to about 20%, about 2.75% to about 20%, about 3% to about 20%, about 3.25% to about 20%, about 3.5% to about 20%, about 3.75% to about 20%, about 4% to about 20%, about 4.25% to about 20%, about 4.5% to about 20%, about 4.75% to about 20%, about 5% to about 20%, about 5.25% to about 20%, about 5.5% to about 20%, about 5.75% to about 20%, about 6% to about 20%, about 6.25% to about 20%, about 6.5% to about 20%, about 6.75% to about 20%, about 8% to about 20%, about 8.25% to about 20%, about 8.5% to about 20%, about 8.75% to about 20%, about 9% to about 20%, about 9.25% to about 20%, about 9.5% to about 20%, about 9.75% to about 20%, about 10% to about 20%, about 10.25% to about 20%, about 10.5% to about 20%, about 10.75% to about 20%, about 11% to about 20%, about 11.25% to about 20%, about 11.5% to about 20%, about 11.75% to about 20%, about 12% to about 20%, about 12.25% to about 20%, about 12.5% to about 20%, about 12.75% to about 20%, about 13% to about 20%, about 13.25% to about 20%, about 13.5% to about 20%, about 13.75% to about 20%, about 14% to about 20%, about 14.25% to about 20%, about 14.5% to about 20%, about 14.75% to about 20%, about 15% to about 20%, about 15.25% to about 20%, about 15.5% to about 20%, about 15.75% to about 20%, about 16% to about 20%, about 16.25% to about 20%, about 16.5% to about 20%, about 16.75% to about 20%, about 17% to about 20%, about 17.25% to about 20%, about 17.5% to about 20%, about 17.75% to about 20%, about 18% to about 20%, about 18.25% to about 20%, about 18.5% to about 20%, about 18.75% to about 20%, about 19% to about 20%, about 19.25% to about 20%, about 19.5% to about 20%, about 19.75% to about 20%, about 0.05% to about 19.75%, about 0.05% to about 19.5%, about 0.05% to about 19.25%, about 0.05% to about 19%, about 0.05% to about 18.75%, about 0.05% to about 18.5%, about 0.05% to about 18.25%, about 0.05% to about 18%, about 0.05% to about 17.75%, about 0.05% to about 17.5%, about 0.05% to about 17.25%, about 0.05% to about 17%, about 0.05% to about 16.75%, about 0.05% to about 16.5%, about 0.05% to about 16.25%, about 0.05% to about 16%, about 0.05% to about 15.75%, about 0.05% to about 15.5%, about 0.05% to about 15.25%, about 0.05% to about 15%, about 0.05% to about 14.75%, about 0.05% to about 14.5%, about 0.05% to about 14.25%, about 0.05% to about 14%, about 0.05% to about 13.75%, about 0.05% to about 13.5%, about 0.05% to about 13.25%, about 0.05% to about 13%, about 0.05% to about 12.75%, about 0.05% to about 12.5%, about 0.05% to about 12.25%, about 0.05% to about 12%, about 0.05% to about 11.75%, about 0.05% to about 11.5%, about 0.05% to about 11.25%, about 0.05% to about 11%, about 0.05% to about 10.75%, about 0.05% to about 10.5%, about 0.05% to about 10.25%, about 0.05% to about 10%, about 0.05% to about 9.75%, about 0.05% to about 9.5%, about 0.05% to about 9.5%, about 0.05% to about 9.25%, about 0.05% to about 9%, about 0.05% to about 8.75%, about 0.05% to about 8.5%, about 0.05% to about 8.25%, about 0.05% to about 8%, about 0.05% to about 7.75%, about 0.05% to about 7.5%, about 0.05% to about 7.25%, about 0.05% to about 7%, about 0.05% to about 6.75%, about 0.05% to about 6.5%, about 0.05% to about 6.25%, about 0.05% to about 6%, about 0.05% to about 5.75%, about 0.05% to about 5.5%, about 0.05% to about 5.25%, about 0.05% to about 5%, about 0.05% to about 4.75%, about 0.05% to about 4.5%, about 0.05% to about 4.25%, about 0.05% to about 4%, about 0.05% to about 3.75%, about 0.05% to about 3.5%, about 0.05% to about 3.25%, about 0.05% to about 3%, about 0.05% to about 2.75%, about 0.05% to about 2.5%, about 0.05% to about 2.25%, about 0.05% to about 2%, about 0.05% to about 1.75%, about 0.05% to about 1.5%, about 0.05% to about 1.25%, about 0.05% to about 1%, about 0.05% to about 0.75%, about 0.05% to about 0.5%, about 0.05% to about 0.25%, about 0.5% to about 19.5%, about 1% to about 19%, about 1.5% to about 18.5%, about 2% to about 18%, about 2.5% to about 17.5%, about 3% to about 17%, about 3.5% to about 16.5%, about 4% to about 16%, about 4.5% to about 15.5%, about 5% to about 15%, about 5.5% to about 14.5%, about 6% to about 14%, about 6.5% to about 13.5%, about 7% to about 13%, about 7.5% to about 12.5%, about 8% to about 12%, about 8.5% to about 11.5%, about 9% to about 11%, about 9.5% to about 10.5%, about 2% to about 3%, about 2% to about 4%, about 2% to about 5%, about 2% to about 6%, about 2% to about 7%, about 2% to about 8%, about 2% to about 9%, about 2% to about 10%, about 2% to about 11%, about 2% to about 12%, about 2% to about 13%, about 2% to about 14%, about 2% to about 15%, about 2% to about 16%, about 2% to about 17%, about 2% to about 18%, about 2% to about 19%, about 3% to about 4%, about 3% to about 5%, about 3% to about 6%, about 3% to about 7%, about 3% to about 8%, about 3% to about 9%, about 3% to about 10%, about 3% to about 11%, about 3% to about 12%, about 3% to about 13%, about 3% to about 14%, about 3% to about 15%, about 3% to about 16%, about 3% to about 17%, about 3% to about 18%, about 3% to about 19%, about 4% to about 5%, about 4% to about 6%, about 4% to about 7%, about 4% to about 8%, about 4% to about 9%, about 4% to about 10%, about 4% to about 11%, about 4% to about 12%, about 4% to about 13%, about 4% to about 14%, about 4% to about 15%, about 4% to about 16%, about 4% to about 17%, about 4% to about 18%, about 4% to about 19%, about 5% to about 6%, about 5% to about 7%, about 5% to about 8%, about 5% to about 9%, about 5% to about 10%, about 5% to about 11%, about 5% to about 12%, about 5% to about 13%, about 5% to about 14%, about 5% to about 15%, about 5% to about 16%, about 5% to about 17%, about 5% to about 18%, about 5% to about 19%, about 6% to about 7%, about 6% to about 8%, about 6% to about 9%, about 6% to about 10%, about 6% to about 11%, about 6% to about 12%, about 6% to about 13%, about 6% to about 14%, about 6% to about 15%, about 6% to about 16%, about 6% to about 17%, about 6% to about 18%, about 6% to about 19%, about 7% to about 8%, about 7% to about 9%, about 7% to about 10%, about 7% to about 11%, about 7% to about 12%, about 7% to about 13%, about 7% to about 14%, about 7% to about 15%, about 7% to about 16%, about 7% to about 17%, about 7% to about 18%, about 7% to about 19%, about 8% to about 9%, about 8% to about 10%, about 8% to about 11%, about 8% to about 12%, about 8% to about 13%, about 8% to about 14%, about 8% to about 15%, about 8% to about 16%, about 8% to about 17%, about 8% to about 18%, about 8% to about 19%, about 9% to about 10%, about 9% to about 11%, about 9% to about 12%, about 9% to about 13%, about 9% to about 14%, about 9% to about 15%, about 9% to about 16%, about 9% to about 17%, about 9% to about 18%, about 9% to about 19%, about 10% to about 11%, about 10% to about 12%, about 10% to about 13%, about 10% to about 14%, about 10% to about 15%, about 10% to about 16%, about 10% to about 17%, about 10% to about 18%, about 10% to about 19%, about 11% to about 12%, about 11% to about 13%, about 11% to about 14%, about 11% to about 15%, about 11% to about 16%, about 11% to about 17%, about 11% to about 18%, about 11% to about 19%, about 12% to about 13%, about 12% to about 14%, about 12% to about 15%, about 12% to about 16%, about 12% to about 17%, about 12% to about 18%, about 12% to about 19%, about 13% to about 14%, about 13% to about 15%, about 13% to about 16%, about 13% to about 17%, about 13% to about 18%, about 13% to about 19%, about 14% to about 15%, about 14% to about 16%, about 14% to about 17%, about 14% to about 18%, about 14% to about 19%, about 15% to about 16%, about 15% to about 17%, about 15% to about 18%, about 15% to about 19%, about 16% to about 17%, about 16% to about 18%, about 16% to about 19%, about 17% to about 18%, about 17% to about 19%, or about 18% to about 19% by weight.

Potassium sorbate and sodium sorbate are preservatives and antibacterials in food, drinks (*e.g.*, wines), and cosmetics. The insect, bacteria, and/or fungi control composition of the present disclosure may contain about 0.05%, 0.1%, 0.15%, 0.2%, 0.25%, 0.3%, 0.35%, 0.4%, 0.45%, 0.5%, 0.55%, 0.6%, 0.65%, 0.7%, 0.75%, 0.8%, 0.85%, 0.9%, 0.95%, 1%, 1.05%, 1.1%, 1.15%, 1.2%, 1.25%, 1.3%, 1.35%, 1.4%, 1.45%, 1.5%, 1.55%, 1.6%, 1.65%, 1.7%, 1.75%, 1.8%, 1.85%, 1.9%, 1.95%, 2%, 2.05%, 2.1%, 2.15%, 2.2%, 2.25%, 2.3%, 2.35%, 2.4%, 2.45%, 2.5%, 2.55%, 2.6%, 2.65%, 2.7%, 2.75%, 2.8%, 2.85%, 2.9%, 2.95%, 3%, 3.05%, 3.1%, 3.15%, 3.2%, 3.25%, 3.3%, 3.35%, 3.4%, 3.45%, 3.5%, 3.55%, 3.6%, 3.65%, 3.7%, 3.75%, 3.8%, 3.85%, 3.9%, 3.95%, 4%, 4.05%, 4.1%, 4.15%, 4.2%, 4.25%, 4.3%, 4.35%, 4.4%, 4.45%, 4.5%, 4.55%, 4.6%, 4.65%, 4.7%, 4.75%, 4.8%, 4.85%, 4.9%, 4.95%, 5%, 5.05%, 5.1%, 5.15%, 5.2%, 5.25%, 5.3%, 5.35%, 5.4%, 5.45%, 5.5%, 5.55%, 5.6%, 5.65%, 5.7%, 5.75%, 5.8%, 5.85%, 5.9%, 5.95%, 6%, 6.05%, 6.1%, 6.15%, 6.2%, 6.25%, 6.3%, 6.35%, 6.4%, 6.45%, 6.5%, 6.55%, 6.6%, 6.65%, 6.7%, 6.75%, 6.8%, 6.85%, 6.9%, 6.95%, or 7% by weight potassium sorbate, sodium sorbate, or a combination thereof. These values of potassium sorbate, sodium sorbate, or a combination thereof can also be expressed as ranges, for example, of from about 0.05% to about 7%, about 0.25% to about 7%, about 0.5% to about 7%, about 0.75% to about 7%, about 1% to about 7%, about 1.25% to about 7%, about 1.5% to about 7%, about 1.75% to about 7%, about 2% to about 7%, about 2.25% to about 7%, about 2.5% to about 7%, about 2.75% to about 7%, about 3% to about 7%, about 3.25% to about 7%, about 3.5% to about 7%, about 3.75% to about 7%, about 4% to about 7%, about 4.25% to about 7%, about 4.5% to about 7%, about 4.75% to about 7%, about 5% to about 7%, about 5.25% to about 7%, about 5.5% to about 7%, about 5.75% to about 7%, about 6% to about 7%, about 6.25% to about 7%, about 6.5% to about 7%, about 6.75% to about 7%, about 0.05% to about 6.75%, about 0.05% to about 6.5%, about 0.05% to about 6.25%, about 0.05% to about 6%, about 0.05% to about 5.75%, about 0.05% to about 5.5%, about 0.05% to about 5.25%, about 0.05% to about 5%, about 0.05% to about 4.75%, about 0.05% to about 4.5%, about 0.05% to about 4.25%, about 0.05% to about 4%, about 0.05% to about 3.75%, about 0.05% to about 3.5%, about 0.05% to about 3.25%, about 0.05% to about 3%, about 0.05% to about 2.75%, about 0.05% to about 2.5%, about 0.05% to about 2.25%, about 0.05% to about 2%, about 0.05% to about 1.75%, about 0.05% to about 1.5%, about 0.05% to about 1.25%, about 0.05% to about 1%, about 0.05% to about 0.75%, about 0.05% to about 0.5%, about 0.05% to about 0.25%, about 0.5% to about 6.5%, about 1% to about 6%, about 1.5% to about 5.5%, about 2% to about 5%, about 2.5% to about 4.5%, about 3% to about 4%, about 2% to about 3%, about 2% to about 4%, about 2% to about 5%, about 2% to about 6%, about 2% to about 7%, about 3% to about 4%, about 3% to about 5%, about 3% to about 6%, about 3% to about 7%, about 4% to about 5%, about 4% to about 6%, about 4% to about 7%, about 5% to about 6%, about 5% to about 7%, or about 6% to about 7% by weight.

Soaps are salts of fatty acids and are surfactants, thickeners, lubricants, and catalyst precursors. With respect to soap, contemplated insect, bacteria, and/or fungi control compositions can contain about 0.05%, 0.1%, 0.15%, 0.2%, 0.25%, 0.3%, 0.35%, 0.4%, 0.45%, 0.5%, 0.55%, 0.6%, 0.65%, 0.7%, 0.75%, 0.8%, 0.85%, 0.9%, 0.95%, 1%, 1.05%, 1.1%, 1.15%, 1.2%, 1.25%, 1.3%, 1.35%, 1.4%, 1.45%, 1.5%, 1.55%, 1.6%, 1.65%, 1.7%, 1.75%, 1.8%, 1.85%, 1.9%, 1.95%, 2%, 2.05%, 2.1%, 2.15%, 2.2%, 2.25%, 2.3%, 2.35%, 2.4%, 2.45%, 2.5%, 2.55%, 2.6%, 2.65%, 2.7%, 2.75%, 2.8%, 2.85%, 2.9%, 2.95%, 3%, 3.05%, 3.1%, 3.15%, 3.2%, 3.25%, 3.3%, 3.35%, 3.4%, 3.45%, 3.5%, 3.55%, 3.6%, 3.65%, 3.7%, 3.75%, 3.8%, 3.85%, 3.9%, 3.95%, 4%, 4.05%, 4.1%, 4.15%, 4.2%, 4.25%, 4.3%, 4.35%, 4.4%, 4.45%, 4.5%, 4.55%, 4.6%, 4.65%, 4.7%, 4.75%, 4.8%, 4.85%, 4.9%, 4.95%, 5%, 5.05%, 5.1%, 5.15%, 5.2%, 5.25%, 5.3%, 5.35%, 5.4%, 5.45%, 5.5%, 5.55%, 5.6%, 5.65%, 5.7%, 5.75%, 5.8%, 5.85%, 5.9%, 5.95%, 6%, 6.05%, 6.1%, 6.15%, 6.2%, 6.25%, 6.3%, 6.35%, 6.4%, 6.45%, 6.5%, 6.55%, 6.6%, 6.65%, 6.7%, 6.75%, 6.8%, 6.85%, 6.9%, 6.95%, 7%, 7.05%, 7.1%, 7.15%, 7.2%, 7.25%, 7.3%, 7.35%, 7.4%, 7.45%, 7.5%, 7.55%, 7.6%, 7.65%, 7.7%, 7.75%, 7.8%, 7.85%, 7.9%, 7.95%, 8%, 8.05%, 8.1%, 8.15%, 8.2%, 8.25%, 8.3%, 8.35%, 8.4%, 8.45%, 8.5%, 8.55%, 8.6%, 8.65%, 8.7%, 8.75%, 8.8%, 8.85%, 8.9%, 8.95%, 9%, 9.05%, 9.1%, 9.15%, 9.2%, 9.25%, 9.3%, 9.35%, 9.4%, 9.45%, 9.5%, 9.55%, 9.6%, 9.65%, 9.7%, 9.75%, 9.8%, 9.85%, 9.9%, 9.95%, 10%, 10.05%, 10.1%, 10.15%, 10.2%, 10.25%, 10.3%, 10.35%, 10.4%, 10.45%, 10.5%, 10.55%, 10.6%, 10.65%, 10.7%, 10.75%, 10.8%, 10.85%, 10.9%, 10.95%, 11%, 11.05%, 11.1%, 11.15%, 11.2%, 11.25%, 11.3%, 11.35%, 11.4%, 11.45%, 11.5%, 11.55%, 11.6%, 11.65%, 11.7%, 11.75%, 11.8%, 11.85%, 11.9%, 11.95%, 12%, 12.05%, 12.1%, 12.15%, 12.2%, 12.25%, 12.3%, 12.35%, 12.4%, 12.45%, 12.5%, 12.55%, 12.6%, 12.65%, 12.7%, 12.75%, 12.8%, 12.85%, 12.9%, 12.95%, 3%, 13.05%, 13.1%, 13.15%, 13.2%, 13.25%, 13.3%, 13.35%, 13.4%, 13.45%, 13.5%, 13.55%, 13.6%, 13.65%, 13.7%, 13.75%, 13.8%, 13.85%, 13.9%, 13.95%, 14%, 14.05%, 14.1%, 14.15%, 14.2%, 14.25%, 14.3%, 14.35%, 14.4%, 14.45%, 14.5%, 14.55%, 14.6%, 14.65%, 14.7%, 14.75%, 14.8%, 14.85%, 14.9%, 14.95%, 15%, 15.1%, 15.2%, 15.3%, 15.4%, 15.5%, 15.6%, 15.7%, 15.8%, 15.9%, 16%, 16.1%, 16.2%, 16.3%, 16.4%, 16.5%, 16.6%, 16.7%, 16.8%, 16.9%, 17%, 17.1%, 17.2%, 17.3%, 17.4%, 17.5%, 17.6%, 17.7%, 17.8%, 17.9%, 18%, 18.1%, 18.2%, 18.3%, 18.4%, 18.5%, 18.6%, 18.7%, 18.8%, 18.9%, 19%, 19.1%, 19.2%, 19.3%, 19.4%, 19.5%, 19.6%, 19.7%, 19.8%, 19.9%, 20%, 20.5%, 21%, 21.5%, 22%, 22.5%, 23%, 23.5%, 24%, 24.5%, 25%, 25.5%, 26%, 26.5%, 27%, 27.5%, 28%, 28.5%, 29%, 29.5%, 30%, 30.5%, 31%, 31.5%, 32%, 32.5%, 33%, 33.5%, 34%, 34.5%, or 35% by weight soap. These values of soap can also be expressed as ranges, for example, of from about 0.05% to about 35%, about 0.25% to about 35%, about 0.5% to about 35%, about 0.75% to about 35%, about 1% to about 35%, about 1.25% to about 35%, about 1.5% to about 35%, about 1.75% to about 35%, about 2% to about 35%, about 2.25% to about 35%, about 2.5% to about 35%, about 2.75% to about 35%, about 3% to about 35%, about 3.25% to about 35%, about 3.5% to about 35%, about 3.75% to about 35%, about 4% to about 35%, about 4.25% to about 35%, about 4.5% to about 35%, about 4.75% to about 35%, about 5% to about 35%, about 5.25% to about 35%, about 5.5% to about 35%, about 5.75% to about 35%, about 6% to about 35%, about 6.25% to about 35%, about 6.5% to about 35%, about 6.75% to about 35%, about 8% to about 35%, about 8.25% to about 35%, about 8.5% to about 35%, about 8.75% to about 35%, about 9% to about 35%, about 9.25% to about 35%, about 9.5% to about 35%, about 9.75% to about 35%, about 10% to about 35%, about 10.25% to about 35%, about 10.5% to about 35%, about 10.75% to about 35%, about 11% to about 35%, about 11.25% to about 35%, about 11.5% to about 35%, about 11.75% to about 35%, about 12% to about 35%, about 12.25% to about 35%, about 12.5% to about 35%, about 12.75% to about 35%, about 13% to about 35%, about 13.25% to about 35%, about 13.5% to about 35%, about 13.75% to about 35%, about 14% to about 35%, about 14.25% to about 35%, about 14.5% to about 35%, about 14.75% to about 35%, about 15% to about 35%, about 15.25% to about 35%, about 15.5% to about 35%, about 15.75% to about 35%, about 16% to about 35%, about 16.25% to about 35%, about 16.5% to about 35%, about 16.75% to about 35%, about 17% to about 35%, about 17.25% to about 35%, about 17.5% to about 35%, about 17.75% to about 35%, about 18% to about 35%, about 18.25% to about 35%, about 18.5% to about 35%, about 18.75% to about 35%, about 19% to about 35%, about 19.25% to about 35%, about 19.5% to about 35%, about 19.75% to about 35%, about 20% to about 35%, about 20.5% to about 35%, about 21% to about 35%, about 21.5% to about 35%, about 22% to about 35%, about 22.5% to about 35%, about 23% to about 35%, about 23.5% to about 35%, about 24% to about 35%, about 24.5% to about 35%, about 25% to about 35%, about 25.5% to about 35%, about 26% to about 35%, about 26.5% to about 35%, about 27% to about 35%, about 27.5% to about 35%, about 28% to about 35%, about 28.5% to about 35%, about 29% to about 35%, about 29.5% to about 35%, about 30% to about 35%, about 30.5% to about 35%, about 31% to about 35%, about 31.5% to about 35%, about 32% to about 35%, about 32.5% to about 35%, about 33% to about 35%, about 33.5% to about 35%, about 34% to about 35%, about 34.5% to about 35%, about 0.05% to about 34.5%, about 0.05% to about 34%, about 0.05% to about 33.5%, about 0.05% to about 33%, about 0.05% to about 32.5%, about 0.05% to about 32%, about 0.05% to about 31.5%, about 0.05% to about 31%, about 0.05% to about 30.5%, about 0.05% to about 30%, about 0.05% to about 29.5%, about 0.05% to about 29%, about 0.05% to about 28.5%, about 0.05% to about 27%, about 0.05% to about 26.5%, about 0.05% to about 26%, about 0.05% to about 25.5%, about 0.05% to about 25%, about 0.05% to about 24.5%, about 0.05% to about 24%, about 0.05% to about 23.5%, about 0.05% to about 23%, about 0.05% to about 22.5%, about 0.05% to about 22%, about 0.05% to about 21.5%, about 0.05% to about 21%, about 0.05% to about 20.5%, about 0.05% to about 20%, about 0.05% to about 19.75%, about 0.05% to about 19.5%, about 0.05% to about 19.25%, about 0.05% to about 19%, about 0.05% to about 18.75%, about 0.05% to about 18.5%, about 0.05% to about 18.25%, about 0.05% to about 18%, about 0.05% to about 17.75%, about 0.05% to about 17.5%, about 0.05% to about 17.25%, about 0.05% to about 17%, about 0.05% to about 16.75%, about 0.05% to about 16.5%, about 0.05% to about 16.25%, about 0.05% to about 16%, about 0.05% to about 15.75%, about 0.05% to about 15.5%, about 0.05% to about 15.25%, about 0.05% to about 15%, about 0.05% to about 14.75%, about 0.05% to about 14.5%, about 0.05% to about 14.25%, about 0.05% to about 14%, about 0.05% to about 13.75%, about 0.05% to about 13.5%, about 0.05% to about 13.25%, about 0.05% to about 13%, about 0.05% to about 12.75%, about 0.05% to about 12.5%, about 0.05% to about 12.25%, about 0.05% to about 12%, about 0.05% to about 11.75%, about 0.05% to about 11.5%, about 0.05% to about 11.25%, about 0.05% to about 11%, about 0.05% to about 10.75%, about 0.05% to about 10.5%, about 0.05% to about 10.25%, about 0.05% to about 10%, about 0.05% to about 9.75%, about 0.05% to about 9.5%, about 0.05% to about 9.5%, about 0.05% to about 9.25%, about 0.05% to about 9%, about 0.05% to about 8.75%, about 0.05% to about 8.5%, about 0.05% to about 8.25%, about 0.05% to about 8%, about 0.05% to about 7.75%, about 0.05% to about 7.5%, about 0.05% to about 7.25%, about 0.05% to about 7%, about 0.05% to about 6.75%, about 0.05% to about 6.5%, about 0.05% to about 6.25%, about 0.05% to about 6%, about 0.05% to about 5.75%, about 0.05% to about 5.5%, about 0.05% to about 5.25%, about 0.05% to about 5%, about 0.05% to about 4.75%, about 0.05% to about 4.5%, about 0.05% to about 4.25%, about 0.05% to about 4%, about 0.05% to about 3.75%, about 0.05% to about 3.5%, about 0.05% to about 3.25%, about 0.05% to about 3%, about 0.05% to about 2.75%, about 0.05% to about 2.5%, about 0.05% to about 2.25%, about 0.05% to about 2%, about 0.05% to about 1.75%, about 0.05% to about 1.5%, about 0.05% to about 1.25%, about 0.05% to about 1%, about 0.05% to about 0.75%, about 0.05% to about 0.5%, about 0.05% to about 0.25%, about 0.5% to about 34.5%, about 1% to about 34%, about 1.5% to about 33.5%, about 2% to about 33%, about 2.5% to about 32.5%, about 3% to about 32%, about 3.5% to about 31.5%, about 4% to about 31%, about 4.5% to about 30.5%, about 5% to about 30%, about 5.5% to about 29.5%, about 6% to about 29%, about 6.5% to about 28.5%, about 7% to about 28%, about 7.5% to about 27.5%, about 8% to about 27%, about 8.5% to about 26.5%, about 9% to about 26%, about 9.5% to about 25.5%, about 10% to about 25%, about 10.5% to about 24.5%, about 11% to about 24%, about 11.5% to about 23.5%, about 12% to about 23%, about 12.5% to about 22.5%, about 13% to about 22%, about 13.5% to about 21.5%, about 14% to about 21%, about 14.5% to about 20.5%, about 15% to about 20%, about 15.5% to about 19.5%, about 16% to about 19%, about 16.5% to about 18.5%, about 17% to about 18%, about 2% to about 3%, about 2% to about 4%, about 2% to about 5%, about 2% to about 6%, about 2% to about 7%, about 2% to about 8%, about 2% to about 9%, about 2% to about 10%, about 2% to about 11%, about 2% to about 12%, about 2% to about 13%, about 2% to about 14%, about 2% to about 15%, about 2% to about 16%, about 2% to about 17%, about 2% to about 18%, about 2% to about 19%, about 2% to about 20%, about 2% to about 21%, about 2% to about 22%, about 2% to about 23%, about 2% to about 24%, about 2% to about 25%, about 2% to about 26%, about 2% to about 27%, about 2% to about 28%, about 2% to about 29%, about 2% to about 30%, about 2% to about 31%, about 2% to about 32%, about 2% to about 33%, about 2% to about 34%, about 3% to about 4%, about 3% to about 5%, about 3% to about 6%, about 3% to about 7%, about 3% to about 8%, about 3% to about 9%, about 3% to about 10%, about 3% to about 11%, about 3% to about 12%, about 3% to about 13%, about 3% to about 14%, about 3% to about 15%, about 3% to about 16%, about 3% to about 17%, about 3% to about 18%, about 3% to about 19%, about 3% to about 20%, about 3% to about 21%, about 3% to about 22%, about 3% to about 23%, about 3% to about 24%, about 3% to about 25%, about 3% to about 26%, about 3% to about 27%, about 3% to about 28%, about 3% to about 29%, about 3% to about 30%, about 3% to about 31%, about 3% to about 32%, about 3% to about 33%, about 3% to about 34%, about 4% to about 5%, about 4% to about 6%, about 4% to about 7%, about 4% to about 8%, about 4% to about 9%, about 4% to about 10%, about 4% to about 11%, about 4% to about 12%, about 4% to about 13%, about 4% to about 14%, about 4% to about 15%, about 4% to about 16%, about 4% to about 17%, about 4% to about 18%, about 4% to about 19%, about 4% to about 20%, about 4% to about 21%, about 4% to about 22%, about 4% to about 23%, about 4% to about 24%, about 4% to about 25%, about 4% to about 26%, about 4% to about 27%, about 4% to about 28%, about 4% to about 29%, about 4% to about 30%, about 4% to about 31%, about 4% to about 32%, about 4% to about 33%, about 4% to about 34%, about 5% to about 6%, about 5% to about 7%, about 5% to about 8%, about 5% to about 9%, about 5% to about 10%, about 5% to about 11%, about 5% to about 12%, about 5% to about 13%, about 5% to about 14%, about 5% to about 15%, about 5% to about 16%, about 5% to about 17%, about 5% to about 18%, about 5% to about 19%, about 5% to about 20%, about 5% to about 21%, about 5% to about 22%, about 5% to about 23%, about 5% to about 24%, about 5% to about 25%, about 5% to about 26%, about 5% to about 27%, about 5% to about 28%, about 5% to about 29%, about 5% to about 30%, about 5% to about 31%, about 5% to about 32%, about 5% to about 33%, about 5% to about 34%, about 6% to about 7%, about 6% to about 8%, about 6% to about 9%, about 6% to about 10%, about 6% to about 11%, about 6% to about 12%, about 6% to about 13%, about 6% to about 14%, about 6% to about 15%, about 6% to about 16%, about 6% to about 17%, about 6% to about 18%, about 6% to about 19%, about 6% to about 20%, about 6% to about 21%, about 6% to about 22%, about 6% to about 23%, about 6% to about 24%, about 6% to about 25%, about 6% to about 26%, about 6% to about 27%, about 6% to about 28%, about 6% to about 29%, about 6% to about 30%, about 6% to about 31%, about 6% to about 32%, about 6% to about 33%, about 6% to about 34%, about 7% to about 8%, about 7% to about 9%, about 7% to about 10%, about 7% to about 11%, about 7% to about 12%, about 7% to about 13%, about 7% to about 14%, about 7% to about 15%, about 7% to about 16%, about 7% to about 17%, about 7% to about 18%, about 7% to about 19%, about 7% to about 20%, about 7% to about 21%, about 7% to about 22%, about 7% to about 23%, about 7% to about 24%, about 7% to about 25%, about 7% to about 26%, about 7% to about 27%, about 7% to about 28%, about 7% to about 29%, about 7% to about 30%, about 7% to about 31%, about 7% to about 32%, about 7% to about 33%, about 7% to about 34%, about 8% to about 9%, about 8% to about 10%, about 8% to about 11%, about 8% to about 12%, about 8% to about 13%, about 8% to about 14%, about 8% to about 15%, about 8% to about 16%, about 8% to about 17%, about 8% to about 18%, about 8% to about 19%, about 8% to about 20%, about 8% to about 21%, about 8% to about 22%, about 8% to about 23%, about 8% to about 24%, about 8% to about 25%, about 8% to about 26%, about 8% to about 27%, about 8% to about 28%, about 8% to about 29%, about 8% to about 30%, about 8% to about 31%, about 8% to about 32%, about 8% to about 33%, about 8% to about 34%, about 9% to about 10%, about 9% to about 11%, about 9% to about 12%, about 9% to about 13%, about 9% to about 14%, about 9% to about 15%, about 9% to about 16%, about 9% to about 17%, about 9% to about 18%, about 9% to about 19%, about 9% to about 20%, about 9% to about 21%, about 9% to about 22%, about 9% to about 23%, about 9% to about 24%, about 9% to about 25%, about 9% to about 26%, about 9% to about 27%, about 9% to about 28%, about 9% to about 29%, about 9% to about 30%, about 9% to about 31%, about 9% to about 32%, about 9% to about 33%, about 9% to about 34%, about 10% to about 11%, about 10% to about 12%, about 10% to about 13%, about 10% to about 14%, about 10% to about 15%, about 10% to about 16%, about 10% to about 17%, about 10% to about 18%, about 10% to about 19%, about 10% to about 20%, about 10% to about 21%, about 10% to about 22%, about 10% to about 23%, about 10% to about 24%, about 10% to about 25%, about 10% to about 26%, about 10% to about 27%, about 10% to about 28%, about 10% to about 29%, about 10% to about 30%, about 10% to about 31%, about 10% to about 32%, about 10% to about 33%, about 10% to about 34%, about 11% to about 12%, about 11% to about 13%, about 11% to about 14%, about 11% to about 15%, about 11% to about 16%, about 11% to about 17%, about 11% to about 18%, about 11% to about 19%, about 11% to about 20%, about 11% to about 21%, about 11% to about 22%, about 11% to about 23%, about 11% to about 24%, about 11% to about 25%, about 11% to about 26%, about 11% to about 27%, about 11% to about 28%, about 11% to about 29%, about 11% to about 30%, about 11% to about 31%, about 11% to about 32%, about 11% to about 33%, about 11% to about 34%, about 12% to about 13%, about 12% to about 14%, about 12% to about 15%, about 12% to about 16%, about 12% to about 17%, about 12% to about 18%, about 12% to about 19%, about 12% to about 20%, about 12% to about 21%, about 12% to about 22%, about 12% to about 23%, about 12% to about 24%, about 12% to about 25%, about 12% to about 26%, about 12% to about 27%, about 12% to about 28%, about 12% to about 29%, about 12% to about 30%, about 12% to about 31%, about 12% to about 32%, about 12% to about 33%, about 12% to about 34%, about 13% to about 14%, about 13% to about 15%, about 13% to about 16%, about 13% to about 17%, about 13% to about 18%, about 13% to about 19%, about 13% to about 20%, about 13% to about 21%, about 13% to about 22%, about 13% to about 23%, about 13% to about 24%, about 13% to about 25%, about 13% to about 26%, about 13% to about 27%, about 13% to about 28%, about 13% to about 29%, about 13% to about 30%, about 13% to about 31%, about 13% to about 32%, about 13% to about 33%, about 13% to about 34%, about 14% to about

EP 4 646 932 A2

15%, about 14% to about 16%, about 14% to about 17%, about 14% to about 18%, about 14% to about 19%, about 14% to about 20%, about 14% to about 21%, about 14% to about 22%, about 14% to about 23%, about 14% to about 24%, about 14% to about 25%, about 14% to about 26%, about 14% to about 27%, about 14% to about 28%, about 14% to about 29%, about 14% to about 30%, about 14% to about 31%, about 14% to about 32%, about 14% to about 33%, about 14% to about 34%, about 15% to about 16%, about 15% to about 17%, about 15% to about 18%, about 15% to about 19%, about 15% to about 20%, about 15% to about 21%, about 15% to about 22%, about 15% to about 23%, about 15% to about 24%, about 15% to about 25%, about 15% to about 26%, about 15% to about 27%, about 15% to about 28%, about 15% to about 29%, about 15% to about 30%, about 15% to about 31%, about 15% to about 32%, about 15% to about 33%, about 15% to about 34%, about 16% to about 17%, about 16% to about 18%, about 16% to about 19%, about 16% to about 20%, about 16% to about 21%, about 16% to about 22%, about 16% to about 23%, about 16% to about 24%, about 16% to about 25%, about 16% to about 26%, about 16% to about 27%, about 16% to about 28%, about 16% to about 29%, about 16% to about 30%, about 16% to about 31%, about 16% to about 32%, about 16% to about 33%, about 16% to about 34%, about 17% to about 18%, about 17% to about 19%, about 17% to about 20%, about 17% to about 21%, about 17% to about 22%, about 17% to about 23%, about 17% to about 24%, about 17% to about 25%, about 17% to about 26%, about 17% to about 27%, about 17% to about 28%, about 17% to about 29%, about 17% to about 30%, about 17% to about 31%, about 17% to about 32%, about 17% to about 33%, about 17% to about 34%, about 18% to about 19%, about 18% to about 20%, about 18% to about 21%, about 18% to about 22%, about 18% to about 23%, about 18% to about 24%, about 18% to about 25%, about 18% to about 26%, about 18% to about 27%, about 18% to about 28%, about 18% to about 29%, about 18% to about 30%, about 18% to about 31%, about 18% to about 32%, about 18% to about 33%, about 18% to about 34%, about 19% to about 20%, about 19% to about 21%, about 19% to about 22%, about 19% to about 23%, about 19% to about 24%, about 19% to about 25%, about 19% to about 26%, about 19% to about 27%, about 19% to about 28%, about 19% to about 29%, about 19% to about 30%, about 19% to about 31%, about 19% to about 32%, about 19% to about 33%, about 19% to about 34%, about 20% to about 21%, about 20% to about 22%, about 20% to about 23%, about 20% to about 24%, about 20% to about 25%, about 20% to about 26%, about 20% to about 27%, about 20% to about 28%, about 20% to about 29%, about 20% to about 30%, about 20% to about 31%, about 20% to about 32%, about 20% to about 33%, about 20% to about 34%, about 21% to about 22%, about 21% to about 23%, about 21% to about 24%, about 21% to about 25%, about 21% to about 26%, about 21% to about 27%, about 21% to about 28%, about 21% to about 29%, about 21% to about 30%, about 21% to about 31%, about 21% to about 32%, about 21% to about 33%, about 21% to about 34%, about 22% to about 23%, about 22% to about 24%, about 22% to about 25%, about 22% to about 26%, about 22% to about 27%, about 22% to about 28%, about 22% to about 29%, about 22% to about 30%, about 22% to about 31%, about 22% to about 32%, about 22% to about 33%, about 22% to about 34%, about 23% to about 24%, about 23% to about 25%, about 23% to about 26%, about 23% to about 27%, about 23% to about 28%, about 23% to about 29%, about 23% to about 30%, about 23% to about 31%, about 23% to about 32%, about 23% to about 33%, about 23% to about 34%, about 24% to about 25%, about 24% to about 26%, about 24% to about 27%, about 24% to about 28%, about 24% to about 29%, about 24% to about 30%, about 24% to about 31%, about 24% to about 32%, about 24% to about 33%, about 24% to about 34%, about 25% to about 26%, about 25% to about 27%, about 25% to about 28%, about 25% to about 29%, about 25% to about 30%, about 25% to about 31%, about 25% to about 32%, about 25% to about 33%, about 25% to about 34%, about 26% to about 27%, about 26% to about 28%, about 26% to about 29%, about 26% to about 30%, about 26% to about 31%, about 26% to about 32%, about 26% to about 33%, about 26% to about 34%, about 27% to about 28%, about 27% to about 29%, about 27% to about 30%, about 27% to about 31%, about 27% to about 32%, about 27% to about 33%, about 27% to about 34%, about 28% to about 29%, about 28% to about 30%, about 28% to about 31%, about 28% to about 32%, about 28% to about 33%, about 28% to about 34%, about 29% to about 30%, about 29% to about 31%, about 29% to about 32%, about 29% to about 33%, about 29% to about 34%, about 30% to about 31%, about 30% to about 32%, about 30% to about 33%, about 30% to about 34%, about 31% to about 32%, about 31% to about 33%, about 31% to about 34%, about 32% to about 33%, about 32% to about 34%, or about 33% to about 34% by weight.

In some embodiments, the soap can be organic soap. Organic soaps are soaps crafted without the use of chemically-altered, man-made preservation methods. In some embodiments, the organic soap is soap nut oil extract from *Sapindus mukorossi* (Indian soapberry, washnut, or ritha).

In some embodiments, the soap can be regular soap. In comparison to organic soaps, regular soaps are chemically-altered and/or made with preservatives.

Rosemary oil is derived from the aromatic herb *Rosmarinus officinalis* and is used in food and cosmetic applications for its aromatic, antioxidant, antiseptic, antimicrobial, and antiinflammatory properties. The main chemical components of rosemary oil are $\alpha$-pinene, camphor, and 1,8-cineole.

Mint oil has been used in food and cosmetic applications and has been used medicinally, especially to treat gastrointestinal disorders. Mint oils have also demonstrated insect repellent properties. There are several varieties of mint from which oil can be extracted to yield mint oils of different compositions. In one embodiment, the mint oil comprises Montana mint oil, peppermint oil, wintergreen oil, spearmint oil, linalool or a combination thereof.

The insect, bacteria, and/or fungi control compositions of the present disclosure may contain about 0.05%, 0.1%, 0.15%, 0.2%, 0.25%, 0.3%, 0.35%, 0.4%, 0.45%, 0.5%, 0.55%, 0.6%, 0.65%, 0.7%, 0.75%, 0.8%, 0.85%, 0.9%, 0.95%, 1%, 1.05%, 1.1%, 1.15%, 1.2%, 1.25%, 1.3%, 1.35%, 1.4%, 1.45%, 1.5%, 1.55%, 1.6%, 1.65%, 1.7%, 1.75%, 1.8%, 1.85%, 1.9%, 1.95%, 2%, 2.05%, 2.1%, 2.15%, 2.2%, 2.25%, 2.3%, 2.35%, 2.4%, 2.45%, 2.5%, 2.55%, 2.6%, 2.65%, 2.7%, 2.75%, 2.8%, 2.85%, 2.9%, 2.95%, 3%, 3.05%, 3.1%, 3.15%, 3.2%, 3.25%, 3.3%, 3.35%, 3.4%, 3.45%, 3.5%, 3.55%, 3.6%, 3.65%, 3.7%, 3.75%, 3.8%, 3.85%, 3.9%, 3.95%, 4%, 4.05%, 4.1%, 4.15%, 4.2%, 4.25%, 4.3%, 4.35%, 4.4%, 4.45%, 4.5%, 4.55%, 4.6%, 4.65%, 4.7%, 4.75%, 4.8%, 4.85%, 4.9%, 4.95%, 5%, 5.05%, 5.1%, 5.15%, 5.2%, 5.25%, 5.3%, 5.35%, 5.4%, 5.45%, 5.5%, 5.55%, 5.6%, 5.65%, 5.7%, 5.75%, 5.8%, 5.85%, 5.9%, 5.95%, 6%, 6.05%, 6.1%, 6.15%, 6.2%, 6.25%, 6.3%, 6.35%, 6.4%, 6.45%, 6.5%, 6.55%, 6.6%, 6.65%, 6.7%, 6.75%, 6.8%, 6.85%, 6.9%, 6.95%, 7%, 7.05%, 7.1%, 7.15%, 7.2%, 7.25%, 7.3%, 7.35%, 7.4%, 7.45%, 7.5%, 7.55%, 7.6%, 7.65%, 7.7%, 7.75%, 7.8%, 7.85%, 7.9%, 7.95%, 8%, 8.05%, 8.1%, 8.15%, 8.2%, 8.25%, 8.3%, 8.35%, 8.4%, 8.45%, 8.5%, 8.55%, 8.6%, 8.65%, 8.7%, 8.75%, 8.8%, 8.85%, 8.9%, 8.95%, 9%, 9.05%, 9.1%, 9.15%, 9.2%, 9.25%, 9.3%, 9.35%, 9.4%, 9.45%, 9.5%, 9.55%, 9.6%, 9.65%, 9.7%, 9.75%, 9.8%, 9.85%, 9.9%, 9.95%, 10%, 10.05%, 10.1%, 10.15%, 10.2%, 10.25%, 10.3%, 10.35%, 10.4%, 10.45%, 10.5%, 10.55%, 10.6%, 10.65%, 10.7%, 10.75%, 10.8%, 10.85%, 10.9%, 10.95%, 11%, 11.05%, 11.1%, 11.15%, 11.2%, 11.25%, 11.3%, 11.35%, 11.4%, 11.45%, 11.5%, 11.55%, 11.6%, 11.65%, 11.7%, 11.75%, 11.8%, 11.85%, 11.9%, 11.95%, 12%, 12.05%, 12.1%, 12.15%, 12.2%, 12.25%, 12.3%, 12.35%, 12.4%, 12.45%, 12.5%, 12.55%, 12.6%, 12.65%, 12.7%, 12.75%, 12.8%, 12.85%, 12.9%, 12.95%, 3%, 13.05%, 13.1%, 13.15%, 13.2%, 13.25%, 13.3%, 13.35%, 13.4%, 13.45%, 13.5%, 13.55%, 13.6%, 13.65%, 13.7%, 13.75%, 13.8%, 13.85%, 13.9%, 13.95%, 14%, 14.05%, 14.1%, 14.15%, 14.2%, 14.25%, 14.3%, 14.35%, 14.4%, 14.45%, 14.5%, 14.55%, 14.6%, 14.65%, 14.7%, 14.75%, 14.8%, 14.85%, 14.9%, 14.95%, 15%, 15.1%, 15.2%, 15.3%, 15.4%, 15.5%, 15.6%, 15.7%, 15.8%, 15.9%, 16%, 16.1%, 16.2%, 16.3%, 16.4%, 16.5%, 16.6%, 16.7%, 16.8%, 16.9%, 17%, 17.1%, 17.2%, 17.3%, 17.4%, 17.5%, 17.6%, 17.7%, 17.8%, 17.9%, 18%, 18.1%, 18.2%, 18.3%, 18.4%, 18.5%, 18.6%, 18.7%, 18.8%, 18.9%, 19%, 19.1%, 19.2%, 19.3%, 19.4%, 19.5%, 19.6%, 19.7%, 19.8%, 19.9%, or 20% by weight rosemary oil, mint oil, or a combination thereof. These values of rosemary oil, mint oil, or a combination thereof can also be expressed as ranges, for example, of from about 0.05% to about 20%, about 0.25% to about 20%, about 0.5% to about 20%, about 0.75% to about 20%, about 1% to about 20%, about 1.25% to about 20%, about 1.5% to about 20%, about 1.75% to about 20%, about 2% to about 20%, about 2.25% to about 20%, about 2.5% to about 20%, about 2.75% to about 20%, about 3% to about 20%, about 3.25% to about 20%, about 3.5% to about 20%, about 3.75% to about 20%, about 4% to about 20%, about 4.25% to about 20%, about 4.5% to about 20%, about 4.75% to about 20%, about 5% to about 20%, about 5.25% to about 20%, about 5.5% to about 20%, about 5.75% to about 20%, about 6% to about 20%, about 6.25% to about 20%, about 6.5% to about 20%, about 6.75% to about 20%, about 8% to about 20%, about 8.25% to about 20%, about 8.5% to about 20%, about 8.75% to about 20%, about 9% to about 20%, about 9.25% to about 20%, about 9.5% to about 20%, about 9.75% to about 20%, about 10% to about 20%, about 10.25% to about 20%, about 10.5% to about 20%, about 10.75% to about 20%, about 11% to about 20%, about 11.25% to about 20%, about 11.5% to about 20%, about 11.75% to about 20%, about 12% to about 20%, about 12.25% to about 20%, about 12.5% to about 20%, about 12.75% to about 20%, about 13% to about 20%, about 13.25% to about 20%, about 13.5% to about 20%, about 13.75% to about 20%, about 14% to about 20%, about 14.25% to about 20%, about 14.5% to about 20%, about 14.75% to about 20%, about 15% to about 20%, about 15.25% to about 20%, about 15.5% to about 20%, about 15.75% to about 20%, about 16% to about 20%, about 16.25% to about 20%, about 16.5% to about 20%, about 16.75% to about 20%, about 17% to about 20%, about 17.25% to about 20%, about 17.5% to about 20%, about 17.75% to about 20%, about 18% to about 20%, about 18.25% to about 20%, about 18.5% to about 20%, about 18.75% to about 20%, about 19% to about 20%, about 19.25% to about 20%, about 19.5% to about 20%, about 19.75% to about 20%, about 0.05% to about 19.75%, about 0.05% to about 19.5%, about 0.05% to about 19.25%, about 0.05% to about 19%, about 0.05% to about 18.75%, about 0.05% to about 18.5%, about 0.05% to about 18.25%, about 0.05% to about 18%, about 0.05% to about 17.75%, about 0.05% to about 17.5%, about 0.05% to about 17.25%, about 0.05% to about 17%, about 0.05% to about 16.75%, about 0.05% to about 16.5%, about 0.05% to about 16.25%, about 0.05% to about 16%, about 0.05% to about 15.75%, about 0.05% to about 15.5%, about 0.05% to about 15.25%, about 0.05% to about 15%, about 0.05% to about 14.75%, about 0.05% to about 14.5%, about 0.05% to about 14.25%, about 0.05% to about 14%, about 0.05% to about 13.75%, about 0.05% to about 13.5%, about 0.05% to about 13.25%, about 0.05% to about 13%, about 0.05% to about 12.75%, about 0.05% to about 12.5%, about 0.05% to about 12.25%, about 0.05% to about 12%, about 0.05% to about 11.75%, about 0.05% to about 11.5%, about 0.05% to about 11.25%, about 0.05% to about 11%, about 0.05% to about 10.75%, about 0.05% to about 10.5%, about 0.05% to about 10.25%, about 0.05% to about 10%, about 0.05% to about 9.75%, about 0.05% to about 9.5%, about 0.05% to about 9.5%, about 0.05% to about 9.25%, about 0.05% to about 9%, about 0.05% to about 8.75%, about 0.05% to about 8.5%, about 0.05% to about 8.25%, about 0.05% to about 8%, about 0.05% to about 7.75%, about 0.05% to about 7.5%, about 0.05% to about 7.25%, about 0.05% to about 7%, about 0.05% to about 6.75%, about 0.05% to about 6.5%, about 0.05% to about 6.25%, about 0.05% to about 6%, about 0.05% to about 5.75%, about 0.05% to about 5.5%, about 0.05% to about 5.25%, about 0.05% to about 5%, about 0.05% to about 4.75%, about 0.05% to about 4.5%, about 0.05% to about 4.25%, about 0.05% to about 4%, about 0.05% to about 3.75%, about 0.05% to about 3.5%, about 0.05% to about 3.25%, about 0.05% to about 3%, about 0.05% to about 2.75%, about 0.05% to about 2.5%, about 0.05% to about 2.25%, about 0.05% to about 2%, about 0.05% to about 1.75%, about 0.05% to about 1.5%, about 0.05% to about 1.25%, about 0.05% to about 1%, about 0.05% to about 0.75%, about 0.05% to about 0.5%, about 0.05% to about 0.25%, about 0.5% to about 19.5%, about 1% to about 19%, about 1.5% to about 18.5%, about 2% to about 18%, about 2.5% to about 17.5%, about 3% to about 17%, about 3.5% to about 16.5%, about 4% to about 16%, about 4.5% to about 15.5%, about 5% to about 15%, about 5.5% to about 14.5%, about 6% to about 14%, about 6.5% to about 13.5%, about 7% to about 13%, about 7.5% to about 12.5%, about 8% to about 12%, about 8.5% to about 11.5%, about 9% to about 11%, about 9.5% to about 10.5%, about 2% to about 3%, about 2% to about 4%, about 2% to about 5%, about 2% to about 6%, about 2% to about 7%, about 2% to about 8%, about 2% to about 9%, about 2% to about 10%, about 2% to about 11%, about 2% to about 12%, about 2% to about 13%, about 2% to about 14%, about 2% to about 15%, about 2% to about 16%, about 2% to about 17%, about 2% to about 18%, about 2% to about 19%, about 3% to about 4%, about 3% to about 5%, about 3% to about 6%, about 3% to about 7%, about 3% to about 8%, about 3% to about 9%, about 3% to about 10%, about 3% to about 11%, about 3% to about 12%, about 3% to about 13%, about 3% to about 14%, about 3% to about 15%, about 3% to about 16%, about 3% to about 17%, about 3% to about 18%, about 3% to about 19%, about 4% to about 5%, about 4% to about 6%, about 4% to about 7%, about 4% to about 8%, about 4% to about 9%, about 4% to about 10%, about 4% to about 11%, about 4% to about 12%, about 4% to about 13%, about 4% to about 14%, about 4% to about 15%, about 4% to about 16%, about 4% to about 17%, about 4% to about 18%, about 4% to about 19%, about 5% to about 6%, about 5% to about 7%, about 5% to about 8%, about 5% to about 9%, about 5% to about 10%, about 5% to about 11%, about 5% to about 12%, about 5% to about 13%, about 5% to about 14%, about 5% to about 15%, about 5% to about 16%, about 5% to about 17%, about 5% to about 18%, about 5% to about 19%, about 6% to about 7%, about 6% to about 8%, about 6% to about 9%, about 6% to about 10%, about 6% to about 11%, about 6% to about 12%, about 6% to about 13%, about 6% to about 14%, about 6% to about 15%, about 6% to about 16%, about 6% to about 17%, about 6% to about 18%, about 6% to about 19%, about 7% to about 8%, about 7% to about 9%, about 7% to about 10%, about 7% to about 11%, about 7% to about 12%, about 7% to about 13%, about 7% to about 14%, about 7% to about 15%, about 7% to about 16%, about 7% to about 17%, about 7% to about 18%, about 7% to about 19%, about 8% to about 9%, about 8% to about 10%, about 8% to about 11%, about 8% to about 12%, about 8% to about 13%, about 8% to about 14%, about 8% to about 15%, about 8% to about 16%, about 8% to about 17%, about 8% to about 18%, about 8% to about 19%, about 9% to about 10%, about 9% to about 11%, about 9% to about 12%, about 9% to about 13%, about 9% to about 14%, about 9% to about 15%, about 9% to about 16%, about 9% to about 17%, about 9% to about 18%, about 9% to about 19%, about 10% to about 11%, about 10% to about 12%, about 10% to about 13%, about 10% to about 14%, about 10% to about 15%, about 10% to about 16%, about 10% to about 17%, about 10% to about 18%, about 10% to about 19%, about 11% to about 12%, about 11% to about 13%, about 11% to about 14%, about 11% to about 15%, about 11% to about 16%, about 11% to about 17%, about 11% to about 18%, about 11% to about 19%, about 12% to about 13%, about 12% to about 14%, about 12% to about 15%, about 12% to about 16%, about 12% to about 17%, about 12% to about 18%, about 12% to about 19%, about 13% to about 14%, about 13% to about 15%, about 13% to about 16%, about 13% to about 17%, about 13% to about 18%, about 13% to about 19%, about 14% to about 15%, about 14% to about 16%, about 14% to about 17%, about 14% to about 18%, about 14% to about 19%, about 15% to about 16%, about 15% to about 17%, about 15% to about 18%, about 15% to about 19%, about 16% to about 17%, about 16% to about 18%, about 16% to about 19%, about 17% to about 18%, about 17% to about 19%, or about 18% to about 19% by weight rosemary oil, mint oil, or a combination thereof.

Glyceryl monostearate is used as an emulsifier or surfactant in foods and cosmetics. Glyceryl monostearate can also be used as emollient that can produce a protective barrier on skin. With respect to glyceryl monostearate, contemplated insect, bacteria, and/or fungi control compositions can contain about 0.05%, 0.1%, 0.15%, 0.2%, 0.25%, 0.3%, 0.35%, 0.4%, 0.45%, 0.5%, 0.55%, 0.6%, 0.65%, 0.7%, 0.75%, 0.8%, 0.85%, 0.9%, 0.95%, 1%, 1.05%, 1.1%, 1.15%, 1.2%, 1.25%, 1.3%, 1.35%, 1.4%, 1.45%, 1.5%, 1.55%, 1.6%, 1.65%, 1.7%, 1.75%, 1.8%, 1.85%, 1.9%, 1.95%, 2%, 2.05%, 2.1%, 2.15%, 2.2%, 2.25%, 2.3%, 2.35%, 2.4%, 2.45%, 2.5%, 2.55%, 2.6%, 2.65%, 2.7%, 2.75%, 2.8%, 2.85%, 2.9%, 2.95%, 3%, 3.05%, 3.1%, 3.15%, 3.2%, 3.25%, 3.3%, 3.35%, 3.4%, 3.45%, 3.5%, 3.55%, 3.6%, 3.65%, 3.7%, 3.75%, 3.8%, 3.85%, 3.9%, 3.95%, 4%, 4.05%, 4.1%, 4.15%, 4.2%, 4.25%, 4.3%, 4.35%, 4.4%, 4.45%, 4.5%, 4.55%, 4.6%, 4.65%, 4.7%, 4.75%, 4.8%, 4.85%, 4.9%, 4.95%, 5%, 5.05%, 5.1%, 5.15%, 5.2%, 5.25%, 5.3%, 5.35%, 5.4%, 5.45%, 5.5%, 5.55%, 5.6%, 5.65%, 5.7%, 5.75%, 5.8%, 5.85%, 5.9%, 5.95%, 6%, 6.05%, 6.1%, 6.15%, 6.2%, 6.25%, 6.3%, 6.35%, 6.4%, 6.45%, 6.5%, 6.55%, 6.6%, 6.65%, 6.7%, 6.75%, 6.8%, 6.85%, 6.9%, 6.95%, 7%, 7.05%, 7.1%, 7.15%, 7.2%, 7.25%, 7.3%, 7.35%, 7.4%, 7.45%, 7.5%, 7.55%, 7.6%, 7.65%, 7.7%, 7.75%, 7.8%, 7.85%, 7.9%, 7.95%, 8%, 8.05%, 8.1%, 8.15%, 8.2%, 8.25%, 8.3%, 8.35%, 8.4%, 8.45%, 8.5%, 8.55%, 8.6%, 8.65%, 8.7%, 8.75%, 8.8%, 8.85%, 8.9%, 8.95%, 9%, 9.05%, 9.1%, 9.15%, 9.2%, 9.25%, 9.3%, 9.35%, 9.4%, 9.45%, 9.5%, 9.55%, 9.6%, 9.65%, 9.7%, 9.75%, 9.8%, 9.85%, 9.9%, 9.95%, 10%, 10.05%, 10.1%, 10.15%, 10.2%, 10.25%, 10.3%, 10.35%, 10.4%, 10.45%, 10.5%, 10.55%, 10.6%, 10.65%, 10.7%, 10.75%, 10.8%, 10.85%, 10.9%, 10.95%, 11%, 11.05%, 11.1%, 11.15%, 11.2%, 11.25%, 11.3%, 11.35%, 11.4%, 11.45%, 11.5%, 11.55%, 11.6%, 11.65%, 11.7%, 11.75%, 11.8%, 11.85%, 11.9%, 11.95%, 12%, 12.05%, 12.1%, 12.15%, 12.2%, 12.25%, 12.3%, 12.35%, 12.4%, 12.45%, 12.5%, 12.55%, 12.6%, 12.65%, 12.7%, 12.75%, 12.8%, 12.85%, 12.9%, 12.95%, 3%, 13.05%, 13.1%, 13.15%, 13.2%, 13.25%, 13.3%, 13.35%, 13.4%, 13.45%, 13.5%, 13.55%, 13.6%, 13.65%, 13.7%, 13.75%, 13.8%, 13.85%, 13.9%, 13.95%, 14%, 14.05%, 14.1%, 14.15%, 14.2%, 14.25%, 14.3%, 14.35%, 14.4%, 14.45%, 14.5%, 14.55%, 14.6%, 14.65%, 14.7%, 14.75%, 14.8%, 14.85%, 14.9%, 14.95%, 15%, 15.1%, 15.2%, 15.3%, 15.4%, 15.5%, 15.6%, 15.7%, 15.8%, 15.9%, 16%, 16.1%, 16.2%, 16.3%, 16.4%, 16.5%, 16.6%, 16.7%, 16.8%, 16.9%, 17%, 17.1%, 17.2%, 17.3%, 17.4%, 17.5%, 17.6%, 17.7%, 17.8%, 17.9%, 18%, 18.1%, 18.2%, 18.3%, 18.4%, 18.5%, 18.6%, 18.7%, 18.8%, 18.9%, 19%, 19.1%, 19.2%, 19.3%, 19.4%, 19.5%, 19.6%, 19.7%, 19.8%, 19.9%, 20%, 20.5%, 21%, 21.5%, 22%, 22.5%, 23%, 23.5%, 24%, 24.5%, 25%, 25.5%, 26%, 26.5%, 27%, 27.5%, 28%, 28.5%, 29%, 29.5%, 30%, 30.5%, 31%, 31.5%, 32%, 32.5%, 33%, 33.5%, 34%, 34.5%, or 35% by weight glyceryl monostearate. These values of glyceryl monostearate can also be expressed as ranges, for example, of from about 0.05% to about 35%, about 0.25% to about 35%, about 0.5% to about 35%, about 0.75% to about 35%, about 1% to about 35%, about 1.25% to about 35%, about 1.5% to about 35%, about 1.75% to about 35%, about 2% to about 35%, about 2.25% to about 35%, about 2.5% to about 35%, about 2.75% to about 35%, about 3% to about 35%, about 3.25% to about 35%, about 3.5% to about 35%, about 3.75% to about 35%, about 4% to about 35%, about 4.25% to about 35%, about 4.5% to about 35%, about 4.75% to about 35%, about 5% to about 35%, about 5.25% to about 35%, about 5.5% to about 35%, about 5.75% to about 35%, about 6% to about 35%, about 6.25% to about 35%, about 6.5% to about 35%, about 6.75% to about 35%, about 8% to about 35%, about 8.25% to about 35%, about 8.5% to about 35%, about 8.75% to about 35%, about 9% to about 35%, about 9.25% to about 35%, about 9.5% to about 35%, about 9.75% to about 35%, about 10% to about 35%, about 10.25% to about 35%, about 10.5% to about 35%, about 10.75% to about 35%, about 11% to about 35%, about 11.25% to about 35%, about 11.5% to about 35%, about 11.75% to about 35%, about 12% to about 35%, about 12.25% to about 35%, about 12.5% to about 35%, about 12.75% to about 35%, about 13% to about 35%, about 13.25% to about 35%, about 13.5% to about 35%, about 13.75% to about 35%, about 14% to about 35%, about 14.25% to about 35%, about 14.5% to about 35%, about 14.75% to about 35%, about 15% to about 35%, about 15.25% to about 35%, about 15.5% to about 35%, about 15.75% to about 35%, about 16% to about 35%, about 16.25% to about 35%, about 16.5% to about 35%, about 16.75% to about 35%, about 17% to about 35%, about 17.25% to about 35%, about 17.5% to about 35%, about 17.75% to about 35%, about 18% to about 35%, about 18.25% to about 35%, about 18.5% to about 35%, about 18.75% to about 35%, about 19% to about 35%, about 19.25% to about 35%, about 19.5% to about 35%, about 19.75% to about 35%, about 20% to about 35%, about 20.5% to about 35%, about 21% to about 35%, about 21.5% to about 35%, about 22% to about 35%, about 22.5% to about 35%, about 23% to about 35%, about 23.5% to about 35%, about 24% to about 35%, about 24.5% to about 35%, about 25% to about 35%, about 25.5% to about 35%, about 26% to about 35%, about 26.5% to about 35%, about 27% to about 35%, about 27.5% to about 35%, about 28% to about 35%, about 28.5% to about 35%, about 29% to about 35%, about 29.5% to about 35%, about 30% to about 35%, about 30.5% to about 35%, about 31% to about 35%, about 31.5% to about 35%, about 32% to about 35%, about 32.5% to about 35%, about 33% to about 35%, about 33.5% to about 35%, about 34% to about 35%, about 34.5% to about 35%, about 0.05% to about 34.5%, about 0.05% to about 34%, about 0.05% to about 33.5%, about 0.05% to about 33%, about 0.05% to about 32.5%, about 0.05% to about 32%, about 0.05% to about 31.5%, about 0.05% to about 31%, about 0.05% to about 30.5%, about 0.05% to about 30%, about 0.05% to about 29.5%, about 0.05% to about 29%, about 0.05% to about 28.5%, about 0.05% to about 27%, about 0.05% to about 26.5%, about 0.05% to about 26%, about 0.05% to about 25.5%, about 0.05% to about 25%, about 0.05% to about 24.5%, about 0.05% to about 24%, about 0.05% to about 23.5%, about 0.05% to about 23%, about 0.05% to about 22.5%, about 0.05% to about 22%, about 0.05% to about 21.5%, about 0.05% to about 21%, about 0.05% to about 20.5%, about 0.05% to about 20%, about 0.05% to about 19.75%, about 0.05% to about 19.5%, about 0.05% to about 19.25%, about 0.05% to about 19%, about 0.05% to about 18.75%, about 0.05% to about 18.5%, about 0.05% to about 18.25%, about 0.05% to about 18%, about 0.05% to about 17.75%, about 0.05% to about 17.5%, about 0.05% to about 17.25%, about 0.05% to about 17%, about 0.05% to about 16.75%, about 0.05% to about 16.5%, about 0.05% to about 16.25%, about 0.05% to about 16%, about 0.05% to about 15.75%, about 0.05% to about 15.5%, about 0.05% to about 15.25%, about 0.05% to about 15%, about 0.05% to about 14.75%, about 0.05% to about 14.5%, about 0.05% to about 14.25%, about 0.05% to about 14%, about 0.05% to about 13.75%, about 0.05% to about 13.5%, about 0.05% to about 13.25%, about 0.05% to about 13%, about 0.05% to about 12.75%, about 0.05% to about 12.5%, about 0.05% to about 12.25%, about 0.05% to about 12%, about 0.05% to about 11.75%, about 0.05% to about 11.5%, about 0.05% to about 11.25%, about 0.05% to about 11%, about 0.05% to about 10.75%, about 0.05% to about 10.5%, about 0.05% to about 10.25%, about 0.05% to about 10%, about 0.05% to about 9.75%, about 0.05% to about 9.5%, about 0.05% to about 9.5%, about 0.05% to about 9.25%, about 0.05% to about 9%, about 0.05% to about 8.75%, about 0.05% to about 8.5%, about 0.05% to about 8.25%, about 0.05% to about 8%, about 0.05% to about 7.75%, about 0.05% to about 7.5%, about 0.05% to about 7.25%, about 0.05% to about 7%, about 0.05% to about 6.75%, about 0.05% to about 6.5%, about 0.05% to about 6.25%, about 0.05% to about 6%, about 0.05% to about 5.75%, about 0.05% to about 5.5%, about 0.05% to about 5.25%, about 0.05% to about 5%, about 0.05% to about 4.75%, about 0.05% to about 4.5%, about 0.05% to about 4.25%, about 0.05% to about 4%, about 0.05% to about 3.75%, about 0.05% to about 3.5%, about 0.05% to about 3.25%, about 0.05% to about 3%, about 0.05% to about 2.75%, about 0.05% to about 2.5%, about 0.05% to about 2.25%, about 0.05% to about 2%, about 0.05% to about 1.75%, about 0.05% to about 1.5%, about 0.05% to about 1.25%, about 0.05% to about 1%, about 0.05% to about 0.75%, about 0.05% to about 0.5%, about 0.05% to about 0.25%, about 0.5% to

EP 4 646 932 A2

about 34.5%, about 1% to about 34%, about 1.5% to about 33.5%, about 2% to about 33%, about 2.5% to about 32.5%, about 3% to about 32%, about 3.5% to about 31.5%, about 4% to about 31%, about 4.5% to about 30.5%, about 5% to about 30%, about 5.5% to about 29.5%, about 6% to about 29%, about 6.5% to about 28.5%, about 7% to about 28%, about 7.5% to about 27.5%, about 8% to about 27%, about 8.5% to about 26.5%, about 9% to about 26%, about 9.5% to about 25.5%, about 10% to about 25%, about 10.5% to about 24.5%, about 11% to about 24%, about 11.5% to about 23.5%, about 12% to about 23%, about 12.5% to about 22.5%, about 13% to about 22%, about 13.5% to about 21.5%, about 14% to about 21%, about 14.5% to about 20.5%, about 15% to about 20%, about 15.5% to about 19.5%, about 16% to about 19%, about 16.5% to about 18.5%, about 17% to about 18%, about 2% to about 3%, about 2% to about 4%, about 2% to about 5%, about 2% to about 6%, about 2% to about 7%, about 2% to about 8%, about 2% to about 9%, about 2% to about 10%, about 2% to about 11%, about 2% to about 12%, about 2% to about 13%, about 2% to about 14%, about 2% to about 15%, about 2% to about 16%, about 2% to about 17%, about 2% to about 18%, about 2% to about 19%, about 2% to about 20%, about 2% to about 21%, about 2% to about 22%, about 2% to about 23%, about 2% to about 24%, about 2% to about 25%, about 2% to about 26%, about 2% to about 27%, about 2% to about 28%, about 2% to about 29%, about 2% to about 30%, about 2% to about 31%, about 2% to about 32%, about 2% to about 33%, about 2% to about 34%, about 3% to about 4%, about 3% to about 5%, about 3% to about 6%, about 3% to about 7%, about 3% to about 8%, about 3% to about 9%, about 3% to about 10%, about 3% to about 11%, about 3% to about 12%, about 3% to about 13%, about 3% to about 14%, about 3% to about 15%, about 3% to about 16%, about 3% to about 17%, about 3% to about 18%, about 3% to about 19%, about 3% to about 20%, about 3% to about 21%, about 3% to about 22%, about 3% to about 23%, about 3% to about 24%, about 3% to about 25%, about 3% to about 26%, about 3% to about 27%, about 3% to about 28%, about 3% to about 29%, about 3% to about 30%, about 3% to about 31%, about 3% to about 32%, about 3% to about 33%, about 3% to about 34%, about 4% to about 5%, about 4% to about 6%, about 4% to about 7%, about 4% to about 8%, about 4% to about 9%, about 4% to about 10%, about 4% to about 11%, about 4% to about 12%, about 4% to about 13%, about 4% to about 14%, about 4% to about 15%, about 4% to about 16%, about 4% to about 17%, about 4% to about 18%, about 4% to about 19%, about 4% to about 20%, about 4% to about 21%, about 4% to about 22%, about 4% to about 23%, about 4% to about 24%, about 4% to about 25%, about 4% to about 26%, about 4% to about 27%, about 4% to about 28%, about 4% to about 29%, about 4% to about 30%, about 4% to about 31%, about 4% to about 32%, about 4% to about 33%, about 4% to about 34%, about 5% to about 6%, about 5% to about 7%, about 5% to about 8%, about 5% to about 9%, about 5% to about 10%, about 5% to about 11%, about 5% to about 12%, about 5% to about 13%, about 5% to about 14%, about 5% to about 15%, about 5% to about 16%, about 5% to about 17%, about 5% to about 18%, about 5% to about 19%, about 5% to about 20%, about 5% to about 21%, about 5% to about 22%, about 5% to about 23%, about 5% to about 24%, about 5% to about 25%, about 5% to about 26%, about 5% to about 27%, about 5% to about 28%, about 5% to about 29%, about 5% to about 30%, about 5% to about 31%, about 5% to about 32%, about 5% to about 33%, about 5% to about 34%, about 6% to about 7%, about 6% to about 8%, about 6% to about 9%, about 6% to about 10%, about 6% to about 11%, about 6% to about 12%, about 6% to about 13%, about 6% to about 14%, about 6% to about 15%, about 6% to about 16%, about 6% to about 17%, about 6% to about 18%, about 6% to about 19%, about 6% to about 20%, about 6% to about 21%, about 6% to about 22%, about 6% to about 23%, about 6% to about 24%, about 6% to about 25%, about 6% to about 26%, about 6% to about 27%, about 6% to about 28%, about 6% to about 29%, about 6% to about 30%, about 6% to about 31%, about 6% to about 32%, about 6% to about 33%, about 6% to about 34%, about 7% to about 8%, about 7% to about 9%, about 7% to about 10%, about 7% to about 11%, about 7% to about 12%, about 7% to about 13%, about 7% to about 14%, about 7% to about 15%, about 7% to about 16%, about 7% to about 17%, about 7% to about 18%, about 7% to about 19%, about 7% to about 20%, about 7% to about 21%, about 7% to about 22%, about 7% to about 23%, about 7% to about 24%, about 7% to about 25%, about 7% to about 26%, about 7% to about 27%, about 7% to about 28%, about 7% to about 29%, about 7% to about 30%, about 7% to about 31%, about 7% to about 32%, about 7% to about 33%, about 7% to about 34%, about 8% to about 9%, about 8% to about 10%, about 8% to about 11%, about 8% to about 12%, about 8% to about 13%, about 8% to about 14%, about 8% to about 15%, about 8% to about 16%, about 8% to about 17%, about 8% to about 18%, about 8% to about 19%, about 8% to about 20%, about 8% to about 21%, about 8% to about 22%, about 8% to about 23%, about 8% to about 24%, about 8% to about 25%, about 8% to about 26%, about 8% to about 27%, about 8% to about 28%, about 8% to about 29%, about 8% to about 30%, about 8% to about 31%, about 8% to about 32%, about 8% to about 33%, about 8% to about 34%, about 9% to about 10%, about 9% to about 11%, about 9% to about 12%, about 9% to about 13%, about 9% to about 14%, about 9% to about 15%, about 9% to about 16%, about 9% to about 17%, about 9% to about 18%, about 9% to about 19%, about 9% to about 20%, about 9% to about 21%, about 9% to about 22%, about 9% to about 23%, about 9% to about 24%, about 9% to about 25%, about 9% to about 26%, about 9% to about 27%, about 9% to about 28%, about 9% to about 29%, about 9% to about 30%, about 9% to about 31%, about 9% to about 32%, about 9% to about 33%, about 9% to about 34%, about 10% to about 11%, about 10% to about 12%, about 10% to about 13%, about 10% to about 14%, about 10% to about 15%, about 10% to about 16%, about 10% to about 17%, about 10% to about 18%, about 10% to about 19%, about 10% to about 20%, about 10% to about 21%, about 10% to about 22%, about 10% to about 23%, about 10% to about 24%, about 10% to about 25%, about 10% to about 26%, about 10% to about 27%, about 10% to about 28%, about 10% to about 29%, about 10% to about 30%, about 10% to about 31%, about 10% to about 32%, about 10% to about 33%, about 10% to about 34%, about 11% to about 12%, about 11% to about 13%, about 11% to about 14%, about 11% to about 15%, about 11% to about 16%, about 11% to about 17%, about 11% to about 18%, about 11% to about 19%, about 11% to about 20%, about 11% to about 21%, about 11% to about 22%, about 11% to about 23%, about 11% to about 24%, about 11% to about 25%, about 11% to about 26%, about 11% to about 27%, about 11% to about 28%, about 11% to about 29%, about 11% to about 30%, about 11% to about 31%, about 11% to about 32%, about 11% to about 33%, about 11% to about 34%, about 12% to about 13%, about 12% to about 14%, about 12% to about 15%, about 12% to about 16%, about 12% to about 17%, about 12% to about 18%, about 12% to about 19%, about 12% to about 20%, about 12% to about 21%, about 12% to about 22%, about 12% to about 23%, about 12% to about 24%, about 12% to about 25%, about 12% to about 26%, about 12% to about 27%, about 12% to about 28%, about 12% to about 29%, about 12% to about 30%, about 12% to about 31%, about 12% to about 32%, about 12% to about 33%, about 12% to about 34%, about 13% to about 14%, about 13% to about 15%, about 13% to about 16%, about 13% to about 17%, about 13% to about 18%, about 13% to about 19%, about 13% to about 20%, about 13% to about 21%, about 13% to about 22%, about 13% to about 23%, about 13% to about 24%, about 13% to about 25%, about 13% to about 26%, about 13% to about 27%, about 13% to about 28%, about 13% to about 29%, about 13% to about 30%, about 13% to about 31%, about 13% to about 32%, about 13% to about 33%, about 13% to about 34%, about 14% to about 15%, about 14% to about 16%, about 14% to about 17%, about 14% to about 18%, about 14% to about 19%, about 14% to about 20%, about 14% to about 21%, about 14% to about 22%, about 14% to about 23%, about 14% to about 24%, about 14% to about 25%, about 14% to about 26%, about 14% to about 27%, about 14% to about 28%, about 14% to about 29%, about 14% to about 30%, about 14% to about 31%, about 14% to about 32%, about 14% to about 33%, about 14% to about 34%, about 15% to about 16%, about 15% to about 17%, about 15% to about 18%, about 15% to about 19%, about 15% to about 20%, about 15% to about 21%, about 15% to about 22%, about 15% to about 23%, about 15% to about 24%, about 15% to about 25%, about 15% to about 26%, about 15% to about 27%, about 15% to about 28%, about 15% to about 29%, about 15% to about 30%, about 15% to about 31%, about 15% to about 32%, about 15% to about 33%, about 15% to about 34%, about 16% to about 17%, about 16% to about 18%, about 16% to about 19%, about 16% to about 20%, about 16% to about 21%, about 16% to about 22%, about 16% to about 23%, about 16% to about 24%, about 16% to about 25%, about 16% to about 26%, about 16% to about 27%, about 16% to about 28%, about 16% to about 29%, about 16% to about 30%, about 16% to about 31%, about 16% to about 32%, about 16% to about 33%, about 16% to about 34%, about 17% to about 18%, about 17% to about 19%, about 17% to about 20%, about 17% to about 21%, about 17% to about 22%, about 17% to about 23%, about 17% to about 24%, about 17% to about 25%, about 17% to about 26%, about 17% to about 27%, about 17% to about 28%, about 17% to about 29%, about 17% to about 30%, about 17% to about 31%, about 17% to about 32%, about 17% to about 33%, about 17% to about 34%, about 18% to about 19%, about 18% to about 20%, about 18% to about 21%, about 18% to about 22%, about 18% to about 23%, about 18% to about 24%, about 18% to about 25%, about 18% to about 26%, about 18% to about 27%, about 18% to about 28%, about 18% to about 29%, about 18% to about 30%, about 18% to about 31%, about 18% to about 32%, about 18% to about 33%, about 18% to about 34%, about 19% to about 20%, about 19% to about 21%, about 19% to about 22%, about 19% to about 23%, about 19% to about 24%, about 19% to about 25%, about 19% to about 26%, about 19% to about 27%, about 19% to about 28%, about 19% to about 29%, about 19% to about 30%, about 19% to about 31%, about 19% to about 32%, about 19% to about 33%, about 19% to about 34%, about 20% to about 21%, about 20% to about 22%, about 20% to about 23%, about 20% to about 24%, about 20% to about 25%, about 20% to about 26%, about 20% to about 27%, about 20% to about 28%, about 20% to about 29%, about 20% to about 30%, about 20% to about 31%, about 20% to about 32%, about 20% to about 33%, about 20% to about 34%, about 21% to about 22%, about 21% to about 23%, about 21% to about 24%, about 21% to about 25%, about 21% to about 26%, about 21% to about 27%, about 21% to about 28%, about 21% to about 29%, about 21% to about 30%, about 21% to about 31%, about 21% to about 32%, about 21% to about 33%, about 21% to about 34%, about 22% to about 23%, about 22% to about 24%, about 22% to about 25%, about 22% to about 26%, about 22% to about 27%, about 22% to about 28%, about 22% to about 29%, about 22% to about 30%, about 22% to about 31%, about 22% to about 32%, about 22% to about 33%, about 22% to about 34%, about 23% to about 24%, about 23% to about 25%, about 23% to about 26%, about 23% to about 27%, about 23% to about 28%, about 23% to about 29%, about 23% to about 30%, about 23% to about 31%, about 23% to about 32%, about 23% to about 33%, about 23% to about 34%, about 24% to about 25%, about 24% to about 26%, about 24% to about 27%, about 24% to about 28%, about 24% to about 29%, about 24% to about 30%, about 24% to about 31%, about 24% to about 32%, about 24% to about 33%, about 24% to about 34%, about 25% to about 26%, about 25% to about 27%, about 25% to about 28%, about 25% to about 29%, about 25% to about 30%, about 25% to about 31%, about 25% to about 32%, about 25% to about 33%, about 25% to about 34%, about 26% to about 27%, about 26% to about 28%, about 26% to about 29%, about 26% to about 30%, about 26% to about 31%, about 26% to about 32%, about 26% to about 33%, about 26% to about 34%, about 27% to about 28%, about 27% to about 29%, about 27% to about 30%, about 27% to about 31%, about 27% to about 32%, about 27% to about 33%, about 27% to about 34%, about 28% to about 29%, about 28% to about 30%, about 28% to about 31%, about 28% to about 32%, about 28% to about 33%, about 28% to about 34%, about 29% to about 30%, about 29% to about 31%, about 29% to about 32%, about 29% to about 33%, about 29% to about 34%, about 30% to about 31%, about 30% to about 32%, about 30% to about 33%, about 30% to about 34%, about 31% to about 32%, about 31% to about 33%, about 31% to about 34%, about 32% to about 33%, about 32% to about 34%, or about 33% to about 34% by weight.

Cedarwood oil is used in aromatherapy and topical applications. In some embodiments, the cedarwood oil comprises *Juniperus virginiana* cedarwood oil. In addition to killing insects, cedarwood oil is a pheromone interrupter, which prevents insects from colonizing susceptible trees and plants. Insect, bacteria, and/or fungi control compositions of the present disclosure can contain cedarwood oil at proportions of about 0.05%, 0.1%, 0.15%, 0.2%, 0.25%, 0.3%, 0.35%, 0.4%, 0.45%, 0.5%, 0.55%, 0.6%, 0.65%, 0.7%, 0.75%, 0.8%, 0.85%, 0.9%, 0.95%, 1%, 1.05%, 1.1%, 1.15%, 1.2%, 1.25%, 1.3%, 1.35%, 1.4%, 1.45%, 1.5%, 1.55%, 1.6%, 1.65%, 1.7%, 1.75%, 1.8%, 1.85%, 1.9%, 1.95%, 2%, 2.05%, 2.1%, 2.15%, 2.2%, 2.25%, 2.3%, 2.35%, 2.4%, 2.45%, 2.5%, 2.55%, 2.6%, 2.65%, 2.7%, 2.75%, 2.8%, 2.85%, 2.9%, 2.95%, 3%, 3.05%, 3.1%, 3.15%, 3.2%, 3.25%, 3.3%, 3.35%, 3.4%, 3.45%, 3.5%, 3.55%, 3.6%, 3.65%, 3.7%, 3.75%, 3.8%, 3.85%, 3.9%, 3.95%, 4%, 4.05%, 4.1%, 4.15%, 4.2%, 4.25%, 4.3%, 4.35%, 4.4%, 4.45%, 4.5%, 4.55%, 4.6%, 4.65%, 4.7%, 4.75%, 4.8%, 4.85%, 4.9%, 4.95%, 5%, 5.05%, 5.1%, 5.15%, 5.2%, 5.25%, 5.3%, 5.35%, 5.4%, 5.45%, 5.5%, 5.55%, 5.6%, 5.65%, 5.7%, 5.75%, 5.8%, 5.85%, 5.9%, 5.95%, 6%, 6.05%, 6.1%, 6.15%, 6.2%, 6.25%, 6.3%, 6.35%, 6.4%, 6.45%, 6.5%, 6.55%, 6.6%, 6.65%, 6.7%, 6.75%, 6.8%, 6.85%, 6.9%, 6.95%, 7%, 7.05%, 7.1%, 7.15%, 7.2%, 7.25%, 7.3%, 7.35%, 7.4%, 7.45%, 7.5%, 7.55%, 7.6%, 7.65%, 7.7%, 7.75%, 7.8%, 7.85%, 7.9%, 7.95%, 8%, 8.05%, 8.1%, 8.15%, 8.2%, 8.25%, 8.3%, 8.35%, 8.4%, 8.45%, 8.5%, 8.55%, 8.6%, 8.65%, 8.7%, 8.75%, 8.8%, 8.85%, 8.9%, 8.95%, 9%, 9.05%, 9.1%, 9.15%, 9.2%, 9.25%, 9.3%, 9.35%, 9.4%, 9.45%, 9.5%, 9.55%, 9.6%, 9.65%, 9.7%, 9.75%, 9.8%, 9.85%, 9.9%, 9.95%, 10%, 10.05%, 10.1%, 10.15%, 10.2%, 10.25%, 10.3%, 10.35%, 10.4%, 10.45%, 10.5%, 10.55%, 10.6%, 10.65%, 10.7%, 10.75%, 10.8%, 10.85%, 10.9%, 10.95%, 11%, 11.05%, 11.1%, 11.15%, 11.2%, 11.25%, 11.3%, 11.35%, 11.4%, 11.45%, 11.5%, 11.55%, 11.6%, 11.65%, 11.7%, 11.75%, 11.8%, 11.85%, 11.9%, 11.95%, 12%, 12.05%, 12.1%, 12.15%, 12.2%, 12.25%, 12.3%, 12.35%, 12.4%, 12.45%, 12.5%, 12.55%, 12.6%, 12.65%, 12.7%, 12.75%, 12.8%, 12.85%, 12.9%, 12.95%, 3%, 13.05%, 13.1%, 13.15%, 13.2%, 13.25%, 13.3%, 13.35%, 13.4%, 13.45%, 13.5%, 13.55%, 13.6%, 13.65%, 13.7%, 13.75%, 13.8%, 13.85%, 13.9%, 13.95%, 14%, 14.05%, 14.1%, 14.15%, 14.2%, 14.25%, 14.3%, 14.35%, 14.4%, 14.45%, 14.5%, 14.55%, 14.6%, 14.65%, 14.7%, 14.75%, 14.8%, 14.85%, 14.9%, 14.95%, or 15% by weight cedarwood oil. These values of cedarwood oil can also be expressed as ranges, for example, of from about 0.05% to about 15%, about 0.25% to about 15%, about 0.5% to about 15%, about 0.75% to about 15%, about 1% to about 15%, about 1.25% to about 15%, about 1.5% to about 15%, about 1.75% to about 15%, about 2% to about 15%, about 2.25% to about 15%, about 2.5% to about 15%, about 2.75% to about 15%, about 3% to about 15%, about 3.25% to about 15%, about 3.5% to about 15%, about 3.75% to about 15%, about 4% to about 15%, about 4.25% to about 15%, about 4.5% to about 15%, about 4.75% to about 15%, about 5% to about 15%, about 5.25% to about 15%, about 5.5% to about 15%, about 5.75% to about 15%, about 6% to about 15%, about 6.25% to about 15%, about 6.5% to about 15%, about 6.75% to about 15%, about 8% to about 15%, about 8.25% to about 15%, about 8.5% to about 15%, about 8.75% to about 15%, about 9% to about 15%, about 9.25% to about 15%, about 9.5% to about 15%, about 9.75% to about 15%, about 10% to about 15%, about 10.25% to about 15%, about 10.5% to about 15%, about 10.75% to about 15%, about 11% to about 15%, about 11.25% to about 15%, about 11.5% to about 15%, about 11.75% to about 15%, about 12% to about 15%, about 12.25% to about 15%, about 12.5% to about 15%, about 12.75% to about 15%, about 13% to about 15%, about 13.25% to about 15%, about 13.5% to about 15%, about 13.75% to about 15%, about 14% to about 15%, about 14.25% to about 15%, about 14.5% to about 15%, about 14.75% to about 15%, about 0.05% to about 14.75%, about 0.05% to about 14.5%, about 0.05% to about 14.25%, about 0.05% to about 14%, about 0.05% to about 13.75%, about 0.05% to about 13.5%, about 0.05% to about 13.25%, about 0.05% to about 13%, about 0.05% to about 12.75%, about 0.05% to about 12.5%, about 0.05% to about 12.25%, about 0.05% to about 12%, about 0.05% to about 11.75%, about 0.05% to about 11.5%, about 0.05% to about 11.25%, about 0.05% to about 11%, about 0.05% to about 10.75%, about 0.05% to about 10.5%, about 0.05% to about 10.25%, about 0.05% to about 10%, about 0.05% to about 9.75%, about 0.05% to about 9.5%, about 0.05% to about 9.5%, about 0.05% to about 9.25%, about 0.05% to about 9%, about 0.05% to about 8.75%, about 0.05% to about 8.5%, about 0.05% to about 8.25%, about 0.05% to about 8%, about 0.05% to about 7.75%, about 0.05% to about 7.5%, about 0.05% to about 7.25%, about 0.05% to about 7%, about 0.05% to about 6.75%, about 0.05% to about 6.5%, about 0.05% to about 6.25%, about 0.05% to about 6%, about 0.05% to about 5.75%, about 0.05% to about 5.5%, about 0.05% to about 5.25%, about 0.05% to about 5%, about 0.05% to about 4.75%, about 0.05% to about 4.5%, about 0.05% to about 4.25%, about 0.05% to about 4%, about 0.05% to about 3.75%, about 0.05% to about 3.5%, about 0.05% to about 3.25%, about 0.05% to about 3%, about 0.05% to about 2.75%, about 0.05% to about 2.5%, about 0.05% to about 2.25%, about 0.05% to about 2%, about 0.05% to about 1.75%, about 0.05% to about 1.5%, about 0.05% to about 1.25%, about 0.05% to about 1%, about 0.05% to about 0.75%, about 0.05% to about 0.5%, about 0.05% to about 0.25%, about 0.5% to about 14.5%, about 1% to about 14%, about 1.5% to about 13.5%, about 2% to about 13%, about 2.5% to about 12.5%, about 3% to about 12%, about 3.5% to about 11.5%, about 4% to about 11%, about 4.5% to about 10.5%, about 5% to about 10%, about 5.5% to about 9.5%, about 6% to about 9%, about 6.5% to about 8.5%, about 7% to about 8%, about 2% to about 3%, about 2% to about 4%, about 2% to about 5%, about 2% to about 6%, about 2% to about 7%, about 2% to about 8%, about 2% to about 9%, about 2% to about 10%, about 2% to about 11%, about 2% to about 12%, about 2% to about 13%, about 2% to about 14%, about 3% to about 4%, about 3% to about 5%, about 3% to about 6%, about 3% to about 7%, about 3% to about 8%, about 3% to about 9%, about 3% to about 10%, about 3% to about 11%, about 3% to about 12%, about 3% to about 13%, about 3% to about 14%, about 4% to about 5%, about 4% to about 6%, about 4% to about 7%, about 4% to about 8%, about 4% to about 9%, about 4% to about 10%, about 4% to about 11%, about 4% to about 12%, about 4% to about 13%, about 4% to about 14%, about 5% to about 6%, about 5% to about 7%, about 5% to about 8%, about 5% to about 9%, about 5% to about 10%, about 5% to about 11%, about 5% to about 12%, about 5% to about 13%, about 5% to about 14%, about 6% to about 7%, about 6% to about 8%, about 6% to about 9%, about 6% to about 10%, about 6% to about 11%, about 6% to about 12%, about 6% to about 13%, about 6% to about 14%, about 7% to about 8%, about 7% to about 9%, about 7% to about 10%, about 7% to about 11%, about 7% to about 12%, about 7% to about 13%, about 7% to about 14%, about 8% to about 9%, about 8% to about 10%, about 8% to about 11%, about 8% to about 12%, about 8% to about 13%, about 8% to about 14%, about 9% to about 10%, about 9% to about 11%, about 9% to about 12%, about 9% to about 13%, about 9% to about 14%, about 10% to about 11%, about 10% to about 12%, about 10% to about 13%, about 10% to about 14%, about 11% to about 12%, about 11% to about 13%, about 11% to about 14%, about 12% to about 13%, about 12% to about 14%, or about 13% to about 14% by weight. Other cedarwood oils (*e.g., Mexicana*) can be supplemented with one or more active compounds to obtain the desired results.

Hydrogenated castor oil (also called castor wax) is a wax produced from chemically-modification of castor oil. Hydrogenated castor oil is an emollient and consistency building material. With respect to hydrogenated castor oil, contemplated insect, bacteria, and/or fungi control compositions can contain about 0.05%, 0.1%, 0.15%, 0.2%, 0.25%, 0.3%, 0.35%, 0.4%, 0.45%, 0.5%, 0.55%, 0.6%, 0.65%, 0.7%, 0.75%, 0.8%, 0.85%, 0.9%, 0.95%, 1%, 1.05%, 1.1%, 1.15%, 1.2%, 1.25%, 1.3%, 1.35%, 1.4%, 1.45%, 1.5%, 1.55%, 1.6%, 1.65%, 1.7%, 1.75%, 1.8%, 1.85%, 1.9%, 1.95%, 2%, 2.05%, 2.1%, 2.15%, 2.2%, 2.25%, 2.3%, 2.35%, 2.4%, 2.45%, 2.5%, 2.55%, 2.6%, 2.65%, 2.7%, 2.75%, 2.8%, 2.85%, 2.9%, 2.95%, 3%, 3.05%, 3.1%, 3.15%, 3.2%, 3.25%, 3.3%, 3.35%, 3.4%, 3.45%, 3.5%, 3.55%, 3.6%, 3.65%, 3.7%, 3.75%, 3.8%, 3.85%, 3.9%, 3.95%, 4%, 4.05%, 4.1%, 4.15%, 4.2%, 4.25%, 4.3%, 4.35%, 4.4%, 4.45%, 4.5%, 4.55%, 4.6%, 4.65%, 4.7%, 4.75%, 4.8%, 4.85%, 4.9%, 4.95%, 5%, 5.05%, 5.1%, 5.15%, 5.2%, 5.25%, 5.3%, 5.35%, 5.4%, 5.45%, 5.5%, 5.55%, 5.6%, 5.65%, 5.7%, 5.75%, 5.8%, 5.85%, 5.9%, 5.95%, 6%, 6.05%, 6.1%, 6.15%, 6.2%, 6.25%, 6.3%, 6.35%, 6.4%, 6.45%, 6.5%, 6.55%, 6.6%, 6.65%, 6.7%, 6.75%, 6.8%, 6.85%, 6.9%, 6.95%, 7%, 7.05%, 7.1%, 7.15%, 7.2%, 7.25%, 7.3%, 7.35%, 7.4%, 7.45%, 7.5%, 7.55%, 7.6%, 7.65%, 7.7%, 7.75%, 7.8%, 7.85%, 7.9%, 7.95%, 8%, 8.05%, 8.1%, 8.15%, 8.2%, 8.25%, 8.3%, 8.35%, 8.4%, 8.45%, 8.5%, 8.55%, 8.6%, 8.65%, 8.7%, 8.75%, 8.8%, 8.85%, 8.9%, 8.95%, 9%, 9.05%, 9.1%, 9.15%, 9.2%, 9.25%, 9.3%, 9.35%, 9.4%, 9.45%, 9.5%, 9.55%, 9.6%, 9.65%, 9.7%, 9.75%, 9.8%, 9.85%, 9.9%, 9.95%, 10%, 10.05%, 10.1%, 10.15%, 10.2%, 10.25%, 10.3%, 10.35%, 10.4%, 10.45%, 10.5%, 10.55%, 10.6%, 10.65%, 10.7%, 10.75%, 10.8%, 10.85%, 10.9%, 10.95%, 11%, 11.05%, 11.1%, 11.15%, 11.2%, 11.25%, 11.3%, 11.35%, 11.4%, 11.45%, 11.5%, 11.55%, 11.6%, 11.65%, 11.7%, 11.75%, 11.8%, 11.85%, 11.9%, 11.95%, 12%, 12.05%, 12.1%, 12.15%, 12.2%, 12.25%, 12.3%, 12.35%, 12.4%, 12.45%, 12.5%, 12.55%, 12.6%, 12.65%, 12.7%, 12.75%, 12.8%, 12.85%, 12.9%, 12.95%, 3%, 13.05%, 13.1%, 13.15%, 13.2%, 13.25%, 13.3%, 13.35%, 13.4%, 13.45%, 13.5%, 13.55%, 13.6%, 13.65%, 13.7%, 13.75%, 13.8%, 13.85%, 13.9%, 13.95%, 14%, 14.05%, 14.1%, 14.15%, 14.2%, 14.25%, 14.3%, 14.35%, 14.4%, 14.45%, 14.5%, 14.55%, 14.6%, 14.65%, 14.7%, 14.75%, 14.8%, 14.85%, 14.9%, 14.95%, 15%, 15.1%, 15.2%, 15.3%, 15.4%, 15.5%, 15.6%, 15.7%, 15.8%, 15.9%, 16%, 16.1%, 16.2%, 16.3%, 16.4%, 16.5%, 16.6%, 16.7%, 16.8%, 16.9%, 17%, 17.1%, 17.2%, 17.3%, 17.4%, 17.5%, 17.6%, 17.7%, 17.8%, 17.9%, 18%, 18.1%, 18.2%, 18.3%, 18.4%, 18.5%, 18.6%, 18.7%, 18.8%, 18.9%, 19%, 19.1%, 19.2%, 19.3%, 19.4%, 19.5%, 19.6%, 19.7%, 19.8%, 19.9%, 20%, 20.5%, 21%, 21.5%, 22%, 22.5%, 23%, 23.5%, 24%, 24.5%, 25%, 25.5%, 26%, 26.5%, 27%, 27.5%, 28%, 28.5%, 29%, 29.5%, 30%, 30.5%, 31%, 31.5%, 32%, 32.5%, 33%, 33.5%, 34%, 34.5%, or 35% by weight hydrogenated castor oil. These values of hydrogenated castor oil can also be expressed as ranges, for example, of from about 0.05% to about 35%, about 0.25% to about 35%, about 0.5% to about 35%, about 0.75% to about 35%, about 1% to about 35%, about 1.25% to about 35%, about 1.5% to about 35%, about 1.75% to about 35%, about 2% to about 35%, about 2.25% to about 35%, about 2.5% to about 35%, about 2.75% to about 35%, about 3% to about 35%, about 3.25% to about 35%, about 3.5% to about 35%, about 3.75% to about 35%, about 4% to about 35%, about 4.25% to about 35%, about 4.5% to about 35%, about 4.75% to about 35%, about 5% to about 35%, about 5.25% to about 35%, about 5.5% to about 35%, about 5.75% to about 35%, about 6% to about 35%, about 6.25% to about 35%, about 6.5% to about 35%, about 6.75% to about 35%, about 8% to about 35%, about 8.25% to about 35%, about 8.5% to about 35%, about 8.75% to about 35%, about 9% to about 35%, about 9.25% to about 35%, about 9.5% to about 35%, about 9.75% to about 35%, about 10% to about 35%, about 10.25% to about 35%, about 10.5% to about 35%, about 10.75% to about 35%, about 11% to about 35%, about 11.25% to about 35%, about 11.5% to about 35%, about 11.75% to about 35%, about 12% to about 35%, about 12.25% to about 35%, about 12.5% to about 35%, about 12.75% to about 35%, about 13% to about 35%, about 13.25% to about 35%, about 13.5% to about 35%, about 13.75% to about 35%, about 14% to about 35%, about 14.25% to about 35%, about 14.5% to about 35%, about 14.75% to about 35%, about 15% to about 35%, about 15.25% to about 35%, about 15.5% to about 35%, about 15.75% to about 35%, about 16% to about 35%, about 16.25% to about 35%, about 16.5% to about 35%, about 16.75% to about 35%, about 17% to about 35%, about 17.25% to about 35%, about 17.5% to about 35%, about 17.75% to about 35%, about 18% to about 35%, about 18.25% to about 35%, about 18.5% to about 35%, about 18.75% to about 35%, about 19% to about 35%, about 19.25% to about 35%, about 19.5% to about 35%, about 19.75% to about 35%, about 20% to about 35%, about 20.5% to about 35%, about 21% to about 35%, about 21.5% to about 35%, about 22% to about 35%, about 22.5% to about 35%, about 23% to about 35%, about 23.5% to about 35%, about 24% to about 35%, about 24.5% to about 35%, about 25% to about 35%, about 25.5% to about 35%, about 26% to about 35%, about 26.5% to about 35%, about 27% to about 35%, about 27.5% to about 35%, about 28% to about 35%, about 28.5% to about 35%, about 29% to about 35%, about 29.5% to about 35%, about 30% to about 35%, about 30.5% to about 35%, about 31% to about 35%, about 31.5% to about 35%, about 32% to about 35%, about 32.5% to about 35%, about 33% to about 35%, about 33.5% to about 35%, about 34% to about 35%, about 34.5% to about 35%, about 0.05% to about 34.5%, about 0.05% to about 34%, about 0.05% to about 33.5%, about 0.05% to about 33%, about 0.05% to about 32.5%, about 0.05% to about 32%, about 0.05% to about 31.5%, about 0.05% to about 31%, about 0.05% to about 30.5%, about 0.05% to about 30%, about 0.05% to about 29.5%, about 0.05% to about 29%, about 0.05% to about 28.5%, about 0.05% to about 27%, about 0.05% to about 26.5%, about 0.05% to about 26%, about 0.05% to about 25.5%, about 0.05% to about 25%, about 0.05% to about 24.5%, about 0.05% to about 24%, about 0.05% to about 23.5%, about 0.05% to about 23%, about 0.05% to about 22.5%, about 0.05% to about 22%, about 0.05% to about 21.5%, about 0.05% to about 21%, about 0.05% to about 20.5%, about 0.05% to about 20%, about 0.05% to about 19.75%, about 0.05% to about 19.5%, about 0.05% to about 19.25%, about 0.05% to about 19%, about 0.05% to about 18.75%, about 0.05% to about 18.5%, about 0.05% to about 18.25%, about 0.05% to about 18%, about 0.05% to about 17.75%, about 0.05% to about 17.5%, about 0.05% to about 17.25%, about 0.05% to about 17%, about 0.05% to about 16.75%, about 0.05% to about 16.5%, about 0.05% to about 16.25%, about 0.05% to about 16%, about 0.05% to about 15.75%, about 0.05% to about 15.5%, about 0.05% to about 15.25%, about 0.05% to about 15%, about 0.05% to about 14.75%, about 0.05% to about 14.5%, about 0.05% to about 14.25%, about 0.05% to about 14%, about 0.05% to about 13.75%, about 0.05% to about 13.5%, about 0.05% to about 13.25%, about 0.05% to about 13%, about 0.05% to about 12.75%, about 0.05% to about 12.5%, about 0.05% to about 12.25%, about 0.05% to about 12%, about 0.05% to about 11.75%, about 0.05% to about 11.5%, about 0.05% to about 11.25%, about 0.05% to about 11%, about 0.05% to about 10.75%, about 0.05% to about 10.5%, about 0.05% to about 10.25%, about 0.05% to about 10%, about 0.05% to about 9.75%, about 0.05% to about 9.5%, about 0.05% to about 9.5%, about 0.05% to about 9.25%, about 0.05% to about 9%, about 0.05% to about 8.75%, about 0.05% to about 8.5%, about 0.05% to about 8.25%, about 0.05% to about 8%, about 0.05% to about 7.75%, about 0.05% to about 7.5%, about 0.05% to about 7.25%, about 0.05% to about 7%, about 0.05% to about 6.75%, about 0.05% to about 6.5%, about 0.05% to about 6.25%, about 0.05% to about 6%, about 0.05% to about 5.75%, about 0.05% to about 5.5%, about 0.05% to about 5.25%, about 0.05% to about 5%, about 0.05% to about 4.75%, about 0.05% to about 4.5%, about 0.05% to about 4.25%, about 0.05% to about 4%, about 0.05% to about 3.75%, about 0.05% to about 3.5%, about 0.05% to about 3.25%, about 0.05% to about 3%, about 0.05% to about 2.75%, about 0.05% to about 2.5%, about 0.05% to about 2.25%, about 0.05% to about 2%, about 0.05% to about 1.75%, about 0.05% to about 1.5%, about 0.05% to about 1.25%, about 0.05% to about 1%, about 0.05% to about 0.75%, about 0.05% to about 0.5%, about 0.05% to about 0.25%, about 0.5% to about 34.5%, about 1% to about 34%, about 1.5% to about 33.5%, about 2% to about 33%, about 2.5% to about 32.5%, about 3% to about 32%, about 3.5% to about 31.5%, about 4% to about 31%, about 4.5% to about 30.5%, about 5% to about 30%, about 5.5% to about 29.5%, about 6% to about 29%, about 6.5% to about 28.5%, about 7% to about 28%, about 7.5% to about 27.5%, about 8% to about 27%, about 8.5% to about 26.5%, about 9% to about 26%, about 9.5% to about 25.5%, about 10% to about 25%, about 10.5% to about 24.5%, about 11% to about 24%, about 11.5% to about 23.5%, about 12% to about 23%, about 12.5% to about 22.5%, about 13% to about 22%, about 13.5% to about 21.5%, about 14% to about 21%, about 14.5% to about 20.5%, about 15% to about 20%, about 15.5% to about 19.5%, about 16% to about 19%, about 16.5% to about 18.5%, about 17% to about 18%, about 2% to about 3%, about 2% to about 4%, about 2% to about 5%, about 2% to about 6%, about 2% to about 7%, about 2% to about 8%, about 2% to about 9%, about 2% to about 10%, about 2% to about 11%, about 2% to about 12%, about 2% to about 13%, about 2% to about 14%, about 2% to about 15%, about 2% to about 16%, about 2% to about 17%, about 2% to about 18%, about 2% to about 19%, about 2% to about 20%, about 2% to about 21%, about 2% to about 22%, about 2% to about 23%, about 2% to about 24%, about 2% to about 25%, about 2% to about 26%, about 2% to about 27%, about 2% to about 28%, about 2% to about 29%, about 2% to about 30%, about 2% to about 31%, about 2% to about 32%, about 2% to about 33%, about 2% to about 34%, about 3% to about 4%, about 3% to about 5%, about 3% to about 6%, about 3% to about 7%, about 3% to about 8%, about 3% to about 9%, about 3% to about 10%, about 3% to about 11%, about 3% to about 12%, about 3% to about 13%, about 3% to about 14%, about 3% to about 15%, about 3% to about 16%, about 3% to about 17%, about 3% to about 18%, about 3% to about 19%, about 3% to about 20%, about 3% to about 21%, about 3% to about 22%, about 3% to about 23%, about 3% to about 24%, about 3% to about 25%, about 3% to about 26%, about 3% to about 27%, about 3% to about 28%, about 3% to about 29%, about 3% to about 30%, about 3% to about 31%, about 3% to about 32%, about 3% to about 33%, about 3% to about 34%, about 4% to about 5%, about 4% to about 6%, about 4% to about 7%, about 4% to about 8%, about 4% to about 9%, about 4% to about 10%, about 4% to about 11%, about 4% to about 12%, about 4% to about 13%, about 4% to about 14%, about 4% to about 15%, about 4% to about 16%, about 4% to about 17%, about 4% to about 18%, about 4% to about 19%, about 4% to about 20%, about 4% to about 21%, about 4% to about 22%, about 4% to about 23%, about 4% to about 24%, about 4% to about 25%, about 4% to about 26%, about 4% to about 27%, about 4% to about 28%, about 4% to about 29%, about 4% to about 30%, about 4% to about 31%, about 4% to about 32%, about 4% to about 33%, about 4% to about 34%, about 5% to about 6%, about 5% to about 7%, about 5% to about 8%, about 5% to about 9%, about 5% to about 10%, about 5% to about 11%, about 5% to about 12%, about 5% to about 13%, about 5% to about 14%, about 5% to about 15%, about 5% to about 16%, about 5% to about 17%, about 5% to about 18%, about 5% to about 19%, about 5% to about 20%, about 5% to about 21%, about 5% to about 22%, about 5% to about 23%, about 5% to about 24%, about 5% to about 25%, about 5% to about 26%, about 5% to about 27%, about 5% to about 28%, about 5% to about 29%, about 5% to about 30%, about 5% to about 31%, about 5% to about 32%, about 5% to about 33%, about 5% to about 34%, about 6% to about 7%, about 6% to about 8%, about 6% to about 9%, about 6% to about 10%, about 6% to about 11%, about 6% to about 12%, about 6% to about 13%, about 6% to about 14%, about 6% to about 15%, about 6% to about 16%, about 6% to about 17%, about 6% to about 18%, about 6% to about 19%, about 6% to about 20%, about 6% to about 21%, about 6% to about 22%, about 6% to about 23%, about 6% to about 24%, about 6% to about 25%, about 6% to about 26%, about 6% to about 27%, about 6% to about 28%, about 6% to about 29%, about 6% to about 30%, about 6% to about 31%, about 6% to about 32%, about 6% to about 33%, about 6% to about 34%, about 7% to about 8%, about 7% to about 9%, about 7% to about 10%, about 7% to about 11%, about 7% to about 12%, about 7% to about 13%, about 7% to about 14%, about 7% to about 15%, about 7% to about 16%, about 7% to about 17%, about 7% to about 18%, about 7% to about 19%, about 7% to about 20%, about 7% to about 21%, about 7% to about 22%, about 7% to about 23%, about 7% to about 24%, about 7% to about 25%, about 7% to about 26%, about 7% to about 27%, about 7% to about 28%, about 7% to about 29%, about 7% to about 30%, about 7% to about 31%, about 7% to about 32%, about 7% to about 33%, about 7% to about 34%, about 8% to about 9%, about 8% to about 10%, about 8% to about 11%, about 8% to about 12%, about 8% to about 13%, about 8% to about 14%, about 8% to about 15%, about 8% to about 16%, about 8% to about 17%, about 8% to about 18%, about 8% to about 19%, about 8% to about 20%, about 8% to about 21%, about 8% to about 22%, about 8% to about 23%, about 8% to about 24%, about 8% to about 25%, about 8% to about 26%, about 8% to about 27%, about 8% to about 28%, about 8% to about 29%, about 8% to about 30%, about 8% to about 31%, about 8% to about 32%, about 8% to about 33%, about 8% to about 34%, about 9% to about 10%, about 9% to about 11%, about 9% to about 12%, about 9% to about 13%, about 9% to about 14%, about 9% to about 15%, about 9% to about 16%, about 9% to about 17%, about 9% to about 18%, about 9% to about 19%, about 9% to about 20%, about 9% to about 21%, about 9% to about 22%, about 9% to about 23%, about 9% to about 24%, about 9% to about 25%, about 9% to about 26%, about 9% to about 27%, about 9% to about 28%, about 9% to about 29%, about 9% to about 30%, about 9% to about 31%, about 9% to about 32%, about 9% to about 33%, about 9% to about 34%, about 10% to about 11%, about 10% to about 12%, about 10% to about 13%, about 10% to about 14%, about 10% to about 15%, about 10% to about 16%, about 10% to about 17%, about 10% to about 18%, about 10% to about 19%, about 10% to about 20%, about 10% to about 21%, about 10% to about 22%, about 10% to about 23%, about 10% to about 24%, about 10% to about 25%, about 10% to about 26%, about 10% to about 27%, about 10% to about 28%, about 10% to about 29%, about 10% to about 30%, about 10% to about 31%, about 10% to about 32%, about 10% to about 33%, about 10% to about 34%, about 11% to about 12%, about 11% to about 13%, about 11% to about 14%, about 11% to about 15%, about 11% to about 16%, about 11% to about 17%, about 11% to about 18%, about 11% to about 19%, about 11% to about 20%, about 11% to about 21%, about 11% to about 22%, about 11% to about 23%, about 11% to about 24%, about 11% to about 25%, about 11% to about 26%, about 11% to about 27%, about 11% to about 28%, about 11% to about 29%, about 11% to about 30%, about 11% to about 31%, about 11% to about 32%, about 11% to about 33%, about 11% to about 34%, about 12% to about 13%, about 12% to about 14%, about 12% to about 15%, about 12% to about 16%, about 12% to about 17%, about 12% to about 18%, about 12% to about 19%, about 12% to about 20%, about 12% to about 21%, about 12% to about 22%, about 12% to about 23%, about 12% to about 24%, about 12% to about 25%, about 12% to about 26%, about 12% to about 27%, about 12% to about 28%, about 12% to about 29%, about 12% to about 30%, about 12% to about 31%, about 12% to about 32%, about 12% to about 33%, about 12% to about 34%, about 13% to about 14%, about 13% to about 15%, about 13% to about 16%, about 13% to about 17%, about 13% to about 18%, about 13% to about 19%, about 13% to about 20%, about 13% to about 21%, about 13% to about 22%, about 13% to about 23%, about 13% to about 24%, about 13% to about 25%, about 13% to about 26%, about 13% to about 27%, about 13% to about 28%, about 13% to about 29%, about 13% to about 30%, about 13% to about 31%, about 13% to about 32%, about 13% to about 33%, about 13% to about 34%, about 14% to about 15%, about 14% to about 16%, about 14% to about 17%, about 14% to about 18%, about 14% to about 19%, about 14% to about 20%, about 14% to about 21%, about 14% to about 22%, about 14% to about 23%, about 14% to about 24%, about 14% to about 25%, about 14% to about 26%, about 14% to about 27%, about 14% to about 28%, about 14% to about 29%, about 14% to about 30%, about 14% to about 31%, about 14% to about 32%, about 14% to about 33%, about 14% to about 34%, about 15% to about 16%, about 15% to about 17%, about 15% to about 18%, about 15% to about 19%, about 15% to about 20%, about 15% to about 21%, about 15% to about 22%, about 15% to about 23%, about 15% to about 24%, about 15% to about 25%, about 15% to about 26%, about 15% to about 27%, about 15% to about 28%, about 15% to about 29%, about 15% to about 30%, about 15% to about 31%, about 15% to about 32%, about 15% to about 33%, about 15% to about 34%, about 16% to about 17%, about 16% to about 18%, about 16% to about 19%, about 16% to about 20%, about 16% to about 21%, about 16% to about 22%, about 16% to about 23%, about 16% to about 24%, about 16% to about 25%, about 16% to about 26%, about 16% to about 27%, about 16% to about 28%, about 16% to about 29%, about 16% to about 30%, about 16% to about 31%, about 16% to about 32%, about 16% to about 33%, about 16% to about 34%, about 17% to about 18%, about 17% to about 19%, about 17% to about 20%, about 17% to about 21%, about 17% to about 22%, about 17% to about 23%, about 17% to about 24%, about 17% to about 25%, about 17% to about 26%, about 17% to about 27%, about 17% to about 28%, about 17% to about 29%, about 17% to about 30%, about 17% to about 31%, about 17% to about 32%, about 17% to about 33%, about 17% to about 34%, about 18% to about 19%, about 18% to about 20%, about 18% to about 21%, about 18% to about 22%, about 18% to about 23%, about 18% to about 24%, about 18% to about 25%, about 18% to about 26%, about 18% to about 27%, about 18% to about 28%, about 18% to about 29%, about 18% to about 30%, about 18% to about 31%, about 18% to about 32%, about 18% to about 33%, about 18% to about 34%, about 19% to about 20%, about 19% to about 21%, about 19% to about 22%, about 19% to about 23%, about 19% to about 24%, about 19% to about 25%, about 19% to about 26%, about 19% to about 27%, about 19% to about 28%, about 19% to about 29%, about 19% to about 30%, about 19% to about 31%, about 19% to about 32%, about 19% to about 33%, about 19% to about 34%, about 20% to about 21%, about 20% to about 22%, about 20% to about 23%, about 20% to about 24%, about 20% to about 25%, about 20% to about 26%, about 20% to about 27%, about 20% to about 28%, about 20% to about 29%, about 20% to about 30%, about 20% to about 31%, about 20% to about 32%, about 20% to about 33%, about 20% to about 34%, about 21% to about 22%, about 21% to about 23%, about 21% to about 24%, about 21% to about 25%, about 21% to about 26%, about 21% to about 27%, about 21% to about 28%, about 21% to about 29%, about 21% to about 30%, about 21% to about 31%, about 21% to about 32%, about 21% to about 33%, about 21% to about 34%, about 22% to about 23%, about 22% to about 24%, about 22% to about 25%, about 22% to about 26%, about 22% to about 27%, about 22% to about 28%, about 22% to about 29%, about 22% to about 30%, about 22% to about 31%, about 22% to about 32%, about 22% to about 33%, about 22% to about 34%, about 23% to about 24%, about 23% to about 25%, about 23% to about 26%, about 23% to about 27%, about 23% to about 28%, about 23% to about 29%, about 23% to about 30%, about 23% to about 31%, about 23% to about 32%, about 23% to about 33%, about 23% to about 34%, about 24% to about 25%, about 24% to about 26%, about 24% to about 27%, about 24% to about 28%, about 24% to about 29%, about 24% to about 30%, about 24% to about 31%, about 24% to about 32%, about 24% to about 33%, about 24% to about 34%, about 25% to about 26%, about 25% to about 27%, about 25% to about 28%, about 25% to about 29%, about 25% to about 30%, about 25% to about 31%, about 25% to about 32%, about 25% to about 33%, about 25% to about 34%, about 26% to about 27%, about 26% to about 28%, about 26% to about 29%, about 26% to about 30%, about 26% to about 31%, about 26% to about 32%, about 26% to about 33%, about 26% to about 34%, about 27% to about 28%, about 27% to about 29%, about 27% to about 30%, about 27% to about 31%, about 27% to about 32%, about 27% to about 33%, about 27% to about 34%, about 28% to about 29%, about 28% to about 30%, about 28% to about 31%, about 28% to about 32%, about 28% to about 33%, about 28% to about 34%, about 29% to about 30%, about 29% to about 31%, about 29% to about 32%, about 29% to about 33%, about 29% to about 34%, about 30% to about 31%, about 30% to about 32%, about 30% to about 33%, about 30% to about 34%, about 31% to about 32%, about 31% to about 33%, about 31% to about 34%, about 32% to about 33%, about 32% to about 34%, or about 33% to about 34% by weight.

In some embodiments, the insect, bacteria, and/or fungi control composition can comprise one or more of the following individual terpenes (e.g., separated from their natural oils): $\alpha$-pinene (pines), linalool (mints, lavender), myrcene (myrtles, cannabis), $\beta$-caryophyllene (peppercorn, cannabis, rosemary, hops), caryophyllene oxide (cannabis), $\alpha$-humulene (hops), limonene (citrus), terpinolene, carene (cedar, rosemary), terpineols (cardamom, cajuput, pine, petitgrain, junipers, orange peel), nerol (lemon grass), menthol (mints), camphor (camphor trees), $\beta$-selinene (celery), citral (lemon myrtle, lemongrass, lemon, lime, orange), retinol (vitamin A; cod liver oil, liver, eggs, cheese, milk), $\beta$-carotene (carrots), P-cymene (cumin, thyme), terpinenes (cardamom, marjoram), citronellal (lemon), thymol (thyme), carvacrol (oregano), carvone (caraway, spearmint, dill), borneol (valerian, camphor, sambong), cinnamaldehyde (cinnamon), eugenol (clove, nutmeg, cinnamon, basil, bay leaf), vanillin (vanilla bean), safrole (sassafras), allyl-isothiocyanate (mustard, radish, horseradish, wasabi), allicin (garlic), eucalyptol (eucalyptus), farnesenes (apples), zingiberene (ginger), parthenolide (feverfew), artemisinin (sweet wormwood), taxol (Pacific yew), cholesterol (animal cells), hopane (dammar resin), and/or zeaxanthin (paprika, corn, saffron, wolfberries). With respect to such terpenes, contemplated insect, bacteria, and/or fungi control compositions can contain about 0.05%, 0.1%, 0.15%, 0.2%, 0.25%, 0.3%, 0.35%, 0.4%, 0.45%, 0.5%, 0.55%, 0.6%, 0.65%, 0.7%, 0.75%, 0.8%, 0.85%, 0.9%, 0.95%, 1%, 1.05%, 1.1%, 1.15%, 1.2%, 1.25%, 1.3%, 1.35%, 1.4%, 1.45%, 1.5%, 1.55%, 1.6%, 1.65%, 1.7%, 1.75%, 1.8%, 1.85%, 1.9%, 1.95%, 2%, 2.05%, 2.1%, 2.15%, 2.2%, 2.25%, 2.3%, 2.35%, 2.4%, 2.45%, 2.5%, 2.55%, 2.6%, 2.65%, 2.7%, 2.75%, 2.8%, 2.85%, 2.9%, 2.95%, 3%, 3.05%, 3.1%, 3.15%, 3.2%, 3.25%, 3.3%, 3.35%, 3.4%, 3.45%, 3.5%, 3.55%, 3.6%, 3.65%, 3.7%, 3.75%, 3.8%, 3.85%, 3.9%, 3.95%, 4%, 4.05%, 4.1%, 4.15%, 4.2%, 4.25%, 4.3%, 4.35%, 4.4%, 4.45%, 4.5%, 4.55%, 4.6%, 4.65%, 4.7%, 4.75%, 4.8%, 4.85%, 4.9%, 4.95%, 5%, 5.05%, 5.1%, 5.15%, 5.2%, 5.25%, 5.3%, 5.35%, 5.4%, 5.45%, 5.5%, 5.55%, 5.6%, 5.65%, 5.7%, 5.75%, 5.8%, 5.85%, 5.9%, 5.95%, 6%, 6.05%, 6.1%, 6.15%, 6.2%, 6.25%, 6.3%, 6.35%, 6.4%, 6.45%, 6.5%, 6.55%, 6.6%, 6.65%, 6.7%, 6.75%, 6.8%, 6.85%, 6.9%, 6.95%, 7%, 7.05%, 7.1%, 7.15%, 7.2%, 7.25%, 7.3%, 7.35%, 7.4%, 7.45%, 7.5%, 7.55%, 7.6%, 7.65%, 7.7%, 7.75%, 7.8%, 7.85%, 7.9%, 7.95%, 8%, 8.05%, 8.1%, 8.15%, 8.2%, 8.25%, 8.3%, 8.35%, 8.4%, 8.45%, 8.5%, 8.55%, 8.6%, 8.65%, 8.7%, 8.75%, 8.8%, 8.85%, 8.9%, 8.95%, 9%, 9.05%, 9.1%, 9.15%, 9.2%, 9.25%, 9.3%, 9.35%, 9.4%, 9.45%, 9.5%, 9.55%, 9.6%, 9.65%, 9.7%, 9.75%, 9.8%, 9.85%, 9.9%, 9.95%, 10%, 10.05%, 10.1%, 10.15%, 10.2%, 10.25%, 10.3%, 10.35%, 10.4%, 10.45%, 10.5%, 10.55%, 10.6%, 10.65%, 10.7%, 10.75%, 10.8%, 10.85%, 10.9%, 10.95%, 11%, 11.05%, 11.1%, 11.15%, 11.2%, 11.25%, 11.3%, 11.35%, 11.4%, 11.45%, 11.5%, 11.55%, 11.6%, 11.65%, 11.7%, 11.75%, 11.8%, 11.85%, 11.9%, 11.95%, 12%, 12.05%, 12.1%, 12.15%, 12.2%, 12.25%, 12.3%, 12.35%, 12.4%, 12.45%, 12.5%, 12.55%, 12.6%, 12.65%, 12.7%, 12.75%, 12.8%, 12.85%, 12.9%, 12.95%, 3%, 13.05%, 13.1%, 13.15%, 13.2%, 13.25%, 13.3%, 13.35%, 13.4%, 13.45%, 13.5%, 13.55%, 13.6%, 13.65%, 13.7%, 13.75%, 13.8%, 13.85%, 13.9%, 13.95%, 14%, 14.05%, 14.1%, 14.15%, 14.2%, 14.25%, 14.3%, 14.35%, 14.4%, 14.45%, 14.5%, 14.55%, 14.6%, 14.65%, 14.7%, 14.75%, 14.8%, 14.85%, 14.9%, 14.95%, 15%, 15.1%, 15.2%, 15.3%, 15.4%, 15.5%, 15.6%, 15.7%, 15.8%, 15.9%, 16%, 16.1%, 16.2%, 16.3%, 16.4%, 16.5%, 16.6%, 16.7%, 16.8%, 16.9%, 17%, 17.1%, 17.2%, 17.3%, 17.4%, 17.5%, 17.6%, 17.7%, 17.8%, 17.9%, 18%, 18.1%, 18.2%, 18.3%, 18.4%, 18.5%, 18.6%, 18.7%, 18.8%, 18.9%, 19%, 19.1%, 19.2%, 19.3%, 19.4%, 19.5%, 19.6%, 19.7%, 19.8%, 19.9%, 20%, 20.5%, 21%, 21.5%, 22%, 22.5%, 23%, 23.5%, 24%, 24.5%, 25%, 25.5%, 26%, 26.5%, 27%, 27.5%, 28%, 28.5%, or 29% by weight of one or more terpenes. These values of the one or more terpenes can also be expressed as ranges, for example, of from about 0.05% to about 20%, about 0.25% to about 20%, about 0.5% to about 20%, about 0.75% to about 20%, about 1% to about 20%, about 1.25% to about 20%, about 1.5% to about 20%, about 1.75% to about 20%, about 2% to about 20%, about 2.25% to about 20%, about 2.5% to about 20%, about 2.75% to about 20%, about 3% to about 20%, about 3.25% to about 20%, about 3.5% to about 20%, about 3.75% to about 20%, about 4% to about 20%, about 4.25% to about 20%, about 4.5% to about 20%, about 4.75% to about 20%, about 5% to about 20%, about 5.25% to about 20%, about 5.5% to about 20%, about 5.75% to about 20%, about 6% to about 20%, about 6.25% to about 20%, about 6.5% to about 20%, about 6.75% to about 20%, about 8% to about 20%, about 8.25% to about 20%, about 8.5% to about 20%, about 8.75% to about 20%, about 9% to about 20%, about 9.25% to about 20%, about 9.5% to about 20%, about 9.75% to about 20%, about 10% to about 20%, about 10.25% to about 20%, about 10.5% to about 20%, about 10.75% to about 20%, about 11% to about 20%, about 11.25% to about 20%, about 11.5% to about 20%, about 11.75% to about 20%, about 12% to about 20%, about 12.25% to about 20%, about 12.5% to about 20%, about 12.75% to about 20%, about 13% to about 20%, about 13.25% to about 20%, about 13.5% to about 20%, about 13.75% to about 20%, about 14% to about 20%, about 14.25% to about 20%, about 14.5% to about 20%, about 14.75% to about 20%, about 15% to about 20%, about 15.25% to about 20%, about 15.5% to about 20%, about 15.75% to about 20%, about 16% to about 20%, about 16.25% to about 20%, about 16.5% to about 20%, about 16.75% to about 20%, about 17% to about 20%, about 17.25% to about 20%, about 17.5% to about 20%, about 17.75% to about 20%, about 18% to about 20%, about 18.25% to about 20%, about 18.5% to about 20%, about 18.75% to about 20%, about 19% to about 20%, about 19.25% to about 20%, about 19.5% to about 20%, about 19.75% to about 20%, about 0.05% to about 29%, about 0.05% to about 28.5%, about 0.05% to about 27%, about 0.05% to about 26.5%, about 0.05% to about 26%, about 0.05% to about 25.5%, about 0.05% to about 25%, about 0.05% to about 24.5%, about 0.05% to about 24%, about 0.05% to about 23.5%, about 0.05% to about 23%, about 0.05% to about 22.5%, about 0.05% to about 22%, about 0.05% to about 21.5%, about 0.05% to about 21%, about 0.05% to about 20.5%, about 0.05% to about 20%, about 0.05% to about 19.75%, about 0.05% to about 19.5%, about 0.05% to about 19.25%, about 0.05% to about 19%, about 0.05% to about 18.75%, about 0.05% to about 18.5%, about 0.05% to about 18.25%, about 0.05% to about 18%, about 0.05% to about 17.75%, about 0.05% to about 17.5%, about 0.05% to about 17.25%, about 0.05% to about 17%, about 0.05% to about 16.75%, about 0.05% to about 16.5%, about 0.05% to about 16.25%, about 0.05% to about 16%, about 0.05% to about 15.75%, about 0.05% to about 15.5%, about 0.05% to about 15.25%, about 0.05% to about 15%, about 0.05% to about 14.75%, about 0.05% to about 14.5%, about 0.05% to about 14.25%, about 0.05% to about 14%, about 0.05% to about 13.75%, about 0.05% to about 13.5%, about 0.05% to about 13.25%, about 0.05% to about 13%, about 0.05% to about 12.75%, about 0.05% to about 12.5%, about 0.05% to about 12.25%, about 0.05% to about 12%, about 0.05% to about 11.75%, about 0.05% to about 11.5%, about 0.05% to about 11.25%, about 0.05% to about 11%, about 0.05% to about 10.75%, about 0.05% to about 10.5%, about 0.05% to about 10.25%, about 0.05% to about 10%, about 0.05% to about 9.75%, about 0.05% to about 9.5%, about 0.05% to about 9.5%, about 0.05% to about 9.25%, about 0.05% to about 9%, about 0.05% to about 8.75%, about 0.05% to about 8.5%, about 0.05% to about 8.25%, about 0.05% to about 8%, about 0.05% to about 7.75%, about 0.05% to about 7.5%, about 0.05% to about 7.25%, about 0.05% to about 7%, about 0.05% to about 6.75%, about 0.05% to about 6.5%, about 0.05% to about 6.25%, about 0.05% to about 6%, about 0.05% to about 5.75%, about 0.05% to about 5.5%, about 0.05% to about 5.25%, about 0.05% to about 5%, about 0.05% to about 4.75%, about 0.05% to about 4.5%, about 0.05% to about 4.25%, about 0.05% to about 4%, about 0.05% to about 3.75%, about 0.05% to about 3.5%, about 0.05% to about 3.25%, about 0.05% to about 3%, about 0.05% to about 2.75%, about 0.05% to about 2.5%, about 0.05% to about 2.25%, about 0.05% to about 2%, about 0.05% to about 1.75%, about 0.05% to about 1.5%, about 0.05% to about 1.25%, about 0.05% to about 1%, about 0.05% to about 0.75%, about 0.05% to about 0.5%, about 0.05% to about 0.25%, about 0.5% to about 19.5%, about 1% to about 19%, about 1.5% to about 18.5%, about 2% to about 18%, about 2.5% to about 17.5%, about 3% to about 17%, about 3.5% to about 16.5%, about 4% to about 16%, about 4.5% to about 15.5%, about 5% to about 15%, about 5.5% to about 14.5%, about 6% to about 14%, about 6.5% to about 13.5%, about 7% to about 13%, about 7.5% to about 12.5%, about 8% to about 12%, about 8.5% to about 11.5%, about 9% to about 11%, about 9.5% to about 10.5%, about 2% to about 3%, about 2% to about 4%, about 2% to about 5%, about 2% to about 6%, about 2% to about 7%, about 2% to about 8%, about 2% to about 9%, about 2% to about 10%, about 2% to about 11%, about 2% to about 12%, about 2% to about 13%, about 2% to about 14%, about 2% to about 15%, about 2% to about 16%, about 2% to about 17%, about 2% to about 18%, about 2% to about 19%, about 3% to about 4%, about 3% to about 5%, about 3% to about 6%, about 3% to about 7%, about 3% to about 8%, about 3% to about 9%, about 3% to about 10%, about 3% to about 11%, about 3% to about 12%, about 3% to about 13%, about 3% to about 14%, about 3% to about 15%, about 3% to about 16%, about 3% to about 17%, about 3% to about 18%, about 3% to about 19%, about 4% to about 5%, about 4% to about 6%, about 4% to about 7%, about 4% to about 8%, about 4% to about 9%, about 4% to about 10%, about 4% to about 11%, about 4% to about 12%, about 4% to about 13%, about 4% to about 14%, about 4% to about 15%, about 4% to about 16%, about 4% to about 17%, about 4% to about 18%, about 4% to about 19%, about 5% to about 6%, about 5% to about 7%, about 5% to about 8%, about 5% to about 9%, about 5% to about 10%, about 5% to about 11%, about 5% to about 12%, about 5% to about 13%, about 5% to about 14%, about 5% to about 15%, about 5% to about 16%, about 5% to about 17%, about 5% to about 18%, about 5% to about 19%, about 6% to about 7%, about 6% to about 8%, about 6% to about 9%, about 6% to about 10%, about 6% to about 11%, about 6% to about 12%, about 6% to about 13%, about 6% to about 14%, about 6% to about 15%, about 6% to about 16%, about 6% to about 17%, about 6% to about 18%, about 6% to about 19%, about 7% to about 8%, about 7% to about 9%, about 7% to about 10%, about 7% to about 11%, about 7% to about 12%, about 7% to about 13%, about 7% to about 14%, about 7% to about 15%, about 7% to about 16%, about 7% to about 17%, about 7% to about 18%, about 7% to about 19%, about 8% to about 9%, about 8% to about 10%, about 8% to about 11%, about 8% to about 12%, about 8% to about 13%, about 8% to about 14%, about 8% to about 15%, about 8% to about 16%, about 8% to about 17%, about 8% to about 18%, about 8% to about 19%, about 9% to about 10%, about 9% to about 11%, about 9% to about 12%, about 9% to about 13%, about 9% to about 14%, about 9% to about 15%, about 9% to about 16%, about 9% to about 17%, about 9% to about 18%, about 9% to about 19%, about 10% to about 11%, about 10% to about 12%, about 10% to about 13%, about 10% to about 14%, about 10% to about 15%, about 10% to about 16%, about 10% to about 17%, about 10% to about 18%, about 10% to about 19%, about 11% to about 12%, about 11% to about 13%, about 11% to about 14%, about 11% to about 15%, about 11% to about 16%, about 11% to about 17%, about 11% to about 18%, about 11% to about 19%, about 12% to about 13%, about 12% to about 14%, about 12% to about 15%, about 12% to about 16%, about 12% to about 17%, about 12% to about 18%, about 12% to about 19%, about 13% to about 14%, about 13% to about 15%, about 13% to about 16%, about 13% to about 17%, about 13% to about 18%, about 13% to about 19%, about 14% to about 15%, about 14% to about 16%, about 14% to about 17%, about 14% to about 18%, about 14% to about 19%, about 15% to about 16%, about 15% to about 17%, about 15% to about 18%, about 15% to about 19%, about 16% to about 17%, about 16% to about 18%, about 16% to about 19%, about 17% to about 18%, about 17% to about 19%, about 18% to about 19%, about 6% to about 29%, about 6.5% to about 28.5%, about 7% to about 28%, about 7.5% to about 27.5%, about 8% to about 27%, about 8.5% to about 26.5%, about 9% to about 26%, about 9.5% to about 25.5%, about 10% to about 25%, about 10.5% to about 24.5%, about 11% to about 24%, about 11.5% to about 23.5%, about 12% to about 23%, about 12.5% to about 22.5%, about 13% to about 22%, about 13.5% to about 21.5%, about 14% to about 21%, about 14.5% to about 20.5%, about 2% to about 21%, about 2% to about 22%, about 2% to about 23%, about 2% to about 24%, about 2% to about 25%, about 2% to about 26%, about 2% to about 27%, about 2% to about 28%, about 2% to about 29%, about 3% to about 21%, about 3% to about 22%, about 3% to about 23%, about 3% to about 24%, about 3% to about 25%, about 3% to about 26%, about 3% to about 27%, about 3% to about 28%, about 3% to about 29%, about 4% to about 21%, about 4% to about 22%, about 4% to about 23%, about 4% to about 24%, about 4% to about 25%, about 4% to about 26%, about 4% to about 27%, about 4% to about 28%, about 4% to about 29%, about 5% to about 21%, about 5% to about 22%, about 5% to about 23%, about 5% to about 24%, about 5% to about 25%, about 5% to about 26%, about 5% to about 27%, about 5% to about 28%, about 5% to about 29%, about 6% to about 21%, about 6% to about 22%, about 6% to about 23%, about 6% to about 24%, about 6% to about 25%, about 6% to about 26%, about 6% to about 27%, about 6% to about 28%, about 6% to about 29%, about 7% to about 21%, about 7% to about 22%, about 7% to about 23%, about 7% to about 24%, about 7% to about 25%, about 7% to about 26%, about 7% to about 27%, about 7% to about 28%, about 7% to about 29%, about 8% to about 21%, about 8% to about 22%, about 8% to about 23%, about 8% to about 24%, about 8% to about 25%, about 8% to about 26%, about 8% to about 27%, about 8% to about 28%, about 8% to about 29%, about 9% to about 21%, about 9% to about 22%, about 9% to about 23%, about 9% to about 24%, about 9% to about 25%, about 9% to about 26%, about 9% to about 27%, about 9% to about 28%, about 9% to about 29%, about 10% to about 21%, about 10% to about 22%, about 10% to about 23%, about 10% to about 24%, about 10% to about 25%, about 10% to about 26%, about 10% to about 27%, about 10% to about 28%, about 10% to about 29%, about 11% to about 21%, about 11% to about 22%, about 11% to about 23%, about 11% to about 24%, about 11% to about 25%, about 11% to about 26%, about 11% to about 27%, about 11% to about 28%, about 11% to about 29%, about 12% to about 21%, about 12% to about 22%, about 12% to about 23%, about 12% to about 24%, about 12% to about 25%, about 12% to about 26%, about 12% to about 27%, about 12% to about 28%, about 12% to about 29%, about 13% to about 21%, about 13% to about 22%, about 13% to about 23%, about 13% to about 24%, about 13% to about 25%, about 13% to about 26%, about 13% to about 27%, about 13% to about 28%, about 13% to about 29%, about 14% to about 21%, about 14% to about 22%, about 14% to about 23%, about 14% to about 24%, about 14% to about 25%, about 14% to about 26%, about 14% to about 27%, about 14% to about 28%, about 14% to about 29%, about 15% to about 21%, about 15% to about 22%, about 15% to about 23%, about 15% to about 24%, about 15% to about 25%, about 15% to about 26%, about 15% to about 27%, about 15% to about 28%, about 5% to about 29%, about 16% to about 21%, about 16% to about 22%, about 16% to about 23%, about 16% to about 24%, about 16% to about 25%, about 16% to about 26%, about 16% to about 27%, about 16% to about 28%, about 16% to about 29%, about 17% to about 21%, about 17% to about 22%, about 17% to about 23%, about 17% to about 24%, about 17% to about 25%, about 17% to about 26%, about 17% to about 27%, about 17% to about 28%, about 17% to about 29%, about 18% to about 21%, about 18% to about 22%, about 18% to about 23%, about 18% to about 24%, about 18% to about 25%, about 18% to about 26%, about 18% to about 27%, about 18% to about 28%, about 18% to about 29%, about 19% to about 21%, about 19% to about 22%, about 19% to about 23%, about 19% to about 24%, about 19% to about 25%, about 19% to about 26%, about 19% to about 27%, about 19% to about 28%, about 19% to about 29%, about 20% to about 21%, about 20% to about 22%, about 20% to about 23%, about 20% to about 24%, about 20% to about 25%, about 20% to about 26%, about 20% to about 27%, about 20% to about 28%, about 20% to about 29%, about 21% to about 22%, about 21% to about 23%, about 21% to about 24%, about 21% to about 25%, about 21% to about 26%, about 21% to about 27%, about 21% to about 28%, about 21% to about 29%, about 22% to about 23%, about 22% to about 24%, about 22% to about 25%, about 22% to about 26%, about 22% to about 27%, about 22% to about 28%, about 22% to about 29%, about 23% to about 24%, about 23% to about 25%, about 23% to about 26%, about 23% to about 27%, about 23% to about 28%, about 23% to about 29%, about 24% to about 25%, about 24% to about 26%, about 24% to about 27%, about 24% to about 28%, about 24% to about 29%, about 25% to about 26%, about 25% to about 27%, about 25% to about 28%, about 25% to about 29%, about 26% to about 27%, about 26% to about 28%, about 26% to about 29%, about 27% to about 28%, about 27% to about 29%, or about 28% to about 29% by weight.

In some embodiments, the insect, bacteria, and/or fungi control composition comprises silica, which can be used as a filler. With respect to silica, contemplated insect, bacteria, and/or fungi control compositions can contain about 0.05%, 0.1%, 0.15%, 0.2%, 0.25%, 0.3%, 0.35%, 0.4%, 0.45%, 0.5%, 0.55%, 0.6%, 0.65%, 0.7%, 0.75%, 0.8%, 0.85%, 0.9%, 0.95%, 1%, 1.05%, 1.1%, 1.15%, 1.2%, 1.25%, 1.3%, 1.35%, 1.4%, 1.45%, 1.5%, 1.55%, 1.6%, 1.65%, 1.7%, 1.75%, 1.8%, 1.85%, 1.9%, 1.95%, 2%, 2.05%, 2.1%, 2.15%, 2.2%, 2.25%, 2.3%, 2.35%, 2.4%, 2.45%, 2.5%, 2.55%, 2.6%, 2.65%, 2.7%, 2.75%, 2.8%, 2.85%, 2.9%, 2.95%, 3%, 3.05%, 3.1%, 3.15%, 3.2%, 3.25%, 3.3%, 3.35%, 3.4%, 3.45%, 3.5%, 3.55%, 3.6%, 3.65%, 3.7%, 3.75%, 3.8%, 3.85%, 3.9%, 3.95%, 4%, 4.05%, 4.1%, 4.15%, 4.2%, 4.25%, 4.3%, 4.35%, 4.4%, 4.45%, 4.5%, 4.55%, 4.6%, 4.65%, 4.7%, 4.75%, 4.8%, 4.85%, 4.9%, 4.95%, 5%, 5.05%, 5.1%, 5.15%, 5.2%, 5.25%, 5.3%, 5.35%, 5.4%, 5.45%, 5.5%, 5.55%, 5.6%, 5.65%, 5.7%, 5.75%, 5.8%, 5.85%, 5.9%, 5.95%, 6%, 6.05%, 6.1%, 6.15%, 6.2%, 6.25%, 6.3%, 6.35%, 6.4%, 6.45%, 6.5%, 6.55%, 6.6%, 6.65%, 6.7%, 6.75%, 6.8%, 6.85%, 6.9%, 6.95%, 7%, 7.05%, 7.1%, 7.15%, 7.2%, 7.25%, 7.3%, 7.35%, 7.4%, 7.45%, 7.5%, 7.55%, 7.6%, 7.65%, 7.7%, 7.75%, 7.8%, 7.85%, 7.9%, 7.95%, 8%, 8.05%, 8.1%, 8.15%, 8.2%, 8.25%, 8.3%, 8.35%, 8.4%, 8.45%, 8.5%, 8.55%, 8.6%, 8.65%, 8.7%, 8.75%, 8.8%, 8.85%, 8.9%, 8.95%, 9%, 9.05%, 9.1%, 9.15%, 9.2%, 9.25%, 9.3%, 9.35%, 9.4%, 9.45%, 9.5%, 9.55%, 9.6%, 9.65%, 9.7%, 9.75%, 9.8%, 9.85%, 9.9%, 9.95%, 10%, 10.05%, 10.1%, 10.15%, 10.2%, 10.25%, 10.3%, 10.35%, 10.4%, 10.45%, 10.5%, 10.55%, 10.6%, 10.65%, 10.7%, 10.75%, 10.8%, 10.85%, 10.9%, 10.95%, 11%, 11.05%, 11.1%, 11.15%, 11.2%, 11.25%, 11.3%, 11.35%, 11.4%, 11.45%, 11.5%, 11.55%, 11.6%, 11.65%, 11.7%, 11.75%, 11.8%, 11.85%, 11.9%, 11.95%, 12%, 12.05%, 12.1%, 12.15%, 12.2%, 12.25%, 12.3%, 12.35%, 12.4%, 12.45%, 12.5%, 12.55%, 12.6%, 12.65%, 12.7%, 12.75%, 12.8%, 12.85%, 12.9%, 12.95%, 3%, 13.05%, 13.1%, 13.15%, 13.2%, 13.25%, 13.3%, 13.35%, 13.4%, 13.45%, 13.5%, 13.55%, 13.6%, 13.65%, 13.7%, 13.75%, 13.8%, 13.85%, 13.9%, 13.95%, 14%, 14.05%, 14.1%, 14.15%, 14.2%, 14.25%, 14.3%, 14.35%, 14.4%, 14.45%, 14.5%, 14.55%, 14.6%, 14.65%, 14.7%, 14.75%, 14.8%, 14.85%, 14.9%, 14.95%, 15%, 15.1%, 15.2%, 15.3%, 15.4%, 15.5%, 15.6%, 15.7%, 15.8%, 15.9%, 16%, 16.1%, 16.2%, 16.3%, 16.4%, 16.5%, 16.6%, 16.7%, 16.8%, 16.9%, 17%, 17.1%, 17.2%, 17.3%, 17.4%, 17.5%, 17.6%, 17.7%, 17.8%, 17.9%, 18%, 18.1%, 18.2%, 18.3%, 18.4%, 18.5%, 18.6%, 18.7%, 18.8%, 18.9%, 19%, 19.1%, 19.2%, 19.3%, 19.4%, 19.5%, 19.6%, 19.7%, 19.8%, 19.9%, 20%, 20.5%, 21%, 21.5%, 22%, 22.5%, 23%, 23.5%, 24%, 24.5%, 25%, 25.5%, 26%, 26.5%, 27%, 27.5%, 28%, 28.5%, or 29% by weight silica. These values of the one or more terpenes can also be expressed as ranges, for example, of from about 0.05% to about 20%, about 0.25% to about 20%, about 0.5% to about 20%, about 0.75% to about 20%, about 1% to about 20%, about 1.25% to about 20%, about 1.5% to about 20%, about 1.75% to about 20%, about 2% to about 20%, about 2.25% to about 20%, about 2.5% to about 20%, about 2.75% to about 20%, about 3% to about 20%, about 3.25% to about 20%, about 3.5% to about 20%, about 3.75% to about 20%, about 4% to about 20%, about 4.25% to about 20%, about 4.5% to about 20%, about 4.75% to about 20%, about 5% to about 20%, about 5.25% to about 20%, about 5.5% to about 20%, about 5.75% to about 20%, about 6% to about 20%, about 6.25% to about 20%, about 6.5% to about 20%, about 6.75% to about 20%, about 8% to about 20%, about 8.25% to about 20%, about 8.5% to about 20%, about 8.75% to about 20%, about 9% to about 20%, about 9.25% to about 20%, about 9.5% to about 20%, about 9.75% to about 20%, about 10% to about 20%, about 10.25% to about 20%, about 10.5% to about 20%, about 10.75% to about 20%, about 11% to about 20%, about 11.25% to about 20%, about 11.5% to about 20%, about 11.75% to about 20%, about 12% to about 20%, about 12.25% to about 20%, about 12.5% to about 20%, about 12.75% to about 20%, about 13% to about 20%, about 13.25% to about 20%, about 13.5% to about 20%, about 13.75% to about 20%, about 14% to about 20%, about 14.25% to about 20%, about 14.5% to about 20%, about 14.75% to about 20%, about 15% to about 20%, about 15.25% to about 20%, about 15.5% to about 20%, about 15.75% to about 20%, about 16% to about 20%, about 16.25% to about 20%, about 16.5% to about 20%, about 16.75% to about 20%, about 17% to about 20%, about 17.25% to about 20%, about 17.5% to about 20%, about 17.75% to about 20%, about 18% to about 20%, about 18.25% to about 20%, about 18.5% to about 20%, about 18.75% to about 20%, about 19% to about 20%, about 19.25% to about 20%, about 19.5% to about 20%, about 19.75% to about 20%, about 0.05% to about 29%, about 0.05% to about 28.5%, about 0.05% to about 27%, about 0.05% to about 26.5%, about 0.05% to about 26%, about 0.05% to about 25.5%, about 0.05% to about 25%, about 0.05% to about 24.5%, about 0.05% to about 24%, about 0.05% to about 23.5%, about 0.05% to about 23%, about 0.05% to about 22.5%, about 0.05% to about 22%, about 0.05% to about 21.5%, about 0.05% to about 21%, about 0.05% to about 20.5%, about 0.05% to about 20%, about 0.05% to about 19.75%, about 0.05% to about 19.5%, about 0.05% to about 19.25%, about 0.05% to about 19%, about 0.05% to about 18.75%, about 0.05% to about 18.5%, about 0.05% to about 18.25%, about 0.05% to about 18%, about 0.05% to about 17.75%, about 0.05% to about 17.5%, about 0.05% to about 17.25%, about 0.05% to about 17%, about 0.05% to about 16.75%, about 0.05% to about 16.5%, about 0.05% to about 16.25%, about 0.05% to about 16%, about 0.05% to about 15.75%, about 0.05% to about 15.5%, about 0.05% to about 15.25%, about 0.05% to about 15%, about 0.05% to about 14.75%, about 0.05% to about 14.5%, about 0.05% to about 14.25%, about 0.05% to about 14%, about 0.05% to about 13.75%, about 0.05% to about 13.5%, about 0.05% to about 13.25%, about 0.05% to about 13%, about 0.05% to about 12.75%, about 0.05% to about 12.5%, about 0.05% to about 12.25%, about 0.05% to about 12%, about 0.05% to about 11.75%, about 0.05% to about 11.5%, about 0.05% to about 11.25%, about 0.05% to about 11%, about 0.05% to about 10.75%, about 0.05% to about 10.5%, about 0.05% to about 10.25%, about 0.05% to about 10%, about 0.05% to about 9.75%, about 0.05% to about 9.5%, about 0.05% to about 9.5%, about 0.05% to about 9.25%, about 0.05% to about 9%, about 0.05% to about 8.75%, about 0.05% to about 8.5%, about 0.05% to about 8.25%, about 0.05% to about 8%, about 0.05% to about 7.75%, about 0.05% to about 7.5%, about 0.05% to about 7.25%, about 0.05% to about 7%, about 0.05% to about 6.75%, about 0.05% to about 6.5%, about 0.05% to about 6.25%, about 0.05% to about 6%, about 0.05% to about 5.75%, about 0.05% to about 5.5%, about 0.05% to about 5.25%, about 0.05% to about 5%, about 0.05% to about 4.75%, about 0.05% to about 4.5%, about 0.05% to about 4.25%, about 0.05% to about 4%, about 0.05% to about 3.75%, about 0.05% to about 3.5%, about 0.05% to about 3.25%, about 0.05% to about 3%, about 0.05% to about 2.75%, about 0.05% to about 2.5%, about 0.05% to about 2.25%, about 0.05% to about 2%, about 0.05% to about 1.75%, about 0.05% to about 1.5%, about 0.05% to about 1.25%, about 0.05% to about 1%, about 0.05% to about 0.75%, about 0.05% to about 0.5%, about 0.05% to about 0.25%, about 0.5% to about 19.5%, about 1% to about 19%, about 1.5% to about 18.5%, about 2% to about 18%, about 2.5% to about 17.5%, about 3% to about 17%, about 3.5% to about 16.5%, about 4% to about 16%, about 4.5% to about 15.5%, about 5% to about 15%, about 5.5% to about 14.5%, about 6% to about 14%, about 6.5% to about 13.5%, about 7% to about 13%, about 7.5% to about 12.5%, about 8% to about 12%, about 8.5% to about 11.5%, about 9% to about 11%, about 9.5% to about 10.5%, about 2% to about 3%, about 2% to about 4%, about 2% to about 5%, about 2% to about 6%, about 2% to about 7%, about 2% to about 8%, about 2% to about 9%, about 2% to about 10%, about 2% to about 11%, about 2% to about 12%, about 2% to about 13%, about 2% to about 14%, about 2% to about 15%, about 2% to about 16%, about 2% to about 17%, about 2% to about 18%, about 2% to about 19%, about 3% to about 4%, about 3% to about 5%, about 3% to about 6%, about 3% to about 7%, about 3% to about 8%, about 3% to about 9%, about 3% to about 10%, about 3% to about 11%, about 3% to about 12%, about 3% to about 13%, about 3% to about 14%, about 3% to about 15%, about 3% to about 16%, about 3% to about 17%, about 3% to about 18%, about 3% to about 19%, about 4% to about 5%, about 4% to about 6%, about 4% to about 7%, about 4% to about 8%, about 4% to about 9%, about 4% to about 10%, about 4% to about 11%, about 4% to about 12%, about 4% to about 13%, about 4% to about 14%, about 4% to about 15%, about 4% to about 16%, about 4% to about 17%, about 4% to about 18%, about 4% to about 19%, about 5% to about 6%, about 5% to about 7%, about 5% to about 8%, about 5% to about 9%, about 5% to about 10%, about 5% to about 11%, about 5% to about 12%, about 5% to about 13%, about 5% to about 14%, about 5% to about 15%, about 5% to about 16%, about 5% to about 17%, about 5% to about 18%, about 5% to about 19%, about 6% to about 7%, about 6% to about 8%, about 6% to about 9%, about 6% to about 10%, about 6% to about 11%, about 6% to about 12%, about 6% to about 13%, about 6% to about 14%, about 6% to about 15%, about 6% to about 16%, about 6% to about 17%, about 6% to about 18%, about 6% to about 19%, about 7% to about 8%, about 7% to about 9%, about 7% to about 10%, about 7% to about 11%, about 7% to about 12%, about 7% to about 13%, about 7% to about 14%, about 7% to about 15%, about 7% to about 16%, about 7% to about 17%, about 7% to about 18%, about 7% to about 19%, about 8% to about 9%, about 8% to about 10%, about 8% to about 11%, about 8% to about 12%, about 8% to about 13%, about 8% to about 14%, about 8% to about 15%, about 8% to about 16%, about 8% to about 17%, about 8% to about 18%, about 8% to about 19%, about 9% to about 10%, about 9% to about 11%, about 9% to about 12%, about 9% to about 13%, about 9% to about 14%, about 9% to about 15%, about 9% to about 16%, about 9% to about 17%, about 9% to about 18%, about 9% to about 19%, about 10% to about 11%, about 10% to about 12%, about 10% to about 13%, about 10% to about 14%, about 10% to about 15%, about 10% to about 16%, about 10% to about 17%, about 10% to about 18%, about 10% to about 19%, about 11% to about 12%, about 11% to about 13%, about 11% to about 14%, about 11% to about 15%, about 11% to about 16%, about 11% to about 17%, about 11% to about 18%, about 11% to about 19%, about 12% to about 13%, about 12% to about 14%, about 12% to about 15%, about 12% to about 16%, about 12% to about 17%, about 12% to about 18%, about 12% to about 19%, about 13% to about 14%, about 13% to about 15%, about 13% to about 16%, about 13% to about 17%, about 13% to about 18%, about 13% to about 19%, about 14% to about 15%, about 14% to about 16%, about 14% to about 17%, about 14% to about 18%, about 14% to about 19%, about 15% to about 16%, about 15% to about 17%, about 15% to about 18%, about 15% to about 19%, about 16% to about 17%, about 16% to about 18%, about 16% to about 19%, about 17% to about 18%, about 17% to about 19%, about 18% to about 19%, about 6% to about 29%, about 6.5% to about 28.5%, about 7% to about 28%, about 7.5% to about 27.5%, about 8% to about 27%, about 8.5% to about 26.5%, about 9% to about 26%, about 9.5% to about 25.5%, about 10% to about 25%, about 10.5% to about 24.5%, about 11% to about 24%, about 11.5% to about 23.5%, about 12% to about 23%, about 12.5% to about 22.5%, about 13% to about 22%, about 13.5% to about 21.5%, about 14% to about 21%, about 14.5% to about 20.5%, about 2% to about 21%, about 2% to about 22%, about 2% to about 23%, about 2% to about 24%, about 2% to about 25%, about 2% to about 26%, about 2% to about 27%, about 2% to about 28%, about 2% to about 29%, about 3% to about 21%, about 3% to about 22%, about 3% to about 23%, about 3% to about 24%, about 3% to about 25%, about 3% to about 26%, about 3% to about 27%, about 3% to about 28%, about 3% to about 29%, about 4% to about 21%, about 4% to about 22%, about 4% to about 23%, about 4% to about 24%, about 4% to about 25%, about 4% to about 26%, about 4% to about 27%, about 4% to about 28%, about 4% to about 29%, about 5% to about 21%, about 5% to about 22%, about 5% to about 23%, about 5% to about 24%, about 5% to about 25%, about 5% to about 26%, about 5% to about 27%, about 5% to about 28%, about 5% to about 29%, about 6% to about 21%, about 6% to about 22%, about 6% to about 23%, about 6% to about 24%, about 6% to about 25%, about 6% to about 26%, about 6% to about 27%, about 6% to about 28%, about 6% to about 29%, about 7% to about 21%, about 7% to about 22%, about 7% to about 23%, about 7% to about 24%, about 7% to about 25%, about 7% to about 26%, about 7% to about 27%, about 7% to about 28%, about 7% to about 29%, about 8% to about 21%, about 8% to about 22%, about 8% to about 23%, about 8% to about 24%, about 8% to about 25%, about 8% to about 26%, about 8% to about 27%, about 8% to about 28%, about 8% to about 29%, about 9% to about 21%, about 9% to about 22%, about 9% to about 23%, about 9% to about 24%, about 9% to about 25%, about 9% to about 26%, about 9% to about 27%, about 9% to about 28%, about 9% to about 29%, about 10% to about 21%, about 10% to about 22%, about 10% to about 23%, about 10% to about 24%, about 10% to about 25%, about 10% to about 26%, about 10% to about 27%, about 10% to about 28%, about 10% to about 29%, about 11% to about 21%, about 11% to about 22%, about 11% to about 23%, about 11% to about 24%, about 11% to about 25%, about 11% to about 26%, about 11% to about 27%, about 11% to about 28%, about 11% to about 29%, about 12% to about 21%, about 12% to about 22%, about 12% to about 23%, about 12% to about 24%, about 12% to about 25%, about 12% to about 26%, about 12% to about 27%, about 12% to about 28%, about 12% to about 29%, about 13% to about 21%, about 13% to about 22%, about 13% to about 23%, about 13% to about 24%, about 13% to about 25%, about 13% to about 26%, about 13% to about 27%, about 13% to about 28%, about 13% to about 29%, about 14% to about 21%, about 14% to about 22%, about 14% to about 23%, about 14% to about 24%, about 14% to about 25%, about 14% to about 26%, about 14% to about 27%, about 14% to about 28%, about 14% to about 29%, about 15% to about 21%, about 15% to about 22%, about 15% to about 23%, about 15% to about 24%, about 15% to about 25%, about 15% to about 26%, about 15% to about 27%, about 15% to about 28%, about 5% to about 29%, about 16% to about 21%, about 16% to about 22%, about 16% to about 23%, about 16% to about 24%, about 16% to about 25%, about 16% to about 26%, about 16% to about 27%, about 16% to about 28%, about 16% to about 29%, about 17% to about 21%, about 17% to about 22%, about 17% to about 23%, about 17% to about 24%, about 17% to about 25%, about 17% to about 26%, about 17% to about 27%, about 17% to about 28%, about 17% to about 29%, about 18% to about 21%, about 18% to about 22%, about 18% to about 23%, about 18% to about 24%, about 18% to about 25%, about 18% to about 26%, about 18% to about 27%, about 18% to about 28%, about 18% to about 29%, about 19% to about 21%, about 19% to about 22%, about 19% to about 23%, about 19% to about 24%, about 19% to about 25%, about 19% to about 26%, about 19% to about 27%, about 19% to about 28%, about 19% to about 29%, about 20% to about 21%, about 20% to about 22%, about 20% to about 23%, about 20% to about 24%, about 20% to about 25%, about 20% to about 26%, about 20% to about 27%, about 20% to about 28%, about 20% to about 29%, about 21% to about 22%, about 21% to about 23%, about 21% to about 24%, about 21% to about 25%, about 21% to about 26%, about 21% to about 27%, about 21% to about 28%, about 21% to about 29%, about 22% to about 23%, about 22% to about 24%, about 22% to about 25%, about 22% to about 26%, about 22% to about 27%, about 22% to about 28%, about 22% to about 29%, about 23% to about 24%, about 23% to about 25%, about 23% to about 26%, about 23% to about 27%, about 23% to about 28%, about 23% to about 29%, about 24% to about 25%, about 24% to about 26%, about 24% to about 27%, about 24% to about 28%, about 24% to about 29%, about 25% to about 26%, about 25% to about 27%, about 25% to about 28%, about 25% to about 29%, about 26% to about 27%, about 26% to about 28%, about 26% to about 29%, about 27% to about 28%, about 27% to about 29%, or about 28% to about 29% by weight.

In some embodiments, an insect, bacteria, and/or fungi control composition as disclosed herein comprises about 0.05% to about 20% by weight castor oil; about 0.05% to about 20% by weight of a first oil selected from the group consisting of rosemary oil, thyme oil, clove oil, garlic oil, geraniol, peppermint oil, and cinnamon oil; about 0.05% to about 20% by weight of a second oil selected from the group consisting of rosemary oil, thyme oil, clove oil, garlic oil, geraniol, peppermint oil, and cinnamon oil, wherein in the first oil is different from the second oil; balance water about 20% to about 80% by weight. The first and second oils independently may be present in such insect, bacteria, and/or fungi control compositions at about 0.05%, 0.1%, 0.15%, 0.2%, 0.25%, 0.3%, 0.35%, 0.4%, 0.45%, 0.5%, 0.55%, 0.6%, 0.65%, 0.7%, 0.75%, 0.8%, 0.85%, 0.9%, 0.95%, 1%, 1.05%, 1.1%, 1.15%, 1.2%, 1.25%, 1.3%, 1.35%, 1.4%, 1.45%, 1.5%, 1.55%, 1.6%, 1.65%, 1.7%, 1.75%, 1.8%, 1.85%, 1.9%, 1.95%, 2%, 2.05%, 2.1%, 2.15%, 2.2%, 2.25%, 2.3%, 2.35%, 2.4%, 2.45%, 2.5%, 2.55%, 2.6%, 2.65%, 2.7%, 2.75%, 2.8%, 2.85%, 2.9%, 2.95%, 3%, 3.05%, 3.1%, 3.15%, 3.2%, 3.25%, 3.3%, 3.35%, 3.4%, 3.45%, 3.5%, 3.55%, 3.6%, 3.65%, 3.7%, 3.75%, 3.8%, 3.85%, 3.9%, 3.95%, 4%, 4.05%, 4.1%, 4.15%, 4.2%, 4.25%, 4.3%, 4.35%, 4.4%, 4.45%, 4.5%, 4.55%, 4.6%, 4.65%, 4.7%, 4.75%, 4.8%, 4.85%, 4.9%, 4.95%, 5%, 5.05%, 5.1%, 5.15%, 5.2%, 5.25%, 5.3%, 5.35%, 5.4%, 5.45%, 5.5%, 5.55%, 5.6%, 5.65%, 5.7%, 5.75%, 5.8%, 5.85%, 5.9%, 5.95%, 6%, 6.05%, 6.1%, 6.15%, 6.2%, 6.25%, 6.3%, 6.35%, 6.4%, 6.45%, 6.5%, 6.55%, 6.6%, 6.65%, 6.7%, 6.75%, 6.8%, 6.85%, 6.9%, 6.95%, 7%, 7.05%, 7.1%, 7.15%, 7.2%, 7.25%, 7.3%, 7.35%, 7.4%, 7.45%, 7.5%, 7.55%, 7.6%, 7.65%, 7.7%, 7.75%, 7.8%, 7.85%, 7.9%, 7.95%, 8%, 8.05%, 8.1%, 8.15%, 8.2%, 8.25%, 8.3%, 8.35%, 8.4%, 8.45%, 8.5%, 8.55%, 8.6%, 8.65%, 8.7%, 8.75%, 8.8%, 8.85%, 8.9%, 8.95%, 9%, 9.05%, 9.1%, 9.15%, 9.2%, 9.25%, 9.3%, 9.35%, 9.4%, 9.45%, 9.5%, 9.55%, 9.6%, 9.65%, 9.7%, 9.75%, 9.8%, 9.85%, 9.9%, 9.95%, 10%, 10.05%, 10.1%, 10.15%, 10.2%, 10.25%, 10.3%, 10.35%, 10.4%, 10.45%, 10.5%, 10.55%, 10.6%, 10.65%, 10.7%, 10.75%, 10.8%, 10.85%, 10.9%, 10.95%, 11%, 11.05%, 11.1%, 11.15%, 11.2%, 11.25%, 11.3%, 11.35%, 11.4%, 11.45%, 11.5%, 11.55%, 11.6%, 11.65%, 11.7%, 11.75%, 11.8%, 11.85%, 11.9%, 11.95%, 12%, 12.05%, 12.1%, 12.15%, 12.2%, 12.25%, 12.3%, 12.35%, 12.4%, 12.45%, 12.5%, 12.55%, 12.6%, 12.65%, 12.7%, 12.75%, 12.8%, 12.85%, 12.9%, 12.95%, 3%, 13.05%, 13.1%, 13.15%, 13.2%, 13.25%, 13.3%, 13.35%, 13.4%, 13.45%, 13.5%, 13.55%, 13.6%, 13.65%, 13.7%, 13.75%, 13.8%, 13.85%, 13.9%, 13.95%, 14%, 14.05%, 14.1%, 14.15%, 14.2%, 14.25%, 14.3%, 14.35%, 14.4%, 14.45%, 14.5%, 14.55%, 14.6%, 14.65%, 14.7%, 14.75%, 14.8%, 14.85%, 14.9%, 14.95%, 15%, 15.1%, 15.2%, 15.3%, 15.4%, 15.5%, 15.6%, 15.7%, 15.8%, 15.9%, 16%, 16.1%, 16.2%, 16.3%, 16.4%, 16.5%, 16.6%, 16.7%, 16.8%, 16.9%, 17%, 17.1%, 17.2%, 17.3%, 17.4%, 17.5%, 17.6%, 17.7%, 17.8%, 17.9%, 18%, 18.1%, 18.2%, 18.3%, 18.4%, 18.5%, 18.6%, 18.7%, 18.8%, 18.9%, 19%, 19.1%, 19.2%, 19.3%, 19.4%, 19.5%, 19.6%, 19.7%, 19.8%, 19.9%, or 20% by weight of the first or second oil. These values of the first and second oils, independently, can also be expressed as ranges, for example, of from about 0.05% to about 20%, about 0.25% to about 20%, about 0.5% to about 20%, about 0.75% to about 20%, about 1% to about 20%, about 1.25% to about 20%, about 1.5% to about 20%, about 1.75% to about 20%, about 2% to about 20%, about 2.25% to about 20%, about 2.5% to about 20%, about 2.75% to about 20%, about 3% to about 20%, about 3.25% to about 20%, about 3.5% to about 20%, about 3.75% to about 20%, about 4% to about 20%, about 4.25% to about 20%, about 4.5% to about 20%, about 4.75% to about 20%, about 5% to about 20%, about 5.25% to about 20%, about 5.5% to about 20%, about 5.75% to about 20%, about 6% to about 20%, about 6.25% to about 20%, about 6.5% to about 20%, about 6.75% to about 20%, about 8% to about 20%, about 8.25% to about 20%, about 8.5% to about 20%, about 8.75% to about 20%, about 9% to about 20%, about 9.25% to about 20%, about 9.5% to about 20%, about 9.75% to about 20%, about 10% to about 20%, about 10.25% to about 20%, about 10.5% to about 20%, about 10.75% to about 20%, about 11% to about 20%, about 11.25% to about 20%, about 11.5% to about 20%, about 11.75% to about 20%, about 12% to about 20%, about 12.25% to about 20%, about 12.5% to about 20%, about 12.75% to about 20%, about 13% to about 20%, about 13.25% to about 20%, about 13.5% to about 20%, about 13.75% to about 20%, about 14% to about 20%, about 14.25% to about 20%, about 14.5% to about 20%, about 14.75% to about 20%, about 15% to about 20%, about 15.25% to about 20%, about 15.5% to about 20%, about 15.75% to about 20%, about 16% to about 20%, about 16.25% to about 20%, about 16.5% to about 20%, about 16.75% to about 20%, about 17% to about 20%, about 17.25% to about 20%, about 17.5% to about 20%, about 17.75% to about 20%, about 18% to about 20%, about 18.25% to about 20%, about 18.5% to about 20%, about 18.75% to about 20%, about 19% to about 20%, about 19.25% to about 20%, about 19.5% to about 20%, about 19.75% to about 20%, about 0.05% to about 19.75%, about 0.05% to about 19.5%, about 0.05% to about 19.25%, about 0.05% to about 19%, about 0.05% to about 18.75%, about 0.05% to about 18.5%, about 0.05% to about 18.25%, about 0.05% to about 18%, about 0.05% to about 17.75%, about 0.05% to about 17.5%, about 0.05% to about 17.25%, about 0.05% to about 17%, about 0.05% to about 16.75%, about 0.05% to about 16.5%, about 0.05% to about 16.25%, about 0.05% to about 16%, about 0.05% to about 15.75%, about 0.05% to about 15.5%, about 0.05% to about 15.25%, about 0.05% to about 15%, about 0.05% to about 14.75%, about 0.05% to about 14.5%, about 0.05% to about 14.25%, about 0.05% to about 14%, about 0.05% to about 13.75%, about 0.05% to about 13.5%, about 0.05% to about 13.25%, about 0.05% to about 13%, about 0.05% to about 12.75%, about 0.05% to about 12.5%, about 0.05% to about 12.25%, about 0.05% to about 12%, about 0.05% to about 11.75%, about 0.05% to about 11.5%, about 0.05% to about 11.25%, about 0.05% to about 11%, about 0.05% to about 10.75%, about 0.05% to about 10.5%, about 0.05% to about 10.25%, about 0.05% to about 10%, about 0.05% to about 9.75%, about 0.05% to about 9.5%, about 0.05% to about 9.5%, about 0.05% to about 9.25%, about 0.05% to about 9%, about 0.05% to about 8.75%, about 0.05% to about 8.5%, about 0.05% to about 8.25%, about 0.05% to about 8%, about 0.05% to about 7.75%, about 0.05% to about 7.5%, about 0.05% to about 7.25%, about 0.05% to about 7%, about 0.05% to about 6.75%, about 0.05% to about 6.5%, about 0.05% to about 6.25%, about 0.05% to about 6%, about 0.05% to about 5.75%, about 0.05% to about 5.5%, about 0.05% to about 5.25%, about 0.05% to about 5%, about 0.05% to about 4.75%, about 0.05% to about 4.5%, about 0.05% to about 4.25%, about 0.05% to about 4%, about 0.05% to about 3.75%, about 0.05% to about 3.5%, about 0.05% to about 3.25%, about 0.05% to about 3%, about 0.05% to about 2.75%, about 0.05% to about 2.5%, about 0.05% to about 2.25%, about 0.05% to about 2%, about 0.05% to about 1.75%, about 0.05% to about 1.5%, about 0.05% to about 1.25%, about 0.05% to about 1%, about 0.05% to about 0.75%, about 0.05% to about 0.5%, about 0.05% to about 0.25%, about 0.5% to about 19.5%, about 1% to about 19%, about 1.5% to about 18.5%, about 2% to about 18%, about 2.5% to about 17.5%, about 3% to about 17%, about 3.5% to about 16.5%, about 4% to about 16%, about 4.5% to about 15.5%, about 5% to about 15%, about 5.5% to about 14.5%, about 6% to about 14%, about 6.5% to about 13.5%, about 7% to about 13%, about 7.5% to about 12.5%, about 8% to about 12%, about 8.5% to about 11.5%, about 9% to about 11%, about 9.5% to about 10.5%, about 2% to about 3%, about 2% to about 4%, about 2% to about 5%, about 2% to about 6%, about 2% to about 7%, about 2% to about 8%, about 2% to about 9%, about 2% to about 10%, about 2% to about 11%, about 2% to about 12%, about 2% to about 13%, about 2% to about 14%, about 2% to about 15%, about 2% to about 16%, about 2% to about 17%, about 2% to about 18%, about 2% to about 19%, about 3% to about 4%, about 3% to about 5%, about 3% to about 6%, about 3% to about 7%, about 3% to about 8%, about 3% to about 9%, about 3% to about 10%, about 3% to about 11%, about 3% to about 12%, about 3% to about 13%, about 3% to about 14%, about 3% to about 15%, about 3% to about 16%, about 3% to about 17%, about 3% to about 18%, about 3% to about 19%, about 4% to about 5%, about 4% to about 6%, about 4% to about 7%, about 4% to about 8%, about 4% to about 9%, about 4% to about 10%, about 4% to about 11%, about 4% to about 12%, about 4% to about 13%, about 4% to about 14%, about 4% to about 15%, about 4% to about 16%, about 4% to about 17%, about 4% to about 18%, about 4% to about 19%, about 5% to about 6%, about 5% to about 7%, about 5% to about 8%, about 5% to about 9%, about 5% to about 10%, about 5% to about 11%, about 5% to about 12%, about 5% to about 13%, about 5% to about 14%, about 5% to about 15%, about 5% to about 16%, about 5% to about 17%, about 5% to about 18%, about 5% to about 19%, about 6% to about 7%, about 6% to about 8%, about 6% to about 9%, about 6% to about 10%, about 6% to about 11%, about 6% to about 12%, about 6% to about 13%, about 6% to about 14%, about 6% to about 15%, about 6% to about 16%, about 6% to about 17%, about 6% to about 18%, about 6% to about 19%, about 7% to about 8%, about 7% to about 9%, about 7% to about 10%, about 7% to about 11%, about 7% to about 12%, about 7% to about 13%, about 7% to about 14%, about 7% to about 15%, about 7% to about 16%, about 7% to about 17%, about 7% to about 18%, about 7% to about 19%, about 8% to about 9%, about 8% to about 10%, about 8% to about 11%, about 8% to about 12%, about 8% to about 13%, about 8% to about 14%, about 8% to about 15%, about 8% to about 16%, about 8% to about 17%, about 8% to about 18%, about 8% to about 19%, about 9% to about 10%, about 9% to about 11%, about 9% to about 12%, about 9% to about 13%, about 9% to about 14%, about 9% to about 15%, about 9% to about 16%, about 9% to about 17%, about 9% to about 18%, about 9% to about 19%, about 10% to about 11%, about 10% to about 12%, about 10% to about 13%, about 10% to about 14%, about 10% to about 15%, about 10% to about 16%, about 10% to about 17%, about 10% to about 18%, about 10% to about 19%, about 11% to about 12%, about 11% to about 13%, about 11% to about 14%, about 11% to about 15%, about 11% to about 16%, about 11% to about 17%, about 11% to about 18%, about 11% to about 19%, about 12% to about 13%, about 12% to about 14%, about 12% to about 15%, about 12% to about 16%, about 12% to about 17%, about 12% to about 18%, about 12% to about 19%, about 13% to about 14%, about 13% to about 15%, about 13% to about 16%, about 13% to about 17%, about 13% to about 18%, about 13% to about 19%, about 14% to about 15%, about 14% to about 16%, about 14% to about 17%, about 14% to about 18%, about 14% to about 19%, about 15% to about 16%, about 15% to about 17%, about 15% to about 18%, about 15% to about 19%, about 16% to about 17%, about 16% to about 18%, about 16% to about 19%, about 17% to about 18%, about 17% to about 19%, or about 18% to about 19% by weight of the first or second oil. In some embodiments, either the first or second oil is cinnamon oil, and the other oil is geraniol, clove oil, peppermint oil, rosemary oil, thyme oil, or garlic oil. In some embodiments, either the first or second oil is geraniol, and the other oil is clove oil, peppermint oil, rosemary oil, thyme oil, or garlic oil. In some embodiments, either the first or second oil is clove oil, and the other oil is peppermint oil, rosemary oil, thyme oil, or garlic oil. In some embodiments, either the first or second oil is peppermint oil, and the other oil is rosemary oil, thyme oil, or garlic oil. In some embodiments, either the first or second oil is rosemary oil, and the other oil is thyme oil or garlic oil. In some embodiments, either the first or second oil is thyme oil, and the other oil is garlic oil.

In certain embodiments, water can be used to dilute the insect, bacteria, and/or fungi control composition of the present disclosure to a desired concentration. For example, the insect, bacteria, and/or fungi control composition may contain about 20%, 20.5%, 21%, 21.5%, 22%, 22.5%, 23%, 23.5%, 24%, 24.5%, 25%, 25.5%, 26%, 26.5%, 27%, 27.5%, 28%, 28.5%, 29%, 29.5%, 30%, 30.5%, 31%, 31.5%, 32%, 32.5%, 33%, 33.5%, 34%, 34.5%, 35%, 35.5%, 36%, 36.5%, 37%, 37.5%, 38%, 38.5%, 39%, 39.5%, 40%, 40.5%, 41%, 41.5%, 42%, 42.5%, 43%, 43.5%, 44%, 44.5%, 45%, 45.5%, 46%, 46.5%, 47%, 47.5%, 48%, 48.5%, 49%, 49.5%, 50%, 50.5%, 51%, 51.5%, 52%, 52.5%, 53%, 53.5%, 54%, 54.5%, 55%, 55.5%, 56%, 56.5%, 57%, 57.5%, 58%, 58.5%, 59%, 59.5%, 60%, 60.5%, 61%, 61.5%, 62%, 62.5%, 63%, 63.5%, 64%, 64.5%, 65%, 65.5%, 66%, 66.5%, 67%, 67.5%, 68%, 68.5%, 69%, 69.5%, 70%, 70.5%, 71%, 71.5%, 72%, 72.5%, 73%, 73.5%, 74%, 74.5%, 75%, 75.5%, 76%, 76.5%, 77%, 77.5%, 78%, 78.5%, 79%, 79.5%, or 80% by weight water. These values can also be expressed as ranges, for example, of from about 20% to about 80%, about 25% to about 80%, about 30% to about 80%, about 35% to about 80%, about 40% to about 80%, about 45% to about 80%, about 50% to about 80%, about 55% to about 80%, about 60% to about 80%, about 65% to about 80%, about 70% to about 80%, about 75% to about 80%, about 20% to about 75%, about 20% to about 70%, about 20% to about 65%, about 20% to about 60%, about 20% to about 55%, about 20% to about 50%, about 20% to about 45%, about 20% to about 40%, about 20% to about 35%, about 20% to about 30%, about 20% to about 25%, about 25% to about 75%, about 30% to about 70%, about 35% to about 65%, about 40% to about 60%, or about 45% to about 55% by weight.

In certain embodiments, insect, bacteria, and/or fungi control compositions already containing water can be further diluted with additional water before or during application. The dilution rate of the insect, bacteria, and/or fungi control composition can be selected based on a number of factors including the degree of infestation, type and maturity of the plant material, the composition of the soil, the material of any structures, and the climate. For example, insect, bacteria, and/or fungi control compositions containing about 20% to about 80% water by weight can be diluted by adding about 0.5 ounces, about 1 ounce, about 1.5 ounces, about 2 ounces, about 2.5 ounces, about 3 ounces, about 3.5 ounces, about 4 ounces, about 4.5 ounces, about 5 ounces, about 5.5 ounces, about 6 ounces, about 6.5 ounces, about 7 ounces, about 7.5 ounces, about 8 ounces, about 8.5 ounces, about 9 ounces, about 9.5 ounces, about 10 ounces, about 10.5 ounces, about 11 ounces, about 11.5 ounces, about 12 ounces, about 12.5 ounces, about 13 ounces, about 13.5 ounces, about 14 ounces, about 14.5 ounces, about 15 ounces, about 15.5 ounces, about 16 ounces, about 16.5 ounces, about 17 ounces, about 17.5 ounces, about 18 ounces, about 18.5 ounces, about 19 ounces, about 19.5 ounces, or about 20 ounces of insect, bacteria, and/or fungi control composition to a gallon of water prior to application.

It should be appreciated that yet further inactive ingredients can be included in the insect, bacteria, and/or fungi control compositions of the present disclosure while maintaining the unexpected efficacy and longevity of the insect, bacteria, and/or fungi control compositions. For example, solvents other than water, such as ethyl lactate, alcohols (*e.g.,* ethanol, isopropanol, butanol, octanol *etc.*), and DMSO. Other ingredients that could be included in the insect, bacteria, and/or fungi control compositions include emulsifiers (*e.g.,* polyglyceryl oleate), stabilizers, preservatives, and thickening agents (*e.g.,* xanthan gum).

The insect, bacteria, and/or fungi control composition of the present disclosure can be used to effectively control insects, bacteria, and/or fungi in a treatment area. Treatment areas include, but are not limited to, soil, plants (*e.g.,* crops), buildings, decks, gazebos, homes (e.g., houses, apartments, *etc.*)*,* tents, motorhomes, furniture, including indoor and/or outdoor structures, clothing, and/or insect nets, for example. The insect, bacteria, and/or fungi control compositions may also be formulated as a spray, lotion, cream, or gel for topical administration to humans, pets, livestock, or other animals. The mode of application may be adapted to the treatment area. For example spray application may be used for plants, soil, and building exteriors. In one embodiment, the insect, bacteria, and/or fungi control compositions can be painted onto treatment areas (*e.g.,* tree trunks, decks, and gazebos). To effectively control insects, bacteria, and/or fungi from one or more people, a diffuser can be used to volatilize the insect, bacteria, and/or fungi control compositions.

In embodiments where the treatment area includes crops, the crops can be, *e.g.,* root vegetables; leaves of root and tuber vegetables; bulb vegetables; leafy vegetables; brassica head and stem vegetables; legume vegetables; foliage of legume vegetables; fruiting vegetables; citrus fruits; pome fruits; stone fruits; berry and small fruits; tree nuts; cereal grains; grass forages, fodders, and hays; nongrass animal feeds; herbs and spices; oilseeds; edible fungi; stalk, stem, and leaf petiole vegetables; tropical and subtropical fruits, edible peels; and/or tropical and subtropical fruits, inedible peels.

In one embodiment, the insect, bacteria, and/or fungi control composition of the present disclosure may be used to kill insects, bacteria, and/or fungi in a treatment area (e.g., a field, orchard, or garden). Thus, in one embodiment, the present disclosure is directed to a method of killing insects, bacteria, and/or fungi in a treatment area comprising applying the insect, bacteria, and/or fungi control composition of the present disclosure to a treatment area in an amount effective to kill about 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%, or 100% of insects in the treated area. These values can also be expressed as ranges, for example, the insect, bacteria, and/or fungi control compositions kill about 40% to 100%, 45% to 95%, 55% to 90%, or 60% to 85% of insects, bacteria, and/or fungi in a treatment area when applied to said treatment area.

In another embodiment, the present disclosure is directed to a method of effectively controlling insects, bacteria, and/or fungi in a treatment area comprising applying the insect, bacteria, and/or fungi control composition of the present disclosure to a treatment area in an amount effective to control about 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%, or 100% of insects, bacteria, and/or fungi in the treated area. These values can also be expressed as ranges, for example, the insect, bacteria, and/or fungi control compositions effectively control about 60% to 100%, 65% to 95%, 75% to 90%, or 70% to 85% of insects, bacteria, and/or fungi in a treatment area when applied to said treatment area.

In certain embodiments, the insect, bacteria, and/or fungi control composition of the present disclosure can be used to disrupt the insect egg cycle. For example, pheromone interruption can occur when female insects encounter oils that affect the females' ability to mate. Soaps and castor oil may cause mortality to eggs, either previously laid, or being carried within the female insect.

In certain embodiments, the insect, bacteria, and/or fungi control composition can kill, repel, and disrupt the egg cycle. Soap activates when absorbed into the body of the insect via its breathing apparatuses, including spiracles and siphons. The absorbed soap causes insect death as the soap expands within the insect's body. Oils repel via pheromone interruption, as described above.

The quantity of insect, bacteria, and/or fungi control composition to be applied depends on a number of factors, such as whether the application area is indoors or outdoors. In some embodiments, 1/8 gallon, 1/4 gallon, 3/8 gallon, 1/2 gallon, 5/8 gallon, 3/4 gallon, 7/8 gallon, 1 gallon, or 1 1/4 gallons of diluted insect, bacteria, and/or fungi control composition is applied per 1000 square feet or per acre. These values can also be expressed as ranges, for example, 1/8 gallon to 1 1/4 gallons, 3/8 gallon to 1 gallon, 1/2 gallon to 7/8 gallon, or 5/8 gallon to 3/4 gallon of diluted insect, bacteria, and/or fungi control composition applied per 1000 square feet or per acre. In some embodiments, about 1, 2, 3, 4, 5, 6, 7, 8, 9, 10, 11, 12, 13, 14, 15, 16, 17, 18, 19, or 20 ounces of insect, bacteria, and/or fungi control composition is diluted per gallon. These values can also be expressed as ranges, for example, about 1-20, 2-19, 3-17, 4-16, 5-15, 6-14, 7-13, 8-12, 9-11, 1-18, 1-16, 1-14, 1-12, 1-10, 1-8, 1-6, 1-4, 1-2, 2-20, 4-20, 6-20, 8-20, 10-20, 12-20, 14-20, 16-20, or 18-20 ounces per gallon. Insect, bacteria, and/or fungi control composition can be applied using high pressure blowers, backpack blowers, pump up backpack sprayers, and other sprayers. Sprayers can be handheld (e.g., STIHL®), an automated irrigation system, or even spray bottles. When handheld sprayers and irrigation systems are used, the insect, bacteria, and/or fungi control composition may be diluted during application. When spray bottles are used, the insect, bacteria, and/or fungi control composition is diluted prior to application. In one embodiment, the insect, bacteria, and/or fungi control composition (concentrated or diluted) are dispersed using aerosol cans/sprayers, vaporizers, or bombs. In one embodiment, treatment areas include at least a portion of an object that is dipped into insect, bacteria, and/or fungi control compositions of the present disclosure, either concentrated or diluted. For example a potted plant or insect netting can be dipped into the insect, bacteria, and/or fungi control composition.

The duration of the insect, bacteria, and/or fungi control composition's effectiveness after application, and thus, the frequency of application depends on factors, such as the degree of infestation, the area to be treated, and the climate. For example, insect, bacteria, and/or fungi control compositions of the present disclosure may effectively control and/or kill insects, bacteria, and/or fungi for at least 1 hour, 2 hours, 3 hours, 4 hours, 5 hours, 6 hours, 7 hours, 8 hours, 9 hours, 10 hours, 11 hours, 12 hours, 13 hours, 14 hours, 15 hours, 16 hours, 17 hours, 18 hours, 19 hours, 20 hours, 21 hours, 22, hours, 23 hours, 24 hours, 25 hours, 26 hours, 27 hours, 28 hours, 29 hours, 30 hours, 31 hours, 32 hours, 33 hours, 34 hours, 35 hours, 36 hours 37 hours, 38 hours, 39 hours, 40 hours, 41 hours, 42 hours, 43 hours, 44 hours, 45 hours, 46 hours 47 hours, 48 hours, 3 days, 4 days, 5 days, 6 days, 7 days, 8 days, 9 days, 10 days, 11 days, 12 days, 13 days, 14 days, 15 days, 16 days, 17 days, 18 days, 19 days, 20 days, 21 days, 22 days, 23 days, 24 days, 25 days, 26 days, 27 days, 28 days, 29 days, or 30 days per application. These values can also be expressed as ranges, for example, insect, bacteria, and/or fungi control compositions of the present disclosure may effectively control and/or kill insects, bacteria, and/or fungi for at least 1 hour to 7 days, 7 days to 10 days, 10 days to 14 days, 14 days to 17 days, 17 days to 20 days, 20 days to 23 days, 23 days to 26 days, or 26 days to 30 days, inclusive.

In one embodiment, the insect, bacteria, and/or fungi control compositions retain the ability to kill at least 80%, 85%, 90%, 95%, 96%, 97%, 98%, 99% or 100% of insects, bacteria, and/or fungi for at least four weeks, or more. In one embodiment, the insect, bacteria, and/or fungi control compositions retain the ability to kill at least 80%, 85%, 90%, 95%, 96%, 97%, 98%, 99% or 100% of insects, bacteria, and/or fungi for at least three weeks. In one embodiment, the insect, bacteria, and/or fungi control compositions retain the ability to kill at least 80%, 85%, 90%, 95%, 96%, 97%, 98%, 99% or 100% of insects, bacteria, and/or fungi for at least two weeks. In one embodiment, the insect, bacteria, and/or fungi control compositions retain the ability to kill at least 80%, 85%, 90%, 95%, 96%, 97%, 98%, 99% or 100% of insects, bacteria, and/or fungi for at least one week. These values can also be expressed as ranges, for example, insect, bacteria, and/or fungi control compositions of the present disclosure may kill 100%-80% of insects, bacteria, and/or fungi for one week, 100%-80% of insects, bacteria, and/or fungi for two weeks, 90%-80% of insects, bacteria, and/or fungi for three weeks, and 85%-80% for four weeks.

In some embodiments, the insect, bacteria, and/or fungi control composition is applied in an amount effective to kill at least 5%, 10%, 15%, 20%, 25%, 30%, 40%, 45%, 50%, 55%, 60%, 65%, 70%, 75%, 80%, 85%, 90%, 95%, 96%, 97%, 98%, 99% or 100% of insects, bacteria, and/or fungi in the treatment area about 10 minutes after applying the insect, bacteria, and/or fungi control composition to the treatment area.

In certain aspects, the disclosure relates to a method of effectively control insects, bacteria, and/or fungi on a surface, comprising applying an insect, bacteria, and/or fungi control composition as disclosed herein to a surface in an amount effective to control insects on the surface. The surface can be, e.g., leaves, stems, and fruit of trees, field crops, vegetables, vine crops, and the like.

For indoor treatment areas (e.g., greenhouses and/or houseplants), an insect, bacteria, and/or fungi control composition may be applied once per month, or more frequently (e.g., once every three weeks, once every two weeks, weekly, every other day, or every day). To treat areas where the insect, bacteria, and/or fungi control composition is likely to be washed away by rain or frequent watering, more frequent applications may be necessary. In certain embodiments, the insect, bacteria, and/or fungi control composition of the disclosure is applied in a manner to treat outbreaks, or new infestations, as close as possible to the beginning stages of the outbreak rather than after the infestation has already set in place. In some embodiments, reapplication of the insect, bacteria, and/or fungi control composition may occur when a previous application of the insect, bacteria, and/or fungi control composition has lost at least about 80% of its lethal control of an insect, bacteria, and/or fungi on a given treatment area.

The present disclosure further provides a method of preventing insect reproduction in a treatment area comprising applying an insect, bacteria, and/or fungi control composition as described herein to the treatment area in an amount effective to at least one of (a) disrupt an insect egg cycle and/or inhibit ovo deposit by adult female insects and (b) kill an insect larva in the treated area for a duration of at least 1 hour, 2 hours, 3 hours, 4 hours, 5 hours, 6 hours, 7 hours, 8 hours, 9 hours, 10 hours, 11 hours, 12 hours, 13 hours, 14 hours, 15 hours, 16 hours, 17 hours, 18 hours, 19 hours, 20 hours, 21 hours, 22, hours, 23 hours, 24 hours, 25 hours, 26 hours, 27 hours, 28 hours, 29 hours, 30 hours, 31 hours, 32 hours, 33 hours, 34 hours, 35 hours, 36 hours 37 hours, 38 hours, 39 hours, 40 hours, 41 hours, 42 hours, 43 hours, 44 hours, 45 hours, 46 hours 47 hours, 48 hours, 3 days, 4 days, 5 days, 6 days, 7 days, 8 days, 9 days, 10 days, 11 days, 12 days, 13 days, 14 days, 15 days, 16 days, 17 days, 18 days, 19 days, 20 days, 21 days, 22 days, 23 days, 24 days, 25 days, 26 days, 27 days, 28 days, 29 days, or 30 days after application. These values can also be expressed as ranges, for example, insect, bacteria, and/or fungi control compositions of the present disclosure may effectively control and/or kill insects for at least 1 hour to 7 days, 7 days to 10 days, 10 days to 14 days, 14 days to 17 days, 17 days to 20 days, 20 days to 23 days, 23 days to 26 days, or 26 days to 30 days, inclusive. Effective amounts are described above. For example, four to six ounces of the insect, bacteria, and/or fungi control composition diluted in one gallon of water can be applied to 1000 square feet to at least one of (a) disrupt an insect egg cycle and/or inhibit ovo deposit by adult female insects and (b) kill an insect larva in the treated area for a duration of four weeks after application.

While this disclosure has been particularly shown and described with reference to example embodiments thereof, it will be understood by those skilled in the art that various changes in form and details may be made therein without departing from the scope of the present disclosure encompassed by the appended claims.

## EXAMPLES

### EXAMPLE 1 - Individual Components v. Present Formulation

*Escherichia coli* was grown in the presence of each component or combinations to determine the inhibitory potential. The components and the concentrations tested were: soapnut extract (*Sapindus mukorossi*) at 1 mg/mL, geraniol at 8 $\mu$L/mL, castor oil at 10 $\mu$L/mL, glyceryl monostearate at 22 mg/mL, rosemary oil at 7 $\mu$L/mL, potassium sorbate at 3 mg/mL, and Essential Oils-Ark at 100 $\mu$L/mL. The control consisted of soapnut extract (*Sapindus mukorossi*) at 1 mg/mL, glyceryl monostearate at 22 mg/mL, potassium sorbate at 3 mg/mL, and mineral oil at 25 $\mu$L/mL. The appropriate amount of each component was added to 5 mL of LB media, and each culture was inoculated with 50 $\mu$L of a 12 hour old culture of *E. coli*. The cultures were grown for 12 hours at 37°C with shaking at 225 rpm before being serial diluted and plated onto solid LB agar plates (5 $\mu$L per plate) in triplicate. Plates were incubated for 24 hours at 37°C, and then colonies were counted to determine the inhibitory potential.

The Essential Oils - Ark ("Organic Crop Product" or "OCP") formulation is as follows:

Actives

| Castor Oil | 10% |
| Rosemary Oil | 7% |
| Geraniol | 8% |

Inert Components

| Potassium Sorbate | 3% |
| Glyceryl monostearate | 22% |
| Soap (insecticidal) | 1% |
| Water | 49% |

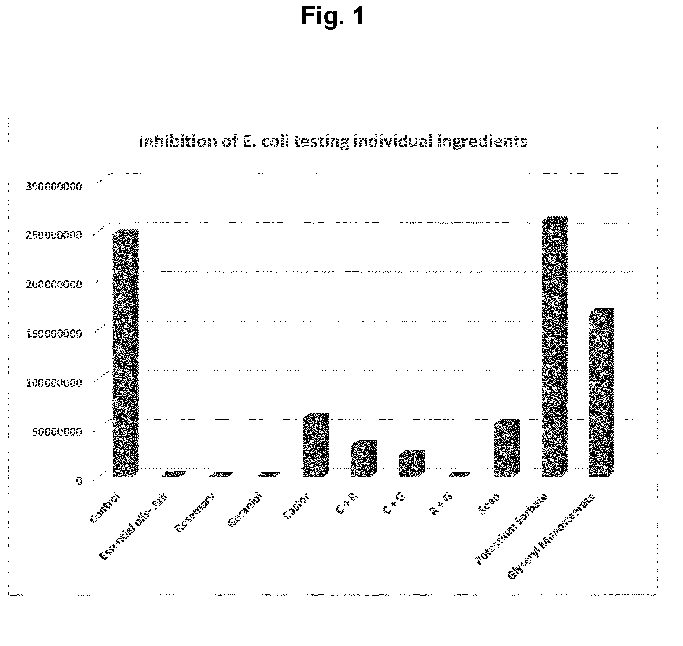

Fig. 1 and Table 1 show that potassium sorbate and glyceryl monostearate did not substantially reduce growth of *E. coli.* Soap did have some antimicrobial properties, but not as good as some of the essential oils.

**Table 1. CFU after 24 hours**

| Cultures | Dilution Factor | Avg # Colonies | CFUs | CFUs/mL |
|---|---|---|---|---|
| Control | 0.000001 | 12.33 | 12330000 | 246600000 |
| Essential oils- Ark | 0.001 | 38.33 | 38330 | 766600 |
| Rosemary | 1 | 21 | 21 | 420 |
| Geraniol | 1 | 2 | 2 | 40 |
| Castor | 0.00001 | 30.33 | 3033000 | 60660000 |
| C + R | 0.00001 | 16.33 | 1633000 | 32660000 |
| C + G | 0.00001 | 11.33 | 1133000 | 22660000 |
| R + G | 1 | 0 | 0 | 0 |
| Soap | 0.00001 | 27.33 | 2733000 | 54660000 |
| Potassium Sorbate | 0.000001 | 13 | 13000000 | 260000000 |
| Glyceryl Monostearate | 0.000001 | 8.33 | 8330000 | 166600000 |

(C = Castor Oil; R = Rosemary Oil; G = Geraniol)

## EXAMPLE 2 - **Essential Oil Comparison**

Combinations of essential oils, each at the concentration indicated in Example 1, were assayed for their inhibitory potential in a similar manner as Example 1.

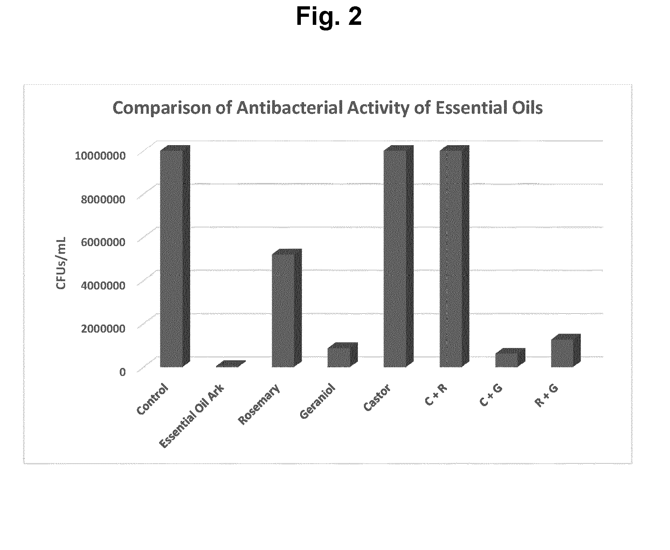

Fig. 2 and Table 2 show potassium sorbate, glyceryl monostearate, soap, and mineral oil (to make up the difference in the oil fraction) as the control. The essential oils were then tested in the non-essential oil fraction for synergy. Essential Oil - Ark showed the highest activity. Also, there was increasing antimicrobial action of the essential oils related to the combination of the oils leading to the highest activity found in the Essential Oil - Ark product. Geraniol and rosemary oils had the highest activity of the essential oils and together with castor oil (Essential Oil - Ark) there was greater activity than the initial oils.

**Table 2. CFU after 24 hours**

| | Avg | CFUs | CFUs/mL |
|---|---|---|---|
| Control | 16.667 | 16667000 | $3.33 \times 10^8$ |
| Essential Oils - Ark | 22.6667 | 2266.67 | 45333.4 |
| Rosemary | 26 | 260000 | 5200000 |
| Geraniol | 43.333 | 43333 | 866660 |
| Castor | 54 | 540000 | 10800000 |
| C + R | 50 | 500000 | 10000000 |
| C + G | 30.667 | 30667 | 613340 |
| R + G | 6.3333 | 63333 | 1266660 |

(C = Castor Oil; R = Rosemary Oil; G = Geraniol)

## EXAMPLE 3 - **Direct Spray of Organic Crop Product Formulation**

*Test Arena Information:*

Treatment Arenas: The Test Arenas were used to contain the test systems during the test substance applications. Fall armyworms and Southern corn rootworms were treated in 1.75" x 0.5" chlorinated polyvinyl chloride (CPVC) cartridges covered with tulle mesh. Pea Aphids were treated in 1.75" x 0.5" CPVC cartridges covered with BIOQUIP® 7250NSW mesh. House crickets were treated in 2.75" x 0.5" CPVC cartridges covered with tulle mesh.

Post-Treatment Arenas: Clean post-treatment arenas were used to contain the test systems after exposure to the test substance(s). Fall armyworms were kept in 35mm plastic Petri dishes. A single fall armyworm was placed in each post-treatment arena to avoid cannibalism. A cube of noctuid diet was placed in each post-treatment arena as a food source. House crickets were kept in 20oz SOLO® cups with a mesh lid. A potato chunk was placed in each post-treatment arena as a food source. Pea aphids were kept in 9oz SOLO® cups with a solid lid. A water-moistened filter paper was placed in the bottom of each cup. A bundle of clover stems was wrapped in water-moistened filter paper and placed in each arena as a food/moisture source. Southern corn rootworms were placed in 9oz SOLO® cups with a solid lid. A water-moistened filter paper was placed in the bottom of each cup. Corn leaf cuttings were placed in each post-treatment arena as a food source.

*Test Equipment:*

Volumetric Measuring Equipment: Graduated cylinders and/or beakers were used as needed in preparing the test substance(s).

$CO_2$ and Regulator: A standard 20-pound $CO_2$ cylinder with regulator was used to anesthetize the test systems and sort them into the test arenas (prior to exposure to the test substances). The test systems were allowed to adequately recover from anesthetizing before being exposed to the test substance(s). They were not anesthetized at any point following exposure to the test substance(s). Any additional transfers required after exposure to the test substances was conducted using methods that did not involve anesthetizing.

Intermediate Sorting/Transfer Containers: Additional sorting and transfer containers were used to aid in moving the test systems from the primary rearing/collection containers and into the treatment and/or post-treatment arenas.

Metronome/Timing Equipment: A metronome and/or other timing equipment were used as needed to assist in the timing when conducting the applications and/or when collecting the observations.

Application Equipment: A 2.5-gallon gas-powered STIHL® backpack blower was used to make applications for the 8oz/gallon dilution. The remaining non-control test substances were applied with a pressurized sprayer utilizing a flat fan nozzle.

**Methods:**

*Test Design:*

Each Treatment and/or Post-Treatment Arena was labeled with a test substance code and a replicate number. The arenas were positioned on a clean tray and grouped together per test substance type. The tray(s) with the Treatment and Post-Treatment Arenas were also labeled using the study name, trial name, and the study initiation date (as a duplicate means of ensuring accurate data collection).

The test systems were sorted into the Treatment Arenas using the appropriate methods based on the species type.

All test systems were confirmed to be of "good vigor" (alive) prior to exposure to the test substance(s).

Only live test systems were selected for use in the study.

After all test systems were transferred into the test arenas, they were confirmed to be alive and exhibiting normal behavior before continuing with the study.

The number of replicates conducted per test substance and the number of test systems evaluated per replicate were as follows:

**Table 3**

| # Reps per Substance | # Systems per Rep | # Systems per Substance | # Test Substances | Total # Systems | # Test Arenas |
|---|---|---|---|---|---|
| 4 | 10 | 40 | 5 | 200 | 20 |

*Test Substance Preparation & Applications:*

The Essential Oils - Ark ("Organic Crop Product" or "OCP") formulation is as follows:

| Actives | |
|---|---|
| Castor Oil | 10% |
| Rosemary Oil | 7% |
| Geraniol | 8% |

Inert Components

| | |
|---|---|
| Potassium Sorbate | 3% |
| Glyceryl monostearate | 22% |
| Soap (insecticidal) | 1% |
| Water | 49% |

OCP were shaken and then mixed to 8 oz/gal, ½ gal/acre, ¼ gal/acre, and 1/8 gal/acre dilutions.

The OCP were adequately shaken prior to applications. For the 8oz/gal dilution, the applications were made using a 2.5gallon STIHL® backpack sprayer set on the 2nd flow rate setting with the misting screen on the applicator. 2.5 linear feet were covered with the sprayer in 1.29 seconds from a 3' distance. This equated to a rate of 1500ft$^2$/gallon of solution. The 1/2 gal/acre, ¼ gal/acre, and 1/8 gal/acre dilutions were applied using a pressurized sprayer (20psi) with a flat fan nozzle. These applications were made on a track spray fixture. A 48.6" length was sprayed in one second from a 12" distance.

*Observation Methods:*

The number of "Alive", "Knockdown (KD)", and "Dead" test systems per arena were recorded prior to applications (Pre-trt) 30 mins, 1 hr, 2 hrs, 4 hrs, 24 hrs, and then daily as needed until all non-control test systems were dead.

The observations were made by raising the test arenas and gently blowing air on the test systems to provoke movement, lightly prodding the test systems, or the test arenas were shaken/agitated to provoke test system movement.

The test systems were transferred from the Treatment Arenas into the clean Post-Treatment Arenas 1 hour after the applications.

Definitions of "Alive", "Knockdown (KD)", and "Dead":

Alive - Test System exhibited normal forward motion or the ability to fly.
Knockdown (KD) - Test System exhibited some movement but could not crawl or fly.
Dead - Test System exhibited no movement, even when stimulated.

*Environmental Conditions:*

The test systems were tested under ambient laboratory conditions.

The environmental conditions were recorded during the study:

| | | | |
|---|---|---|---|
| Applications: | Temperature: 66°F | Humidity: 49% |
| Laboratory: | Temperature: 70°F | Humidity: 41% |

The results of this study are shown in **Tables 4-7,** which illustrate the percent mortality of their respective test systems after test substance applications.

Against fall armyworms (**Table 4**), OCP (8 oz/gal), OCP (½ gal/acre), OCP (¼ gal/acre), and OCP (1/8 gal/acre) recorded 85%, 95%, 88%, and 48% mortality by the three-days after treatment (3DAT) observation, respectively. By the five-days after treatment (5DAT) observation, all OCP populations, except for the 1/8 gal/acre population, reached 100% mortality. The 1/8 acre population recorded 63% mortality by the 5DAT observation. All four OCP populations had levels of mortality that were statistically higher than the levels of mortality recorded for the control populations at the 3DAT observation. At the 3DAT observation, the 8 oz/gal, ½ gal/acre, and ¼ gal/acre populations recorded statistically similar levels of mortality. The 8 oz/gal, ½ gal/acre, and ¼ gal acre populations yield mortality levels that were statistically higher than those of the 1/8 gal/acre population at the 3DAT observation.

**Table 4 - Fall Armyworms - Average Percent Mortality**

| Test substance | Pretreatment | 30 min | 1 hr | 2 hr | 4 hr | 24 hr | 2DAT | 3DAT | 4DAT | 5DAT | 6DAT |
|---|---|---|---|---|---|---|---|---|---|---|---|
| Control - Untreated | 0% | 0% | 0% | 0% | 0% | 0% | 0% | 0% | 0% | 0% | 0% |
| OCP (8 oz/gal) | 0% | 0% | 23% | 38% | 60% | 8%† | 40% | 85% | 98% | 100% | 100% |

(continued)

| Test substance | Pretreatment | 30 min | 1 hr | 2 hr | 4 hr | 24 hr | 2DAT | 3DAT | 4DAT | 5DAT | 6DAT |
|---|---|---|---|---|---|---|---|---|---|---|---|
| OCP (½ gal/acre) | 0% | 0% | 3% | 13% | 25% | 10%† | 68% | 95% | 100% | 100% | 100% |
| OCP (¼ gal/acre) | 0% | 0% | 3% | 13% | 15% | 18% | 60% | 88% | 90% | 98% | 100% |
| OCP (1/8 gal/acre) | 0% | 0% | 0% | 5% | 3% | 15% | 43% | 48% | 60% | 63% | 65% |
| †Lower values as compared to previous time points reflect recategorization of insects from "Dead" to "Knockdown". |||||||||||| |

Against house crickets (**Table 5**), OCP (8 oz/gal), OCP (½ gal/acre), OCP (¼ gal/acre), and OCP (1/8 gal/acre) recorded 88%, 78%, 63%, and 68% mortality by the 24 hr. observation, respectively. By the two-days after treatment (2DAT) observation, all 2DAT populations reached 100% mortality. No statistical difference was observed between the mortality rates of the different OCP populations at the 24 hr. observation. All four OCP populations had levels of mortality that were statistically higher than the levels of mortality recorded at the 24 hr. observation.

### Table 5 - House Crickets - Average Percent Mortality

| Test substance | Pretreatment | 30 min | 1 hr | 2 hr | 4 hr | 24 hr | 2DAT |
|---|---|---|---|---|---|---|---|
| Control - Untreated | 0% | 0% | 0% | 0% | 0% | 3% | 3% |
| OCP (8 oz/gal) | 0% | 0% | 3% | 5% | 20% | 88% | 100% |
| OCP (½ gal/acre) | 0% | 3% | 0%† | 0% | 10% | 78% | 100% |
| OCP (¼ gal/acre) | 0% | 3% | 3% | 5% | 10% | 63% | 100% |
| OCP (1/8 gal/acre) | 0% | 0% | 0% | 0% | 3% | 68% | 100% |
| †Lower value as compared to previous time point reflects recategorization of insects from "Dead" to "Knockdown". ||||||||

Against pea aphids (**Table 6**), all four OCP iterations recorded 100% mortality by the 24 hr. observation. No statistical difference was observed between the mortality rates of the different OCP populations at the 24 hr. observation. All four OCP populations had levels of mortality that were statistically higher than the levels of mortality recorded from the control population at the 24 hr. observation.

### Table 6 - Pea Aphids - Average Percent Mortality

| Test substance | Pretreatment | 30 min | 1 hr | 2 hr | 4 hr | 24 hr |
|---|---|---|---|---|---|---|
| Control - Untreated | 0% | 0% | 0% | 0% | 0% | 3% |
| OCP (8 oz/gal) | 0% | 10% | 48% | 83% | 98% | 100% |
| OCP (½ gal/acre) | 0% | 23% | 55% | 90% | 98% | 100% |
| OCP (¼gal/acre) | 0% | 10% | 35% | 63% | 80% | 100% |
| OCP (1/8 gal/acre) | 0% | 5% | 25% | 65% | 80% | 100% |

Against Southern corn rootworm (**Table 7**), OCP (8 oz/gal), OCP (½ gal/acre), OCP (¼ gal/acre), and OCP (1/8 gal/acre) recorded 100%, 100%, 100%, and 98% mortality by the 24 hr. observation, respectively. By the 2DAT observation, all 2DAT populations reached 100% mortality. No statistical difference was observed between the mortality rates of the different OCP populations at the 24 hr. observation. All four OCP populations had levels of mortality that were statistically higher than the levels of mortality recorded at the 24 hr. observation.

### Table 7 - Southern Corn Rootworm - Average Percent Mortality

| Test substance | Pretreatment | 30 min | 1 hr | 2 hr | 4 hr | 24 hr | 2DAT |
|---|---|---|---|---|---|---|---|
| Control - Untreated | 0% | 0% | 0% | 0% | 0% | 0% | 5% |
| OCP (8 oz/gal) | 0% | 5% | 5% | 8% | 28% | 100% | 100% |
| OCP (½ gal/acre) | 0% | 0% | 0% | 5% | 28% | 100% | 100% |

(continued)

| Test substance | Pretreatment | 30 min | 1 hr | 2 hr | 4 hr | 24 hr | 2DAT |
|---|---|---|---|---|---|---|---|
| OCP (¼gal/acre) | 0% | 0% | 0% | 0% | 10% | 100% | 100% |
| OCP (1/8 gal/acre) | 0% | 0% | 0% | 5% | 10% | 98% | 100% |

These results indicate that OCP is highly effective as a direct spray insecticide against house crickets, pea aphids, and Southern corn rootworms when applied at 8 oz/gal with a backpack sprayer or when at applied at the ½ gal/acre, ¼ gal/acre, or 1/8 gal/acre with a pressurized spray system. OCP is also highly effective as a direct spray insecticide against fall armyworms when applied at 8 oz/gal with a back sprayer or when applied at the ½ gal/acre or ¼ gal/acre rates with a pressurized spray system. OCP exhibits moderate efficacy against house crickets when applied at a rate of 1/8 gal/acre with a pressurized spray system.

**EXAMPLE 4 - Residual Effects of Organic Crop Product Formulation**

*Test Arena Information:*

Surface Type: Camellia leaves staples to plywood panels. The test substance(s) were applied to the surfaces.
Cover Type: A 90mm plastic Petri dish was vented by means of a mesh-covered hole in the top. These vented Petri dishes were used to contain the test systems to the test surfaces.
Post-Treatment Arenas: Clean post-treatment arenas were used to contain the test systems after exposure to the test substance(s). Fall armyworms were kept in 35mm plastic petri dishes. A single fall armyworm was placed in each post-treatment arena to avoid cannibalism. A cube of noctuid diet was placed in each post-treatment arena as a food source. House crickets were kept in 20oz SOLO® cups with a mesh lid. A potato chunk was placed in each post-treatment arena as a food source. Pea aphids were kept in 9oz SOLO® cups with a solid lid. A water-moistened filter paper was placed in the bottom of each cup. A bundle of clover stems was wrapped in water-moistened filter paper and placed in each arena as a food/moisture source. Southern corn rootworms were placed in 9oz SOLO® cups with a solid lid. A water-moistened filter paper was placed in the bottom of each cup. Corn leaf cuttings were placed in each post-treatment arena as a food source.

*Test Equipment:*

Volumetric Measuring Equipment: Graduated cylinders and/or beakers were used as needed in preparing and/or measuring the flow rates of the test substance(s).
$CO_2$ and Regulator: $CO_2$ was used to anesthetize the test systems and sort them into the test arenas (prior to exposure to the test substances). The test systems were allowed to adequately recover from anesthetizing before being exposed to the test substance(s), and they were not anesthetized at any point following exposure to the test substance(s). Any additional transfers required after exposure to the test substances was conducted using methods that did not involve anesthetizing.
Intermediate Sorting/Transfer Containers: Additional sorting and transfer containers were used to aid in moving the test systems from the primary rearing/collection containers and into the treatment and/or post-treatment arenas.
Metronome/Timing Equipment: A metronome and/or other timing equipment were used as needed to assist in the timing when conducting the applications and/or when collecting the observations.

*Application Equipment:*

Application Equipment: A 2.5-gallon gas-powered STIHL® backpack blower was used to make applications for the 8oz/gallon dilution. The remaining non-control test substances were applied with a pressurized sprayer utilizing a flat fan nozzle.

**Methods:**

*Test Substance Preparation & Applications:*

The Essential Oils - Ark ("Organic Crop Product" or "OCP") formulation is as follows:

Actives

| | |
|---|---|
| Castor Oil | 10% |
| Rosemary Oil | 7% |
| Geraniol | 8% |

Inert Components

| | |
|---|---|
| Potassium Sorbate | 3% |
| Glyceryl monostearate | 22% |
| Soap (insecticidal) | 1% |
| Water | 49% |

OCP were shaken and then mixed to 8oz/gal, ½ gal/acre, ¼ gal/acre, and 1/8 gal/acre dilutions.

OCP were adequately shaken prior to applications. For the 8oz/gal dilution, the applications were made using a 2.5gallon STIHL® backpack sprayer set on the 2nd flow rate setting with the misting screen on the applicator. 2.5 linear feet were covered with the sprayer in 1.29 seconds from a 3' distance. This equated to a rate of 1500ft²/gallon of solution. The ½ gal/acre, ¼ gal/acre, and 1/8 gal/acre dilutions were applied using a pressurized sprayer (20psi) with a flat fan nozzle. These applications were made on a track spray fixture. A 48.6" length was sprayed in one second from a 12" distance.

*Aging and Aged Evaluation*

After applications, the test surfaces were aged outdoors, unprotected from sunlight, but protected from rainfall by means of clear plastic paneling.

Test systems were exposed to the test surfaces at 7 days, 14 days, and 21 days after treatment (DAT). Pea aphids were exposed at 22 DAT due to a delay in shipment.

*Test Design:*

Prior to applications, each Surface Type and/or Post-Treatment Arena was labeled with a test substance code and a replicate number. The arenas were positioned on a clean tray and grouped together per test substance type. The tray(s) with the Surface Types and/or Post-Treatment Arenas were also labeled using the study name, trial name, and the study initiation date (as a duplicate means of ensuring accurate data collection).

The test systems were sorted onto the surfaces using the appropriate methods based on the species type.

All test systems were confirmed to be of "good vigor" (alive) prior to exposure to the surfaces.

Only live test systems were selected for use in the study.

After all test systems were transferred onto the surfaces, they were confirmed to be alive and exhibiting normal behavior before continuing with the study.

The number of replicates conducted per test substance and the number of test systems evaluated per replicate were as follows for each aged evaluation:

Table 8

| # Reps per Substance | # Systems per Rep | # Systems per Substance | # Test Substances | Total # Systems | # Test Arenas |
|---|---|---|---|---|---|
| 4 | 10 | 40 | 5 | 200 | 20 |

*Observation Methods:*

The number of "Alive", "Knockdown (KD)", and "Dead" test systems per arena was recorded prior to surface exposure (Pre-trt), and at 30 min, 1 hr, 2 hrs, 4 hrs, 24 hrs and then daily as needed.

The observations were collected by raising the test arenas and gently blowing air on the test systems to provoke movement, lightly prodding the test systems, or the test arenas were shaken/agitated to provoke test system movement.

Pea aphids were held on the treated surfaces for 1 hour and then they were transferred into the clean Post-treatment arenas for the remaining observations. The other test systems were held on the treated surfaces for 4 hours and then they were transferred into the clean Post-treatment arenas for the remaining observations.

Definitions of "Alive", "Knockdown (KD)", and "Dead":

Alive - Test System exhibited normal forward motion and/or the ability to fly.

Knockdown (KD) - Test System exhibited some movement but could not crawl and/or fly.

Dead - Test System exhibited no movement when stimulated.

*Environmental Conditions:*

The test systems were tested under ambient laboratory conditions.

Average environmental conditions recorded during the study:

| Applications: | Temperature: 61°F | Humidity: 47% |
| Laboratory: | Temperature: 70°F | Humidity: 41% |

The results of this study are shown in **Tables 9-12,** which illustrate the percent mortality of their respective test systems after exposure to test substances for each aged evaluation conducted.

Against fall armyworms (**Table 9**), OCP (8 oz/gal), OCP (½ gal/acre), and OCP (¼ gal/acre), were effective for up to 21-days after treatment (21DAT). All three test substances recorded 95% or higher mortality levels at each aged evaluation by the four-days after treatment (4DAT) observation. OCP (1/8 gal/acre) was effective at killing armyworms for up to 14-days after treatment (14DAT). By the 21DAT aged evaluation, efficacy dropped with the 1/8 gal/acre treatment yielding 55% mortality by the 4DAT observation. A statistical analysis of the 21DAT aged evaluation data (4DAT observation) showed that all four iterations of OCP yielded mortality levels that were significantly better than those of the untreated control population. OCP (8 oz/gal), OCP (½ gal/acre), and OCP (¼ gal/acre) treatments yielded mortality levels that were significantly higher than those of the OCP (1/8 gal/acre) population. There were no statistical differences in the performance of OCP (8 oz/gal), OCP (½ gal/acre), and OCP (¼ gal/acre) treatments at the 21DAT aged evaluation (4DAT observation).

**Table 9 - Fall Armyworms - Average Percent Mortality at Aged Evaluations**

| Aged Evaluation | Test substance | Pretreatment | 30 min | 1 hr | 2 hr | 4 hr | 24 hr | 2DAT | 3DAT | 4DAT | 5DAT | 6DAT | 7DAT |
|---|---|---|---|---|---|---|---|---|---|---|---|---|---|
| 7DAT | Control - Untreated | 0% | 0% | 0% | 0% | 0% | 0% | 0% | 0% | 0% | 0% | | |
| | OCP (8 oz/gal) | 0% | 25% | 88% | 100% | 100% | 88%† | 80%† | 90% | 95% | 100% | | |
| | OCP (½ gal/acre) | 0% | 10% | 45% | 73% | 80% | 40%† | 38%† | 95% | 100% | 100% | | |
| | OCP (¼ gal/acre) | 0% | 5% | 33% | 70% | 73% | 25%† | 60% | 100% | 100% | 100% | | |
| | OCP (1/8 gal/acre) | 0% | 0% | 23% | 28% | 45% | 40%† | 83% | 93% | 100% | 100% | | |
| 14DAT | Control - Untreated | 0% | 0% | 0% | 0% | 0% | 0% | 0% | 0% | 0% | 0% | | |
| | OCP (8 oz/gal) | 0% | 0% | 8% | 45% | 50% | 33%† | 50% | 90% | 100% | 100% | | |
| | OCP (½ gal/acre) | 0% | 0% | 5% | 48% | 50% | 38%† | 75% | 100% | 100% | 100% | | |
| | OCP (¼ gal/acre) | 0% | 0% | 8% | 28% | 30% | 38% | 95% | 100% | 100% | 100% | | |
| | OCP (1/8 gal/acre) | 0% | 0% | 0% | 25% | 33% | 45% | 90% | 98% | 98% | 100% | | |
| 21DAT | Control - Untreated | 0% | 0% | 0% | 0% | 0% | 3% | 3% | 3% | 3% | 3% | 3% | 3% |
| | OCP (8 oz/gal) | 0% | 3% | 5% | 23% | 25% | 8%† | 78% | 98% | 100% | 100% | 100% | 100% |
| | OCP (½ gal/acre) | 0% | 0% | 0% | 5% | 13% | 18% | 95% | 100% | 100% | 100% | 100% | 100% |
| | OCP (¼ gal/acre) | 0% | 0% | 0% | 0% | 10% | 30% | 73% | 90% | 98% | 100% | 100% | 100% |
| | OCP (1/8 gal/acre) | 0% | 0% | 0% | 0% | 3% | 15% | 43% | 55% | 55% | 55% | 58% | 60% |
| †Lower values as compared to previous time points reflect recategorization of insects from "Dead" to "Knockdown". | | | | | | | | | | | | | |

Against house crickets (**Table 10**), OCP (8 oz/gal) was effective for up to 21DAT. OCP (8 oz/gal) recorded 95% or higher mortality levels at each aged evaluation by the 4DAT observation. OCP (½ gal/acre), OCP (¼gal/acre), and OCP (1/8 gal/acre) were effective at killing house crickets through the 14DAT aged evaluation. By the 21DAT aged evaluation, efficacy for OCP (½ gal/acre), OCP (¼gal/acre), and OCP (1/8 gal/acre) dropped to 68%, 65%, and 43% respectively by the 4DAT observation. A statistical analysis of the 21DAT aged evaluation data (4DAT observation) showed that OCP (8 oz/gal), OCP (½ gal/acre), and OCP (¼ gal/acre) yielded mortality levels that were significantly better than those of the untreated control population. OCP (8 oz/gal) recorded mortality levels that were statistically better than those of the OCP (1/8 gal/acre) treatment. There were no statistical differences observed in the OCP (8 oz/gal), OCP (½ gal/acre), and OCP (¼gal/acre) treatments at the 21DAT aged evaluation (4DAT observation).

**Table 10 - House Crickets - Average Percent Mortality at Aged Evaluations**

| Aged Evaluation | Test substance | Pretreatment | 30 min | 1 hr | 2 hr | 4 hr | 24 hr | 2DAT | 3DAT | 4DAT | 5DAT | 6DAT | 7DAT |
|---|---|---|---|---|---|---|---|---|---|---|---|---|---|
| 7DAT | Control - Untreated | 0% | 0% | 0% | 0% | 0% | 10% | 20% | 25% | 28% | | | |
| | OCP (8 oz/gal) | 0% | 0% | 0% | 3% | 8% | 93% | 100% | 100% | 100% | | | |
| | OCP (½ gal/acre) | 0% | 0% | 0% | 0% | 0% | 48% | 95% | 100% | 100% | | | |
| | OCP (¼ gal/acre) | 0% | 0% | 0% | 0% | 0% | 43% | 93% | 100% | 100% | | | |
| | OCP (1/8 gal/acre) | 0% | 0% | 0% | 0% | 0% | 23% | 83% | 95% | 95% | | | |
| 14DAT | Control - Untreated | 0% | 0% | 0% | 0% | 0% | 0% | 8% | 10% | 15% | 20% | | |
| | OCP (8 oz/gal) | 0% | 0% | 0% | 0% | 0% | 50% | 100% | 100% | 100% | 100% | | |
| | OCP (½ gal/acre) | 0% | 0% | 0% | 0% | 3% | 30% | 98% | 100% | 100% | 100% | | |
| | OCP (¼ gal/acre) | 0% | 0% | 0% | 0% | 0% | 40% | 98% | 100% | 100% | 100% | | |
| | OCP (1/8 gal/acre) | 0% | 0% | 0% | 0% | 0% | 33% | 65% | 80% | 88% | 93% | | |
| 21DAT | Control - Untreated | 0% | 0% | 0% | 0% | 0% | 3% | 5% | 13% | 13% | 13% | 15% | 20% |
| | OCP (8 oz/gal) | 0% | 0% | 0% | 0% | 0% | 20% | 88% | 95% | 95% | 98% | 100% | 100% |
| | OCP (½ gal/acre) | 0% | 0% | 0% | 0% | 0% | 28% | 55% | 65% | 68% | 68% | 75% | 75% |
| | OCP (¼ gal/acre) | 0% | 0% | 0% | 0% | 0% | 8% | 33% | 55% | 65% | 68% | 73% | 73% |
| | OCP (1/8 gal/acre) | 0% | 0% | 0% | 0% | 0% | 3% | 13% | 30% | 43% | 45% | 48% | 53% |

Against pea aphids (**Table 11**), all four iterations of OCP were effective for up to 22-days after treatment (22DAT). All four test substances recorded 83% or higher mortality levels at the 22DAT aged evaluation (24 hr evalution). A statistical analysis of the 22DAT aged evaluation data (24 hr observation) showed that all four iterations of OCP yielded mortality levels that were significantly better than those of the untreated control population. There were no statistical differences in the performance of the four OCP iterations at the 22DAT aged evaluation (24 hr observation).

**Table 11 - Pea Aphids - Average Percent Mortality at Aged Evaluations**

| Aged Evaluation | Test substance | Pretreatment | 30 min | 1 hr | 2 hr | 4 hr | 24 hr |
|---|---|---|---|---|---|---|---|
| 7DAT | Control - Untreated | 0% | 0% | 0% | 0% | 0% | 13% |
| | OCP (8 oz/gal) | 0% | 0% | 0% | 3% | 8% | 100% |
| | OCP (½ gal/acre) | 0% | 0% | 15% | 0%† | 5% | 58% |
| | OCP (¼ gal/acre) | 0% | 0% | 0% | 0% | 3% | 60% |
| | OCP (1/8 gal/acre) | 0% | 0% | 0% | 0% | 0% | 43% |
| 14DAT | Control - Untreated | 0% | 0% | 0% | 0% | 0% | 5% |
| | OCP (8 oz/gal) | 0% | 0% | 0% | 0% | 18% | 83% |
| | OCP (½ gal/acre) | 0% | 0% | 0% | 0% | 8% | 75% |
| | OCP (¼ gal/acre) | 0% | 0% | 0% | 0% | 3% | 73% |
| | OCP (1/8 gal/acre) | 0% | 0% | 0% | 0% | 0% | 49% |
| 21DAT | Control - Untreated | 0% | 0% | 0% | 0% | 0% | 8% |
| | OCP (8 oz/gal) | 0% | 0% | 0% | 0% | 0% | 98% |
| | OCP (½ gal/acre) | 0% | 0% | 0% | 0% | 3% | 95% |
| | OCP (¼ gal/acre) | 0% | 0% | 0% | 0% | 5% | 83% |
| | OCP (1/8 gal/acre) | 0% | 0% | 0% | 3% | 3% | 83% |
| †Lower value as compared to previous time point reflect recategorization of insects from "Dead" to "Knockdown". | | | | | | | |

Against Southern Corn Rootworms (**Table 12**), all four iterations of OCP were effective for up to 21DAT. All four test substances recorded 100% or higher mortality levels at each aged evaluation. A statistical analysis of the 21DAT aged evaluation data (24 hr observation) showed that all four iterations of OCP yielded mortality levels that were significantly better than those of the untreated control population. There were no statistical differences in the performance of the four OCP iterations at the 21DAT aged evaluation (24 hr observation).

**Table 12 - Southern Corn Rootworms - Average Percent Mortality at Aged Evaluations**

| Aged Evaluation | Test substance | Pretreatment | 30 min | 1 hr | 2 hr | 4 hr | 24 hr | 2DAT |
|---|---|---|---|---|---|---|---|---|
| 7DAT | Control - Untreated | 0% | 0% | 0% | 0% | 0% | 3% | 10% |
| | OCP (8 oz/gal) | 0% | 0% | 0% | 15% | 48% | 100% | 100% |
| | OCP (½ gal/acre) | 0% | 0% | 5% | 10% | 43% | 98% | 100% |
| | OCP (¼ gal/acre) | 0% | 0% | 0% | 8% | 33% | 100% | 100% |
| | OCP (1/8 gal/acre) | 0% | 0% | 0% | 0% | 25% | 98% | 100% |
| 14DAT | Control - Untreated | 0% | 0% | 0% | 0% | 0% | 0% | |
| | OCP (8 oz/gal) | 0% | 5% | 3% | 13% | 43% | 100% | |
| | OCP (½ gal/acre) | 0% | 0% | 5% | 15% | 30% | 100% | |
| | OCP (¼ gal/acre) | 0% | 0% | 5% | 20% | 33% | 100% | |
| | OCP (1/8 gal/acre) | 0% | 0% | 8% | 18% | 45% | 100% | |
| 21DAT | Control - Untreated | 0% | 0% | 0% | 0% | 0% | 5% | |
| | OCP (8 oz/gal) | 0% | 0% | 0% | 5% | 8% | 100% | |
| | OCP (½ gal/acre) | 0% | 0% | 0% | 0% | 25% | 100% | |
| | OCP (¼ gal/acre) | 0% | 0% | 3% | 3% | 3% | 100% | |
| | OCP (1/8 gal/acre) | 0% | 0% | 0% | 3% | 10% | 100% | |

**EXAMPLE 5** - Insect, Bacteria, and/or Fungi Control Composition 1

Insect, Bacteria, and/or Fungi Control Composition 1 is prepared by mixing geraniol, castor oil, glyceryl monostearate, rosemary oil, potassium sorbate, and organic soap according to the proportions provided in **Table 13**. The resulting oil mixture is then slowly added to balance water with mixing to dissolve the oils and detergents, forming an emulsion. The resulting concentrated insect, bacteria, and/or fungi control composition can then be further diluted prior to or during application.

**Table 13. Formula of Insect, Bacteria, and/or Fungi Control Composition 1.**

| Geraniol | 8.0% by weight |
|---|---|
| Castor Oil | 10.0% by weight |
| Glyceryl Monostearate | 22.0% by weight |
| Rosemary Oil | 7.0% by weight |
| Potassium Sorbate | 3.0% by weight |
| Organic Soap | 1.0% by weight |
| Balance Water | 49.0% by weight |

**EXAMPLE 6** - Insect, Bacteria, and/or Fungi Control Composition 2

Insect, Bacteria, and/or Fungi Control Composition 2 is prepared by mixing geraniol, castor oil, glyceryl monostearate, rosemary oil (can substitute mint oil, e.g., peppermint oil), potassium sorbate (can substitute sodium sorbate), and organic soap according to the proportions provided in **Table 14.** The resulting oil mixture is then slowly added to balance water with mixing to dissolve the oils and detergents, forming an emulsion. The resulting concentrated insect, bacteria, and/or fungi control composition can then be further diluted prior to or during application.

**Table 14. Formula of Insect, Bacteria, and/or Fungi Control Composition 2.**

| Geraniol | 10.0% by weight |
|---|---|
| Castor Oil | 10.0% by weight |
| Glyceryl Monostearate | 12.0% by weight |
| Rosemary Oil | 10.0% by weight |
| Potassium Sorbate | 3.0% by weight |
| Organic Soap | 15.0% by weight |
| Balance Water | 40.0% by weight |

**EXAMPLE 7** - Insect, Bacteria, and/or Fungi Control Composition 3

Insect, Bacteria, and/or Fungi Control Composition 3 is prepared by mixing geraniol, castor oil, glyceryl monostearate, rosemary oil, potassium sorbate, and organic soap according to the proportions provided in **Table 15.** The resulting oil mixture is then slowly added to balance water with mixing to dissolve the oils and detergents, forming an emulsion. The resulting concentrated insect, bacteria, and/or fungi control composition can then be further diluted prior to or during application.

**Table 15. Formula of Insect, Bacteria, and/or Fungi Control Composition 3.**

| Geraniol | 10.0% by weight |
|---|---|
| Castor Oil | 10.0% by weight |
| Glyceryl Monostearate | 12.0% by weight |
| Rosemary Oil | 10.0% by weight |
| Potassium Sorbate | 3.0% by weight |

(continued)

| | |
|---|---|
| **Organic Soap** | 25.0% by weight |
| **Balance Water** | 30.0% by weight |

## EXAMPLE 8 - Insect, Bacteria, and/or Fungi Control Composition 4

Insect, Bacteria, and/or Fungi Control Composition 4 is prepared by mixing geraniol, castor oil, cedarwood oil, peppermint oil, and soap (regular) according to the proportions provided in **Table 16.** The resulting oil mixture is then slowly added to balance water with mixing to dissolve the oils and detergents, forming an emulsion. The resulting concentrated insect, bacteria, and/or fungi control composition can then be further diluted prior to or during application.

**Table 16. Formula of Insect, Bacteria, and/or Fungi Control Composition 4.**

| | |
|---|---|
| **Geraniol** | 8.0% by weight |
| **Castor Oil** | 6.0% by weight |
| **Cedarwood Oil** | 8.0% by weight |
| **Peppermint Oil** | 3.0% by weight |
| **Soap (Regular)** | 25.0% by weight |
| **Hydrogenated Castor Oil** | 25.0% by weight |
| **Balance Water** | 25.0% by weight |

## EXAMPLE 9 - Insect, Bacteria, and/or Fungi Control Composition 5

Insect, Bacteria, and/or Fungi Control Composition 5 is prepared by mixing geraniol, castor oil, glyceryl monostearate, rosemary oil, and peppermint oil according to the proportions provided in **Table 17.** The resulting oil mixture is then slowly added to balance water with mixing to dissolve the oils and detergents, forming an emulsion. The resulting concentrated insect, bacteria, and/or fungi control composition can then be further diluted prior to or during application.

**Table 17. Formula of Insect, Bacteria, and/or Fungi Control Composition 5.**

| | |
|---|---|
| **Geraniol** | 5.0% by weight |
| **Castor Oil** | 5.0% by weight |
| **Rosemary Oil** | 10.0% by weight |
| **Peppermint Oil** | 5.0% by weight |
| **Glyceryl Monostearate** | 25.0% by weight |
| **Balance Water** | 50.0% by weight |

## EXAMPLE 10 - Residual Insecticides Against Banded Crickets

Materials

*Test Arena Information:*

Surface Type: Camellia leaves stapled to 4" x 4" plywood panels. The test substances were applied to these leaf-covered surfaces.

Cover Type: A 90 mm plastic Petri dish was vented by means of a mesh-covered hole in the top. These vented Petri dishes were used to contain the test systems to the test surfaces.

Post-Treatment Arenas: 20 oz. SOLO® cups with mesh lids were used as post-treatment arenas. A potato cutting was added as a food source. Clean post-treatment arenas were used to contain the test systems after exposure to the test substances.

*Test Equipment:*

Volumetric Measuring Equipment: Pipettes were used as needed in the preparing of the test substance(s).

$CO_2$ and Regulator: $CO_2$ was used to anesthetize the test systems and sort them into the test arenas (prior to exposure to the test substances). The test systems were allowed to adequately recover from anesthetizing before being exposed to the test substance(s), and they were not anesthetized at any point following exposure to the test substance(s). Any additional transfers required after exposure to the test substances was conducted using methods that did not involve anesthetizing.

Intermediate Sorting/Transfer Containers: Additional sorting and transfer containers were used to aid in moving the test systems from the primary rearing/collection containers and into the treatment and/or post-treatment arenas.

Metronome/Timing Equipment: A metronome and/or other timing equipment were used as needed to assist in the timing when conducting the applications and/or when collecting the observations.

*Application Equipment:*

Application Equipment: A compressed air sprayer with a flat fan nozzle, pressurized to 20 PSI, was used to make applications.

Methods

*Test Substance Preparation & Applications:*

The test substances were shaken and then mixed at a rate of 5.324 mL of concentrate per 200 mL of water.

The diluted test substances were adequately shaken prior to applications. A track spraying jig was used to make a linear application. A single leaf-covered panel was placed in the middle of the spray path. Using the compressed air sprayer, 48.6 linear inches were covered in a 1 second spray at a distance of 12". This equated to a treatment rate of 0.75 gallons per acre.

After applications, the test surfaces were aged outdoors, unprotected from sunlight, but protected from rainfall by means of clear plastic paneling.

Test systems were exposed to the test surfaces at 7 days after treatment (DAT).

*Test Design:*

Prior to exposure, each Surface Type and/or Post-Treatment Arena was labeled with a test substance code and a replicate number. The arenas were positioned on a clean tray and grouped together per test substance type. The tray(s) with the Surface Types and/or Post-Treatment Arenas were also labeled using the study name, trial name, and the study initiation date (as a duplicate means of ensuring accurate data collection).

The test systems were sorted onto the surfaces using the appropriate methods based on the species type.

All test systems were confirmed to be of "good vigor" (alive) prior to exposure to the surfaces.

Only live test systems were selected for use in the study.

After all test systems were transferred onto the surfaces, they were confirmed to be alive and exhibiting normal behavior before continuing with the study.

The number of replicates conducted per test substance and the number of test systems evaluated per replicate were as follows for each aged evaluation:

**Table 18**

| # Reps per Substance | # Systems per Rep | # Systems per Substance | # Test Substances | Total # Systems |
|---|---|---|---|---|
| 4 | 10 | 40 | 5 | 200 |

*Observation Methods:*

The number of "Alive", "Knockdown (KD)", and "Dead" test systems per arena was recorded prior to surface exposure (Pre-trt), and at 30 min, 1 hr, 2 hrs, 4 hrs, 24 hrs and then daily until 4DAT.

The observations were collected by raising the test arenas and gently blowing air on the test systems to provoke movement, lightly prodding the test systems, or the test arenas were shaken/agitated to provoke test system movement.

The banded crickets were held on the treated surfaces for 4 hour and then they were transferred into the clean Post-treatment arenas for the remaining observations.

Definitions of "Alive", "Knockdown (KD)", and "Dead":

Alive - Test System exhibited normal forward motion and/or the ability to fly

Knockdown (KD) - Test System exhibited some movement but could not crawl and/or fly.

Dead - Test System exhibited no movement when stimulated.

*Environmental Conditions:*

The test systems were tested under ambient laboratory conditions

Average environmental conditions recorded during the study:

| Applications: | Temperature: 64°F | Humidity: 33% |
| Laboratory: | Temperature: 70°F | Humidity: 49% |

## RESULTS / DISCUSSION:

The results of this study are shown in Tables 19 and 20. Table 19 illustrates the percent mortality of the banded crickets after the test substance applications. Table 20 contains the results of a Tukey-Kramer analysis (probability value $p \leq 0.05$) that was performed on the 3DAT mortality figures for the test substances.

**Table 19**

| Average Percent Mortality of Banded Crickets | | | | | | | | | |
|---|---|---|---|---|---|---|---|---|---|
| **Test Substance** | **Pre-trt** | **30 min** | **1 hr** | **2 hr** | **4 hr** | **24 hr** | **2 DAT** | **3 DAT** | **4DAT** |
| Control - Untreated | 0% | 0% | 0% | 0% | 0% | 0% | 8% | 8% | 18% |
| OCP Experimental (Castor Oil) | 0% | 0% | 0% | 0% | 0% | 0% | 0% | 8% | 18% |
| OCP Experimental (Geraniol) | 0% | 0% | 0% | 0% | 0% | 0% | 10% | 10% | 30% |
| OCP Experimental (Rosemary Oil) | 0% | 0% | 0% | 0% | 0% | 3% | 8% | 10% | 33% |
| OCP Experimental (Stop The Bites!) | 0% | 0% | 0% | 0% | 0% | 15% | 60% | 95% | 100% |

By the 3DAT observation, the OCP formula recorded 95% mortality against banded crickets. Castor oil, geraniol, and rosemary oil recorded 8%, 10%, and 10% mortality, respectively. The control population reached 8% mortality by the 3DAT observation. Data from the 4DAT observation was not considered due to excessive control population mortality.

To determine if any statistically significant differences existed, a Tukey-Kramer analysis (probability value of $p \leq 0.05$) was conducted on the mortality figures from the 3DAT observation period.

**Table 20**

Tukey-Kramer all pairs comparisons

| Contrast | Mean difference | Simultaneous 95% CI | SE | 0 | p-value |
|---|---|---|---|---|---|
| Complete Formula - Control | 8.8 | 7.1 to 10.4 | 0.53 | | <0.0001[1] |
| Complete Formula - Castor Oil | 8.8 | 7.1 to 10.4 | 0.53 | | 1 <0.0001 |
| Complete Formula - Geraniol | 8.5 | 6.9 to 10.1 | 0.53 | | 1 <0.0001 |
| Complete Formula - Rosemary Oil | 8.5 | 6.9 to 10.1 | 0.53 | | 1 <0.0001 |
| Geraniol - Control | 0.3 | -1.4 to 1.9 | 0.53 | | 0.9890 [2] |
| Rosemary Oil - Control | 0.3 | -1.4 to 1.9 | 0.53 | | 0.9890 [2] |
| Geraniol - Castor Oil | 0.3 | -1.4 to 1.9 | 0.53 | | 0.9890 [2] |
| Rosemary Oil - Castor Oil | 0.3 | -1.4 to 1.9 | 0.53 | | 0.9890 [2] |
| Geraniol - Rosemary Oil | 0.0 | -1.6 to 1.6 | 0.53 | | 1.0000 [2] |
| Castor Oil - Control | 0.0 | -1.6 to 1.6 | 0.53 | | 1.0000 [2] |

$H0: \theta = 0$

(continued)

Tukey-Kramer all pairs comparisons

| | Contrast | Mean difference | Simultaneous 95% CI | SE | 0 | p-value |
|---|---|---|---|---|---|---|

The difference between the means of the populations is equal to 0.

H1:θ ≠ 0

The difference between the means of the populations is not equal to 0.

[1] Reject the null hypothesis in favour of the alternative hypothesis at the 5% significance level.

[2] Do not reject the null hypothesis at the 5% significance level.

The results of this analysis showed that the OCP formula provided statistically significant levels of mortality as compared to the levels of mortality observed in the castor oil, geraniol, rosemary oil, or untreated control populations. The results also showed that there was no significant difference in the levels of mortality observed between the untreated control population and the castor oil, geraniol, or rosemary populations.

**CONCLUSION:**

The results of the study indicate that the OCP formula is highly effective at killing banded crickets when applied as a residual insecticide at a rate of 0.75 gallons per acre for up to 7 days after treatment. The individual active ingredients (castor oil, geraniol, and rosemary oil) did not provide high levels of mortality, failing to separate themselves from the untreated control.

**EXAMPLE 13** - **Direct Spray Insecticides Against Banded Crickets**

Materials

*Test Arena Information:*

Treatment Arenas: 2.75" CPVC cartridges covered with tulle mesh were used at test arenas. The Test Arenas were used to contain the test systems during the test substance applications.

Post-Treatment Arenas: 20 oz. SOLO cups with mesh lids were used as post-treatment arenas. A potato cutting was added as a food source. Clean post-treatment arenas were used to contain the test systems after exposure to the test substances.

*Test Equipment:*

Volumetric Measuring Equipment: Pipettes were used as needed in the preparing of the test substance(s).

$CO_2$ and Regulator: A standard 20-pound $CO_2$ cylinder with regulator was used to anesthetize the test systems and sort them into the test arenas (prior to exposure to the test substances). The test systems were allowed to adequately recover from anesthetizing before being exposed to the test substance(s). They were not anesthetized at any point following exposure to the test substance(s). Any additional transfers required after exposure to the test substances was conducted using methods that did not involve anesthetizing.

Intermediate Sorting/Transfer Containers: Additional sorting and transfer containers were used to aid in moving the test systems from the primary rearing/collection containers and into the treatment and/or post-treatment arenas.

Metronome/Timing Equipment: A metronome and/or other timing equipment were used as needed to assist in the timing when conducting the applications and/or when collecting the observations.

Application Equipment: A compressed air sprayer with a flat fan nozzle, pressurized to 20 PSI was used to make applications.

Methods

*Test Design:*

Each Treatment and/or Post-Treatment Arena was labeled with a test substance code and a replicate number. The arenas were positioned on a clean tray and grouped together per test substance type. The tray(s) with the Treatment and Post-Treatment Arenas were also labeled using the study name, trial name, and the study initiation date (as a duplicate means of ensuring accurate data collection).

The test systems were sorted into the Treatment Arenas using the appropriate methods based on the species type.

All test systems were confirmed to be of "good vigor" (alive) prior to exposure to the test substance(s).

Only live test systems were selected for use in the study.

After all test systems were transferred into the test arenas, they were confirmed to be alive and exhibiting normal behavior before continuing with the study.

The number of replicates conducted per test substance and the number of test systems evaluated per replicate were as follows:

**Table 21**

| # Reps per Substance | # Systems per Rep | # Systems per Substance | # Test Substances | Total # Systems |
|---|---|---|---|---|
| 4 | 10 | 40 | 5 | 200 |

*Test Substance Preparation & Applications:*

The test substances were shaken and then mixed at a rate of 5.324 mL of concentrate per 200 mL of water.

The diluted test substances were adequately shaken prior to applications. A track spraying jig was used to make a linear application. A single cartridge containing 10 test systems was placed in the middle of the spray path. Using the compressed air sprayer, 48.6 linear inches were covered in a 1 second spray at a distance of 12". This equated to a treatment rate of 0.75 gallons per acre.

*Observation Methods:*

The number of "Alive", "Knockdown (KD)", and "Dead" test systems per arena were recorded prior to applications (Pre-trt) 30 seconds, 30 mins, 1 hr, 2 hrs, 4 hrs, 24 hrs, and then daily until 3DAT (days after treatment).

The observations were made by raising the test arenas and gently blowing air on the test systems to provoke movement, lightly prodding the test systems, or the test arenas were shaken/agitated to provoke test system movement.

The test systems were transferred from the Treatment Arenas into the clean Post-Treatment Arenas 1 hour after the applications.

Definitions of "Alive", "Knockdown (KD)", and "Dead":

Alive - Test System exhibited normal forward motion or the ability to fly.
Knockdown (KD) - Test System exhibited some movement but could not crawl or fly.
Dead - Test System exhibited no movement, even when stimulated.

*Environmental Conditions:*

The test systems were tested under ambient laboratory conditions.

The environmental conditions were recorded during the study:

| Applications: | Temperature: 65°F | Humidity: 66% |
|---|---|---|
| Laboratory: | Temperature: 71°F | Humidity: 42% |

**RESULTS / DISCUSSION:**

The results of this study are shown in Table 21, which illustrates the percent mortality of the banded crickets after the test substance applications.

**Table 22**

| Average Percent Mortality of Banded Crickets | | | | | | | | |
|---|---|---|---|---|---|---|---|---|
| Test Substance | Pre-trt | 30 min | 1 hr | 2 hr | 4 hr | 24 hr | 2 DAT | 3 DAT |
| Control - Untreated | 0% | 0% | 0% | 0% | 0% | 0% | 10% | 20% |
| OCP Experimental (Castor Oil) | 0% | 0% | 0% | 0% | 0% | 3% | 30% | 45% |

(continued)

| Average Percent Mortality of Banded Crickets | | | | | | | | |
|---|---|---|---|---|---|---|---|---|
| Test Substance | Pre-trt | 30 min | 1 hr | 2 hr | 4 hr | 24 hr | 2 DAT | 3 DAT |
| OCP Experimental (Geraniol) | 0% | 0% | 0% | 0% | 0% | 8% | 33% | 43% |
| OCP Experimental (Rosemary Oil) | 0% | 0% | 0% | 0% | 0% | 13% | 23% | 38% |
| OCP Experimental (Complete Formula) | 0% | 0% | 0% | 3% | 8% | 73% | 98% | 100% |

By the 2DAT observation, the OCP formula recorded 98% mortality against banded crickets. Castor oil, geraniol, and rosemary oil recorded 30%, 33%, and 23% mortality, respectively. The control population reached 10% mortality by the 2DAT observation. Data from the 3DAT observation was not considered due to excessive control population mortality.

To determine if any statistically significant differences existed, a Tukey-Kramer analysis (probability value of $p \leq 0.05$) was conducted on the mortality figures from the 2DAT observation period.

**Table 23**

Tukey-Kramer all pairs comparisons

| Contrast | Mean difference | Simultaneous 95% CI | SE | 0 | p-value |
|---|---|---|---|---|---|
| Complete Formula - Control | 8.8 | 6.1 to 11.4 | 0.86 | | <0.0001[1] |
| Complete Formula - Rosemary Oil | 7.5 | 4.8 to 10.2 | 0.86 | | <0.0001[1] |
| Complete Formula - Castor Oil | 6.8 | 4.1 to 9.4 | 0.86 | | <0.0001 [1] |
| Complete Formula - Geraniol | 6.5 | 3.8 to 9.2 | 0.86 | | <0.0001[1] |
| Geraniol - Control | 2.3 | -0.4 to 4.9 | 0.86 | | 0.1178 [2] |
| Castor Oil - Control | 2.0 | -0.7 to 4.7 | 0.86 | | 0.1914 [2] |
| Rosemary Oil - Control | 1.3 | -1.4 to 3.9 | 0.86 | | 0.6065 [2] |
| Geraniol - Rosemary Oil | 1.0 | -1.7 to 3.7 | 0.86 | | 0.7723 [2] |
| Castor Oil - Rosemary Oil | 0.8 | -1.9 to 3.4 | 0.86 | | 0.9032 [2] |
| Geraniol - Castor Oil | 0.3 | -2.4 to 2.9 | 0.86 | | 0.9983 [2] |

H0: $\theta = 0$

The difference between the means of the populations is equal to 0.

H1: $\theta \neq 0$

The difference between the means of the populations is not equal to 0.

[1] Reject the null hypothesis in favour of the alternative hypothesis at the 5% significance level.

[2] Do not reject the null hypothesis at the 5% significance level.

The results of this analysis showed that the OCP formula provided statistically significant levels of mortality as compared to the levels of mortality observed in the castor oil, geraniol, rosemary oil, or untreated control populations. The results also showed that there was no significant difference in the levels of mortality observed between the untreated control population and the castor oil, geraniol, or rosemary populations.

**CONCLUSION:**

The results of the study indicate that the OCP formula is highly effective at killing banded crickets when applied as a direct kill insecticide at a rate of 0.75 gallons per acre. The individual active ingredients (castor oil, geraniol, and rosemary oil) did not provide high levels of mortality, failing to separate themselves from the untreated control.

**EXAMPLE 14 - Antimicrobial/Antifungal Efficacy**

**Summary of tests to demonstrate synergy**

The potential synergy between different essential oils was tested at Prime Analytical Laboratories (Concord, CA). Seven oils were selected from the Environmental Protection Agency's (EPA's) list of active ingredients exempt from the Federal Insecticide, Fungicide, and Rodenticide Act (FIFRA) under the Minimum Risk Exemption regulations in 40 C.F.R. § 152.25(f). These oils were cinnamon oil, clove oil, garlic oil, geraniol, peppermint oil, rosemary oil, and thyme oil. The oils were tested in a common base solution consisting of soap nut extract, castor oil, glyceryl monostearate, potassium sorbate, and water. Each oil was tested at two concentrations (a high and a low) and each potential pairing. To determine synergy, the oil mixtures were exposed to the bacterium *Pseudomonas aeruginosa* and the fungus *Candida albicans,* and the log reduction was determined.

*Materials and Methods*

Strains and growth media.

The strains used for the study were *Pseudomonas aeruginosa* ATCC 9027 and *Candida albicans* ATCC 10231. *P. aeruginosa* was grown on TSA-80 media (tryptic soy agar with polysorbate 80 and lecithin), and C. *albicans* was grown on SDA media (Saboreaud dextrose agar media). TSA-80 plates were incubated at 30°C-35°C, and SDA plates were incubated at 20°C-25°C.

Preparation of essential oil solutions.

The base solution consisted of the following on a v/v basis: soap nut extract *Sapindus mukorossi* (1.3%), castor oil (13.2%), glyceryl monostearate (28.9%), potassium sorbate (3.9%), and water (52.6%). Each essential oil was tested at a high concentration (12% v/v) and a low concentration (0.5% v/v) and each possible pairing. Test mixtures were made according to Tables 24 and 25.

**Table 24. Essential oil key.**

| Test ID | Essential oil |
|---------|---------------|
| E | Cinnamon oil |
| F | Clove oil |
| G | Garlic oil |
| H | Geraniol |
| I | Peppermint oil |
| J | Rosemary oil |
| K | Thyme oil |

**Table 25. Essential oil test mixtures.**

| Test | Volume (μL) | | | | | | | | | |
|------|------|--------|--------|--------|--------|--------|--------|--------|-------|-------|
| | Base | Test E | Test F | Test G | Test H | Test I | Test J | Test K | Water | Total |
| E-0.5% | 988.00 | 6.50 | - | - | - | - | - | - | 305.50 | 1300.00 |
| E-12% | 988.00 | 156.00 | - | - | - | - | - | - | 156.00 | 1300.00 |
| E-0.5%/F-0.5% | 988.00 | 6.50 | 6.50 | - | - | - | - | - | 299.00 | 1300.00 |
| E-0.5%/F-12% | 988.00 | 6.50 | 156.00 | - | - | - | - | - | 149.50 | 1300.00 |
| E-12%/F-0.5% | 988.00 | 156.00 | 6.50 | - | - | - | - | - | 149.50 | 1300.00 |
| E-12%/F-12% | 988.00 | 156.00 | 156.00 | - | - | - | - | - | 0.00 | 1300.00 |
| E-0.5%/G-0.5% | 988.00 | 6.50 | - | 6.50 | - | - | - | - | 299.00 | 1300.00 |
| E-0.5%/G-12% | 988.00 | 6.50 | - | 156.00 | - | - | - | - | 149.50 | 1300.00 |
| E-12%/G-0.5% | 988.00 | 156.00 | - | 6.50 | - | - | - | - | 149.50 | 1300.00 |
| E-12%/G-12% | 988.00 | 156.00 | - | 156.00 | - | - | - | - | 0.00 | 1300.00 |

(continued)

| Test | Base | Test E | Test F | Test G | Test H | Test I | Test J | Test K | Water | Total |
|------|------|--------|--------|--------|--------|--------|--------|--------|-------|-------|
| | | | | Volume (µL) | | | | | | |
| E-0.5%/H-0.5% | 988.00 | 6.50 | - | - | 6.50 | - | - | - | 299.00 | 1300.00 |
| E-0.5%/H-12% | 988.00 | 6.50 | - | - | 156.00 | - | - | - | 149.50 | 1300.00 |
| E-12%/H-0.5% | 988.00 | 156.00 | - | - | 6.50 | - | - | - | 149.50 | 1300.00 |
| E-12%/H-12% | 988.00 | 156.00 | - | - | 156.00 | - | - | - | 0.00 | 1300.00 |
| E-0.5%/I-0.5% | 988.00 | 6.50 | - | - | - | 6.50 | - | - | 299.00 | 1300.00 |
| E-0.5%/I-12% | 988.00 | 6.50 | - | - | - | 156.00 | - | - | 149.50 | 1300.00 |
| E-12%/I-0.5% | 988.00 | 156.00 | - | - | - | 6.50 | - | - | 149.50 | 1300.00 |
| E-12%/I-12% | 988.00 | 156.00 | - | - | - | 156.00 | - | - | 0.00 | 1300.00 |
| E-0.5%/J-0.5% | 988.00 | 6.50 | - | - | - | - | 6.50 | - | 299.00 | 1300.00 |
| E-0.5%/J-12% | 988.00 | 6.50 | - | - | - | - | 156.00 | - | 149.50 | 1300.00 |
| E-12%/J-0.5% | 988.00 | 156.00 | - | - | - | - | 6.50 | - | 149.50 | 1300.00 |
| E-12%/J-12% | 988.00 | 156.00 | - | - | - | - | 156.00 | - | 0.00 | 1300.00 |
| E-0.5%/K-0.5% | 988.00 | 6.50 | - | - | - | - | - | 6.50 | 299.00 | 1300.00 |
| E-0.5%/K-12% | 988.00 | 6.50 | - | - | - | - | - | 156.00 | 149.50 | 1300.00 |
| E-12%/K-0.5% | 988.00 | 156.00 | - | - | - | - | - | 6.50 | 149.50 | 1300.00 |
| E-12%/K-12% | 988.00 | 156.00 | - | - | - | - | - | 156.00 | 0.00 | 1300.00 |
| F-0.5% | 988.00 | - | 6.50 | - | - | - | - | - | 305.50 | 1300.00 |
| F-12% | 988.00 | - | 156.00 | - | - | - | - | - | 156.00 | 1300.00 |
| F-0.5%/G-0.5% | 988.00 | - | 6.50 | 6.50 | - | - | - | - | 299.00 | 1300.00 |
| F-0.5%/G-12% | 988.00 | - | 6.50 | 156.00 | - | - | - | - | 149.50 | 1300.00 |
| F-12%/G-0.5% | 988.00 | - | 156.00 | 6.50 | - | - | - | - | 149.50 | 1300.00 |
| F-12%/G-12% | 988.00 | - | 156.00 | 156.00 | - | - | - | - | 0.00 | 1300.00 |
| F-0.5%/H-0.5% | 988.00 | - | 6.50 | - | 6.50 | - | - | - | 299.00 | 1300.00 |
| F-0.5%/H-12% | 988.00 | - | 6.50 | - | 156.00 | - | - | - | 149.50 | 1300.00 |
| F-12%/H-0.5% | 988.00 | - | 156.00 | - | 6.50 | - | - | - | 149.50 | 1300.00 |
| F-12%/H-12% | 988.00 | - | 156.00 | - | 156.00 | - | - | - | 0.00 | 1300.00 |
| F-0.5%/I-0.5% | 988.00 | - | 6.50 | - | - | 6.50 | - | - | 299.00 | 1300.00 |
| F-0.5%/I-12% | 988.00 | - | 6.50 | - | - | 156.00 | - | - | 149.50 | 1300.00 |
| F-12%/I-0.5% | 988.00 | - | 156.00 | - | - | 6.50 | - | - | 149.50 | 1300.00 |
| F-12%/I-12% | 988.00 | - | 156.00 | - | - | 156.00 | - | - | 0.00 | 1300.00 |
| F-0.5%/J-0.5% | 988.00 | - | 6.50 | - | - | - | 6.50 | - | 299.00 | 1300.00 |
| F-0.5%/J-12% | 988.00 | - | 6.50 | - | - | - | 156.00 | - | 149.50 | 1300.00 |
| F-12%/J-0.5% | 988.00 | - | 156.00 | - | - | - | 6.50 | - | 149.50 | 1300.00 |
| F-12%/J-12% | 988.00 | - | 156.00 | - | - | - | 156.00 | - | 0.00 | 1300.00 |
| F-0.5%/K-0.5% | 988.00 | - | 6.50 | - | - | - | - | 6.50 | 299.00 | 1300.00 |
| F-0.5%/K-12% | 988.00 | - | 6.50 | - | - | - | - | 156.00 | 149.50 | 1300.00 |
| F-12%/K-0.5% | 988.00 | - | 156.00 | - | - | - | - | 6.50 | 149.50 | 1300.00 |
| F-12%/K-12% | 988.00 | - | 156.00 | - | - | - | - | 156.00 | 0.00 | 1300.00 |

(continued)

| Test | Base | Test E | Test F | Test G | Test H | Test I | Test J | Test K | Water | Total |
|---|---|---|---|---|---|---|---|---|---|---|
| | | | | | Volume (μL) | | | | | |
| G-0.5% | 988.00 | - | - | 6.50 | - | - | - | - | 305.50 | 1300.00 |
| G-12% | 988.00 | - | - | 156.00 | - | - | - | - | 156.00 | 1300.00 |
| G-0.5%/H-0.5% | 988.00 | - | - | 6.50 | 6.50 | - | - | - | 299.00 | 1300.00 |
| G-0.5%/H-12% | 988.00 | - | - | 6.50 | 156.00 | - | - | - | 149.50 | 1300.00 |
| G-12%/H-0.5% | 988.00 | - | - | 156.00 | 6.50 | - | - | - | 149.50 | 1300.00 |
| G-12%/H-12% | 988.00 | - | - | 156.00 | 156.00 | - | - | - | 0.00 | 1300.00 |
| G-0.5%/I-0.5% | 988.00 | - | - | 6.50 | - | 6.50 | - | - | 299.00 | 1300.00 |
| G-0.5%/I-12% | 988.00 | - | - | 6.50 | - | 156.00 | - | - | 149.50 | 1300.00 |
| G-12%/I-0.5% | 988.00 | - | - | 156.00 | - | 6.50 | - | - | 149.50 | 1300.00 |
| G-12%/I-12% | 988.00 | - | - | 156.00 | - | 156.00 | - | - | 0.00 | 1300.00 |
| G-0.5%/J-0.5% | 988.00 | - | - | 6.50 | - | - | 6.50 | - | 299.00 | 1300.00 |
| G-0.5%/J-12% | 988.00 | - | - | 6.50 | - | - | 156.00 | - | 149.50 | 1300.00 |
| G-12%/J-0.5% | 988.00 | - | - | 156.00 | - | - | 6.50 | - | 149.50 | 1300.00 |
| G-12%/J-12% | 988.00 | - | - | 156.00 | - | - | 156.00 | - | 0.00 | 1300.00 |
| G-0.5%/K-0.5% | 988.00 | - | - | 6.50 | - | - | - | 6.50 | 299.00 | 1300.00 |
| G-0.5%/K-12% | 988.00 | - | - | 6.50 | - | - | - | 156.00 | 149.50 | 1300.00 |
| G-12%/K-0.5% | 988.00 | - | - | 156.00 | - | - | - | 6.50 | 149.50 | 1300.00 |
| G-12%/K-12% | 988.00 | - | - | 156.00 | - | - | - | 156.00 | 0.00 | 1300.00 |
| H-0.5% | 988.00 | - | - | - | 6.50 | - | - | - | 305.50 | 1300.00 |
| H-12% | 988.00 | - | - | - | 156.00 | - | - | - | 156.00 | 1300.00 |
| H-0.5%/I-0.5% | 988.00 | - | - | - | 6.50 | 6.50 | - | - | 299.00 | 1300.00 |
| H-0.5%/I-12% | 988.00 | - | - | - | 6.50 | 156.00 | - | - | 149.50 | 1300.00 |
| H-12%/I-0.5% | 988.00 | - | - | - | 156.00 | 6.50 | - | - | 149.50 | 1300.00 |
| H-12%/I-12% | 988.00 | - | - | - | 156.00 | 156.00 | - | - | 0.00 | 1300.00 |
| H-0.5%/J-0.5% | 988.00 | - | - | - | 6.50 | - | 6.50 | - | 299.00 | 1300.00 |
| H-0.5%/J-12% | 988.00 | - | - | - | 6.50 | - | 156.00 | - | 149.50 | 1300.00 |
| H-12%/J-0.5% | 988.00 | - | - | - | 156.00 | - | 6.50 | - | 149.50 | 1300.00 |
| H-12%/J-12% | 988.00 | - | - | - | 156.00 | - | 156.00 | - | 0.00 | 1300.00 |
| H-0.5%/K-0.5% | 988.00 | - | - | - | 6.50 | - | - | 6.50 | 299.00 | 1300.00 |
| H-0.5%/K-12% | 988.00 | - | - | - | 6.50 | - | - | 156.00 | 149.50 | 1300.00 |
| H-12%/K-0.5% | 988.00 | - | - | - | 156.00 | - | - | 6.50 | 149.50 | 1300.00 |
| H-12%/K-12% | 988.00 | - | - | - | 156.00 | - | - | 156.00 | 0.00 | 1300.00 |
| I-0.5% | 988.00 | - | - | - | - | 6.50 | - | - | 305.50 | 1300.00 |
| I-12% | 988.00 | - | - | - | - | 156.00 | - | - | 156.00 | 1300.00 |
| I-0.5%/J-0.5% | 988.00 | - | - | - | - | 6.50 | 6.50 | - | 299.00 | 1300.00 |
| I-0.5%/J-12% | 988.00 | - | - | - | - | 6.50 | 156.00 | - | 149.50 | 1300.00 |
| I-12%/J-0.5% | 988.00 | - | - | - | - | 156.00 | 6.50 | - | 149.50 | 1300.00 |
| I-12%/J-12% | 988.00 | - | - | - | - | 156.00 | 156.00 | - | 0.00 | 1300.00 |

(continued)

| Test | Base | Test E | Test F | Test G | Test H | Test I | Test J | Test K | Water | Total |
|---|---|---|---|---|---|---|---|---|---|---|
| | | | | | Volume (μL) | | | | | |
| I-0.5%/K-0.5% | 988.00 | - | - | - | - | 6.50 | - | 6.50 | 299.00 | 1300.00 |
| I-0.5%/K-12% | 988.00 | - | - | - | - | 6.50 | - | 156.00 | 149.50 | 1300.00 |
| I-12%/K-0.5% | 988.00 | - | - | - | - | 156.00 | - | 6.50 | 149.50 | 1300.00 |
| I-12%/K-12% | 988.00 | - | - | - | - | 156.00 | - | 156.00 | 0.00 | 1300.00 |
| J-0.5% | 988.00 | - | - | - | - | - | 6.50 | - | 305.50 | 1300.00 |
| J-12% | 988.00 | - | - | - | - | - | 156.00 | - | 156.00 | 1300.00 |
| J-0.5%/K-0.5% | 988.00 | - | - | - | - | - | 6.50 | 6.50 | 299.00 | 1300.00 |
| J-0.5%/K-12% | 988.00 | - | - | - | - | - | 6.50 | 156.00 | 149.50 | 1300.00 |
| J-12%/K-0.5% | 988.00 | - | - | - | - | - | 156.00 | 6.50 | 149.50 | 1300.00 |
| J-12%/K-12% | 988.00 | - | - | - | - | - | 156.00 | 156.00 | 0.00 | 1300.00 |
| K-0.5% | 988.00 | - | - | - | - | - | - | 6.50 | 305.50 | 1300.00 |
| K-12% | 988.00 | - | - | - | - | - | - | 156.00 | 156.00 | 1300.00 |

Inhibition assay.

Once all test mixtures were made, 5 mL of each test mixture was added to two separate 15 mL sterile test tubes. A positive control of 5 mL of D/E Neutralizing Broth was also prepared. Each tube, including the positive control, was then inoculated with 100 μL of the test organism, either ≥$10^6$ CFU/0.1mL of *P. aeruginosa* or ≥$10^5$ CFU/0.1mL of C. *albicans.* After a contact time of 6 hours, samples were neutralized by transferring 1 mL of solution to 9 mL of fresh D/E Broth and waiting 10 minutes. The neutralized solution was then serial diluted and 100 μL spread on the appropriate plate media with two plates were dilution. CFU counts were taken after 5-7 days for SDA plates and 3-5 days for TSA-80 plates.

Log reduction and comparison analysis.

The log reduction for each test mixture was calculated by taking the log base 10 of the ratio of CFU/mL positive control over CFU/mL experimental:

$$\log \text{reduction} = \log_{10} \frac{CFU}{mL} positive\ control \Big/ \frac{CFU}{mL} experimental\ sample$$

To determine if there was a synergistic advantage of an essential oil pairing, the log reduction of the paired solutions was divided by the log reduction of each pure essential oil. If the result is >1.0, the pairing was considered to have a synergistic advantage. If the result was ≤1.0, there was no synergistic advantage. In a pairing, both oils had to show a synergistic advantage to be considered synergistic.

For example, analyzing the rosemary and peppermint pair with *P. aeruginosa,* on pure rosemary, the maximum log reduction was 7.9, on pure peppermint the log reduction was 6.6, and the maximum log reduction on the four pairings was 7.7. The synergistic advantage of rosemary is 98.4% and for peppermint is 117.7%. This pairing would not be considered synergistic since both oils did not show a synergistic advantage. By comparison, peppermint and cinnamon with *P. aeruginosa* did show a synergistic advantage. On pure peppermint, the log reduction was 6.6, on pure cinnamon was 6.0, and on the pairings was 7.3. The synergistic advantage is then 111.5% and 121.2% with respect to peppermint and cinnamon. Since both oils displayed a synergistic advantage, this pairing was synergistic.

*Results and Conclusions*

Essential oil pairings that displayed synergist advantages in *P. aeruginosa* are shown in Table 26 and those for C. *albicans* are shown in Table 27.

**Table 26. Synergistic essential oil pairings for *P. aeruginosa*.**

| Essential oil pairing | Synergistic advantage | p-value |
|---|---|---|
| Thyme | 108.4% | 0.0126 |
| Peppermint | 117.7% | 0.0081 |
| Clove | 103.5% | 0.0034 |
| Garlic | 105.6% | 0.0042 |
| Clove | 103.5% | 0.0034 |
| Geraniol | 106.3% | 0.0001 |
| Peppermint | 111.5% | 0.0035 |
| Cinnamon | 121.2% | 0.0025 |

**Table 27. Synergistic essential oil pairings for *C. albicans*.**

| Essential oil pairing | Synergistic advantage | p-value |
|---|---|---|
| Cinnamon | 110.3% | 0.0046 |
| Peppermint | 121.9% | 0.0030 |
| Geraniol | 103.9% | 0.0210 |
| Peppermint | 103.9% | 0.0314 |
| Geraniol | 103.9% | 0.0210 |
| Rosemary | 105.3% | 0.0282 |
| Geraniol | 103.9% | 0.0210 |
| Thyme | 120.7% | 0.0021 |
| Geraniol | 120.9% | 0.0047 |
| Garlic | 140.5% | 0.0042 |
| Peppermint | 120.2% | 0.0048 |
| Garlic | 140.5% | 0.0042 |
| Rosemary | 122.5% | 0.0047 |
| Garlic | 140.5% | 0.0042 |
| Thyme | 116.2% | 0.0064 |
| Garlic | 116.2% | 0.0064 |

The following numbered paragraphs describe particular aspects of the present disclosure.

1. An insect, bacteria, and/or fungi control composition comprising:

(a) about 0.05% to about 20% by weight castor oil;
(b) about 0.05% to about 20% by weight of a first oil selected from the group consisting of rosemary oil, thyme oil, clove oil, garlic oil, geraniol, peppermint oil, and cinnamon oil;
(c) about 0.05% to about 20% by weight of a second oil selected from the group consisting of rosemary oil, thyme oil, clove oil, garlic oil, geraniol, peppermint oil, and cinnamon oil, wherein in the first oil is different from the second oil;
(d) balance water about 20% to about 80% by weight.

2. The insect, bacteria, and/or fungi control composition of paragraph 1, further comprising about 0.05% to about 7% by weight potassium sorbate, sodium sorbate, or a combination thereof.

3. The insect, bacteria, and/or fungi control composition of paragraphs 1 or 2, further comprising about 0.05% to about 35% by weight soaps.

4. The insect, bacteria, and/or fungi control composition of paragraph 3, wherein the soap is an organic soap.

5. The insect, bacteria, and/or fungi control composition of paragraph 3, wherein the soap is a regular soap.

6. The insect, bacteria, and/or fungi control composition of any one of paragraphs 1-5, further comprising about 0.05% to about 35% by weight glyceryl monostearate.

7. The insect, bacteria, and/or fungi control composition of any one of paragraphs 1-6, further comprising about 0.05% to about 15% by weight cedarwood oil.

8. The insect, bacteria, and/or fungi control composition of any one of paragraphs 1-7, further comprising about 0.05% to about 35% hydrogenated castor oil.

9. The insect, bacteria, and/or fungi control composition of any one of paragraphs 1-8, further comprising about 1.0% to about 16% by weight cinnamaldehyde.

10. The insect, bacteria, and/or fungi control composition of any one of paragraphs 1-9, further comprising about 1.0% to about 16% by weight eugenol.

11. The insect, bacteria, and/or fungi control composition of any one of paragraphs 1-10, further comprising about 1.0% to about 16% by weight allicin.

12. The insect, bacteria, and/or fungi control composition of any one of paragraphs 1-11, further comprising about 1.0% to about 16% by weight thyme oil.

13. The insect, bacteria, and/or fungi control composition of any one of paragraphs 1-12, wherein the mint oil comprises peppermint oil, linalool, or a combination thereof.

14. The insect, bacteria, and/or fungi control composition of any one of paragraphs 1-13, further comprising about 0.05% to about 29% silica.

15. The insect, bacteria, and/or fungi control composition of any one of paragraphs 1-14, wherein the first oil is rosemary oil and the second oil is peppermint oil.

16. The insect, bacteria, and/or fungi control composition of any one of paragraphs 1-14, wherein the first oil is rosemary oil and the second oil is cinnamon oil.

17. The insect, bacteria, and/or fungi control composition of any one of paragraphs 1-14, wherein the first oil is thyme oil and the second oil is peppermint oil.

18. The insect, bacteria, and/or fungi control composition of any one of paragraphs 1-14, wherein the first oil is thyme oil and the second oil is cinnamon oil.

19. The insect, bacteria, and/or fungi control composition of any one of paragraphs 1-14, wherein the first oil is clove oil and the second oil is garlic oil.

20. The insect, bacteria, and/or fungi control composition of any one of paragraphs 1-14, wherein the first oil is clove oil and the second oil is geraniol.

21. The insect, bacteria, and/or fungi control composition of any one of paragraphs 1-14, wherein the first oil is geraniol and the second oil is cinnamon oil.

22. The insect, bacteria, and/or fungi control composition of any one of paragraphs 1-14, wherein the first oil is peppermint oil and the second oil is cinnamon oil.

23. The insect, bacteria, and/or fungi control composition of any one of paragraphs 1-14, wherein the first oil is cinnamon oil and the second oil is garlic oil.

24. The insect, bacteria, and/or fungi control composition of any one of paragraphs 1-14, wherein the first oil is geraniol and the second oil is peppermint oil.

25. The insect, bacteria, and/or fungi control composition of any one of paragraphs 1-14, wherein the first oil is geraniol and the second oil is rosemary oil.

26. The insect, bacteria, and/or fungi control composition of any one of paragraphs 1-14, wherein the first oil is geraniol and the second oil is thyme oil.

27. The insect, bacteria, and/or fungi control composition of any one of paragraphs 1-14, wherein the first oil is geraniol and the second oil is garlic oil.

28. The insect, bacteria, and/or fungi control composition of any one of paragraphs 1-14, wherein the first oil is clove oil and the second oil is peppermint oil.

29. The insect, bacteria, and/or fungi control composition of any one of paragraphs 1-14, wherein the first oil is clove oil and the second oil is rosemary oil.

30. The insect, bacteria, and/or fungi control composition of any one of paragraphs 1-14, wherein the first oil is clove oil and the second oil is thyme oil.

31. The insect, bacteria, and/or fungi control composition of any one of paragraphs 1-14, wherein the first oil is rosemary oil and the second oil is peppermint oil.

32. The insect, bacteria, and/or fungi control composition of any one of paragraphs 1-14, wherein the first oil is rosemary oil and the second oil is thyme oil.

33. The insect, bacteria, and/or fungi control composition of any one of paragraphs 1-14, wherein the first oil is thyme oil and the second oil is garlic oil.

34. The insect, bacteria, and/or fungi control composition of any one of paragraphs 1-14 comprising:

about 0.05% to about 15% by weight geraniol;
about 0.05% to about 20% by weight castor oil;
about 0.05% to about 20% by weight rosemary oil, mint oil, or a combination thereof;
balance water about 20% to about 80% by weight.

35. A method of killing insects, bacteria, and/or fungi in a treatment area comprising:

applying the insect, bacteria, and/or fungi control composition of any one of paragraphs 1-34 to the treatment area in an amount effective to kill insects, bacteria, and/or fungi in the treatment area.

36. The method of paragraph 35, wherein the insect, bacteria, and/or fungi control composition is applied in an amount effective to kill at least 80% of insects, bacteria, and/or fungi in the treatment area one hour after applying the insect, bacteria, and/or fungi control composition to the treatment area.

37. A method of preventing insect reproduction in a treatment area comprising:

applying the insect, bacteria, and/or fungi control composition of any one of paragraphs 1-34 to the treatment area in an amount effective to at least one of (a) disrupt an insect egg cycle and/or inhibit ovo deposit by adult female insects and (b) kill an insect larva in the treated area.

38. The method of paragraph 37, wherein the treatment area comprises a residential landscape, a commercial landscape, or an area that comprises a water feature, a lake, or a stream.

39. The method of paragraph 37, wherein the insect, bacteria, and/or fungi control composition is applied directly to the insect, bacteria, and/or fungi.

40. A method of controlling insects, bacteria, and/or fungi on a surface comprising

applying the insect, bacteria, and/or fungi control composition of any one of paragraphs 1-34 to a surface in an amount effective to control insects, bacteria, and/or fungi on the surface.

41. The method of paragraph 40, wherein the insect, bacteria, and/or fungi control composition is applied in an amount effective to control at least 85% of insects, bacteria, and/or fungi on the surface one hour after applying the insect, bacteria, and/or fungi control composition to the surface.

42. The method of paragraph 40 or 41, wherein the surface is selected from the group consisting of a soil surface, a plant surface, and an exterior building surface.

43. The method of any one of paragraphs 35-42, further comprising diluting about 0.5 ounces, about 1 ounce, about 1.5 ounces, about 2 ounces, about 2.5 ounces, about 3 ounces, about 3.5 ounces, about 4 ounces, about 4.5 ounces, about 5 ounces, about 5.5 ounces, about 6 ounces, about 6.5 ounces, about 7 ounces, about 7.5 ounces, about 8 ounces, about 8.5 ounces, about 9 ounces, about 9.5 ounces, about 10 ounces, about 10.5 ounces, about 11 ounces, about 11.5 ounces, about 12 ounces, about 12.5 ounces, about 13 ounces, about 13.5 ounces, about 14 ounces, about 14.5 ounces, about 15 ounces, about 15.5 ounces, about 16 ounces, about 16.5 ounces, about 17 ounces, about 17.5 ounces, about 18 ounces, about 18.5 ounces, about 19 ounces, about 19.5 ounces, or about 20 ounces of an insect, bacteria, and/or fungi control composition concentrate with water to make a gallon of the insect, bacteria, and/or fungi control composition.

44. The method of any one of paragraphs 35-43, wherein applying the insect, bacteria, and/or fungi control composition comprises spraying.

45. The method of any one of paragraphs 35-44, wherein the insect is a scale, aphid, slug, snail, grasshopper, cricket, moth, worm, beetle, spider, ant, mite, looper, fly, thrip, spotted lantern fly, borer, psyllid, mealy bug, stink bug, tarnished plant bug, chinch, armyworm, mosquito, cockroach, centipede, gnat, silverfish, or tick.

46. The method of any one of paragraphs 35-44, wherein the bacteria is *E. coli, a Erwinia, a Pseudomonas,* a *Xanthamonas,* or *Candidatus* Liberibacter.

47. The method of any one of paragraphs 35-44, wherein the fungi is a *Candida.*

48. An insect, bacteria, and/or fungi control composition comprising a synergistically effective amount of rosemary oil, lemongrass oil, and geraniol.

49. An insect, bacteria, and/or fungi control composition comprising:

(a) about 0.05% to about 20% by weight of a carrier oil;
(b) about 0.05% to about 20% by weight of a first essential oil;
(c) about 0.05% to about 20% by weight of a second essential oil different from the first essential oil;
(d) balance water about 20% to about 80% by weight.

50. The insect, bacteria, and/or fungi control composition of paragraph 49, wherein the carrier oil is an active carrier oil.

51. The insect, bacteria, and/or fungi control composition of paragraph 50, wherein the active carrier oil is castor oil.

52. The insect, bacteria, and/or fungi control composition of any one of paragraphs 49-51, wherein the first essential oil is peppermint oil, and the second essential oil is selected from the group consisting of thyme oil, cinnamon oil, geraniol, and garlic oil.

53. The insect, bacteria, and/or fungi control composition of any one of paragraphs 49-51, wherein the first essential oil is clove oil, and the second essential oil is selected from the group consisting of garlic oil and geraniol.

54. The insect, bacteria, and/or fungi control composition of any one of paragraphs 49-51, wherein the first essential oil is geraniol, and the second essential oil is selected from the group consisting of rosemary oil, thyme oil, and garlic oil.

55. The insect, bacteria, and/or fungi control composition of any one of paragraphs 49-51, wherein the first essential oil is thyme oil, and the second essential oil is garlic oil.

**Claims**

1. An insect, bacteria, and/or fungi control composition comprising:

   (a) a carrier oil;
   (b) about 0.05% to about 20% by weight of cinnamon oil;
   (c) about 0.05% to about 20% by weight of clove oil;
   (d) balance water.

2. The insect, bacteria, and/or fungi control composition of claim 1, wherein the composition further comprises about 0.05% to about 20 % of an oil selected from the group consisting of peppermint oil, rosemary oil, lemongrass oil, citronella oil, mint oil, thyme oil or garlic oil.

3. The insect, bacteria, and/or fungi control composition of claim 2, wherein the composition comprises about 0.05% to about 20 % of peppermint oil.

4. The insect, bacteria, and/or fungi control composition of any one of claims 1-3, further comprising about 0.05% to about 35% by weight soaps.

5. The insect, bacteria, and/or fungi control composition of claim 4, wherein the soap is an organic soap or a regular soap.

6. The insect, bacteria, and/or fungi control composition of any one of claims 1-5, wherein the carrier oil comprises castor oil, optionally wherein the composition comprises about 0.05 to about 20% by weight castor oil.

7. The insect, bacteria, and/or fungi control composition of any one of claims 1-6, further comprising about 0.05% to about 35% hydrogenated castor oil.

8. The insect, bacteria, and/or fungi control composition of any one of claims 1-7, wherein the composition includes about 20% to about 80% by weight water.

9. The insect, bacteria, and/or fungi control composition of any one of claims 1-8,
   further comprising:

   (a) about 0.05% to about 7% by weight potassium sorbate, sodium sorbate, or a combination thereof;
   (b) about 0.05% to about 35% by weight glyceryl monostearate;
   (c) about 0.05% to about 15% by weight cedarwood oil;
   (d) about 1.0% to about 16% by weight cinnamaldehyde;
   (e) about 1.0% to about 16% by weight eugenol;
   (f) about 1.0% to about 16% by weight allicin;
   (g) about 1.0% to about 16% by weight thyme oil; and/or
   (h) about 0.05% to about 29% silica.

10. A method of killing insects, bacteria, and/or fungi in a treatment area comprising:
    applying the insect, bacteria, and/or fungi control composition of any one of claims 1-9 to the treatment area in an amount effective to kill insects, bacteria, and/or fungi in the treatment area.

11. The method of claim 10, wherein the insect, bacteria, and/or fungi control composition is applied in an amount effective to kill at least 80% of insects, bacteria, and/or fungi in the treatment area one hour after applying the insect, bacteria, and/or fungi control composition to the treatment area.

12. A method of preventing insect reproduction in a treatment area comprising:
    applying the insect, bacteria, and/or fungi control composition of any one of claims 1-9 to the treatment area in an amount effective to at least one of (a) disrupt an insect egg cycle and/or inhibit ovo deposit by adult female insects and (b) kill an insect larva in the treated area.

13. A method of controlling insects, bacteria, and/or fungi on a surface comprising applying the insect, bacteria, and/or fungi control composition of any one of claims 1-9 to a surface in an amount effective to control insects, bacteria, and/or fungi on the surface.

14. The method of claim 13, wherein the insect, bacteria, and/or fungi control composition is applied in an amount effective to control at least 85% of insects, bacteria, and/or fungi on the surface one hour after applying the insect, bacteria, and/or fungi control composition to the surface.

15. The method of any one of claims 10-14, further comprising diluting about 0.5 ounces, about 1 ounce, about 1.5 ounces, about 2 ounces, about 2.5 ounces, about 3 ounces, about 3.5 ounces, about 4 ounces, about 4.5 ounces, about 5 ounces, about 5.5 ounces, about 6 ounces, about 6.5 ounces, about 7 ounces, about 7.5 ounces, about 8 ounces, about 8.5 ounces, about 9 ounces, about 9.5 ounces, about 10 ounces, about 10.5 ounces, about 11 ounces, about 11.5 ounces, about 12 ounces, about 12.5 ounces, about 13 ounces, about 13.5 ounces, about 14 ounces, about 14.5 ounces, about 15 ounces, about 15.5 ounces, about 16 ounces, about 16.5 ounces, about 17 ounces, about 17.5 ounces, about 18 ounces, about 18.5 ounces, about 19 ounces, about 19.5 ounces, or about 20 ounces of an insect, bacteria, and/or fungi control composition concentrate with water to make a gallon of the insect, bacteria, and/or fungi control composition.

# Fig. 1

Inhibition of E. coli testing individual ingredients

# Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. O. OYEDELEA** ; **A. A. GBOLADEB** ; **M. B. SOSANC** ; **F. B. ADEWOYIND** ; **O. L. SOYELUC** ; **O. O. ORAFIDIYA**. Formulation of an effective mosquito-repellent topical product from Lemongrass oil. *PHYTOMEDICINE*, 2002, vol. 9 (3), 259-262

- **MANN et al.** *J. Appl. Entomol.*, 2012, vol. 136, 87-96
- **SEHAM et al.** *J. Entomol. Zool. Stud.*, 2021, vol. 8, 2053-58